# EUROPEAN PATENT APPLICATION

(11) **EP 4 814 574 A1**
(43) Date of publication of application: **30.09.2026**
(21) Application number: 24894546.1
(22) Date of filing: 18.11.2024
(51) Int. Cl.: G03B 3/10, G03B 13/36, G03B 17/12, H04N 23/54, H04N 23/55

(54) **CAMERA DEVICE AND OPTICAL INSTRUMENT**

(30) Priority: 22.11.2023 KR 20230163614
(71) Applicant: LG Innotek Co., Ltd., Seoul 07796 (KR)
(72) Inventor: LEE, Sung Guk, Seoul 07796 (KR); YOO, Kyoung Ho, Seoul 07796 (KR)
(74) Representative: Plasseraud IP
(86) International application number: PCT/KR2024/018166
(87) International publication number: WO 2025/110653

(57) **Abstract**

The present invention of an embodiment comprises: a fixed unit; a sensor base; an image sensor disposed on the sensor base; a lens holder disposed on the image sensor and coupled to the sensor base; a moving unit including a lens coupled to the lens holder; a tilting guide unit disposed between the sensor base and the fixed unit; and a driving unit for tilting the moving unit with respect to a first axis that is perpendicular to an optical-axis direction, or a second axis that crosses the optical-axis direction and the first axis.

## Description

### [Technical Field]

Embodiments relate to a camera device and an optical instrument including the same.

### [Background Art]

Camera devices are devices that take pictures or videos of subjects, and are mounted in portable devices, drones, vehicles, and the like. In order to improve the quality of an image, a camera device may have an image stabilization (IS) function of correcting or preventing shaking of an image caused by movement of a user, e.g., an optical image stabilization (OIS) function, and an autofocus (AF) function.

### [Disclosure]

### [Technical Problem]

Embodiments provide a camera device and an optical instrument capable of implementing size reduction of the camera device, realization of high resolution images, and reduction of manufacturing cost.

### [Technical Solution]

A camera device according to an embodiment includes a fixed unit, a moving unit including a sensor base, an image sensor disposed on the sensor base, a lens holder disposed on the image sensor and coupled to the sensor base, and a lens coupled to the lens holder, a tilting guide unit disposed between the sensor base and the fixed unit, and a driving unit configured to tilt the moving unit about a first axis perpendicular to an optical-axis direction or a second axis intersecting the first axis.

The lens holder may be immovable relative to the sensor base in the optical-axis direction.

The sensor base may include at least one protrusion protruding from an upper surface thereof, and the lens holder may include a recess coupled to the protrusion of the sensor base. The camera device may include a filter coupled to the lens holder and disposed between the lens module and the image sensor.

The driving unit may include a magnet disposed on one of the fixed unit and the lens holder and a coil disposed on a remaining one of the fixed unit and the lens holder.

The magnet may include a first magnet unit and a second magnet unit, and the coil may include a first coil unit corresponding to the first magnet unit and a second coil unit corresponding to the second magnet unit.

The first coil unit may be opposite the first magnet unit in a first horizontal direction perpendicular to the optical-axis direction, and the second coil unit may be opposite the second magnet unit in a second horizontal direction perpendicular to the optical-axis direction and the first horizontal direction.

The first coil unit may be opposite the first magnet unit in the optical-axis direction, and the second coil unit may be opposite the second magnet unit in the optical-axis direction. The lens holder may include at least one recess depressed from an upper surface thereof, and the lens may include at least one boss disposed in the at least one recess in the lens holder. The at least one boss of the lens may not overlap the tilting guide unit in the optical-axis direction.

The camera device may include a circuit board which is disposed on the sensor base and on which the image sensor is disposed.

A camera device according to another embodiment includes a housing, a moving unit including a sensor base disposed in the housing, an image sensor disposed on the sensor base, a lens holder disposed on the image sensor and coupled to the sensor base, and a lens coupled to the lens holder, and a tilting guide disposed between the sensor base and the housing, wherein the lens holder is immovable relative to the image sensor in an optical-axis direction, and the moving unit is tilted about a first axis perpendicular to the optical-axis direction or a second axis intersecting the optical-axis direction and the first axis.

The sensor base may include a plurality of protrusions protruding from an upper surface of the sensor base, and the lens holder may include a plurality of recesses corresponding to the plurality of protrusions and coupled to the plurality of protrusions.

A camera device according to another embodiment includes a fixed unit, a moving unit including a sensor base, an image sensor disposed on the sensor base, and a lens disposed on the image sensor, and a tilting guide disposed between the sensor base and the fixed unit, wherein the lens is immovable relative to the image sensor in an optical-axis direction, and the moving unit is tilted about a first axis perpendicular to the optical-axis direction or a second axis intersecting the optical-axis direction and the first axis.

### [Advantageous Effects]

An embodiment is capable of reducing manufacturing cost since a configuration for autofocus is not included.

An embodiment is capable of reducing the length of the camera device in the optical-axis direction or in a direction perpendicular to the optical-axis direction.

In addition, an embodiment is capable of eliminating restrictions on the size of the lens module due to a space in which a configuration for autofocus is disposed.

Furthermore, an embodiment is capable of increasing the size of the lens module and the size of the image sensor corresponding to the lens module and of realizing high resolution images.

An embodiment is capable of reducing a space required to tilt a sensor base, which is an OIS moving unit, for hand-tremor compensation and reducing the size of a camera device.

In an embodiment, a support member coupled to a moving module may act as a magnetic material that generates repulsive force to support the OIS moving unit.

An embodiment is capable of reducing the number of parts and reducing the weight of the camera device.

Furthermore, in an embodiment, since a tilting guide unit is used to tilt the OIS moving unit, it is possible to stably, precisely, and accurately tilt the OIS moving unit, thereby enhancing the reliability of OIS operation, compared to an example using only a ball member or a shaft member.

### [Description of Drawings]

FIG. 1 is a perspective view of a camera device according to an embodiment.
FIG. 2A is a first exploded perspective view of the camera device of FIG. 1.
FIG. 2B is a second exploded perspective view of the camera device of FIG. 1.
FIG. 3 is a perspective view of the camera device excluding a cover member.
FIG. 4A is a sectional view of the camera device in direction AB of FIG. 3.
FIG. 4B is a sectional view of the camera device in direction CD of FIG. 3.
FIG. 4C is a sectional view of the camera device in direction EF of FIG. 3.
FIG. 4D is a sectional view of the camera device in direction GH of FIG. 3.
FIG. 4E is a sectional view of the camera device in direction IJ of FIG. 3.
FIG. 5 is a perspective view of a lens holder.
FIG. 6 is a exploded perspective view of the lens holder, a sensor base, and a housing.
FIG. 7A is a first exploded perspective view of the lens holder, a filter, a circuit board, the sensor base, a tilting guide unit, a support member, and a magnetic material.
FIG. 7B is a second exploded perspective view of the lens holder, the filter, the circuit board, the sensor base, the tilting guide unit, the support member, and the magnetic material of FIG. 7A.
FIG. 7C is a coupled perspective view of the sensor base and the circuit board.
FIG. 7D is a coupled perspective view of the sensor base, the support member, and the magnetic material.
FIG. 8 is a perspective view of the lens holder, the circuit board, and the sensor base.
FIG. 9A is a front perspective view of the tilting guide unit.
FIG. 9B is a rear perspective view of the tilting guide unit.
FIG. 9C is a front perspective view of a tilting guide unit and first ball members according to another embodiment.
FIG. 9D is a rear perspective view of the tilting guide unit of FIG. 9C and second ball members.
FIG. 10A is a exploded perspective view of the housing, magnets, a yoke, a magnetic material, and a movement inhibition portion.
FIG. 10B is a coupled perspective view of the housing, the magnets, the yoke, the magnetic material, and the movement inhibition portion.
FIG. 11A is a perspective view of the cover member, the lens holder, the sensor base, the circuit board, the magnetic material, the tilting guide unit, and a reinforcement member.
FIG. 11B shows a reinforcement member according to another embodiment.
FIG. 12 is a perspective view of the housing, the magnets, the magnetic material, the movement inhibition portion, and the tilting guide unit.
FIG. 13 is a perspective view of the housing, an extension portion of the sensor base, the support member, and the magnetic material.
FIG. 14A is a cutaway perspective view of the camera device.
FIG. 14B is an enlarged view of a dotted part in FIG. 14A.
FIG. 15 is a perspective view of the camera device including a shield member.
FIG. 16A shows electromagnetic force due to interaction between magnet units and coil units.
FIG. 16B shows the motion of an OIS moving unit due to the electromagnetic force of FIG. 16A.
FIG. 16C shows the disposition of magnet units according to a modification of FIG. 16A.
FIG. 16D shows electromagnetic force due to interaction between magnet units and coil units according to another embodiment.
FIG. 17A shows a first position of the OIS moving unit.
FIG. 17B shows a second position of the OIS moving unit.
FIG. 17C shows a third position of the OIS moving unit.
FIG. 18 shows another modification of FIG. 14A.
FIG. 19 shows arrangement of an OIS driving unit according to another embodiment.
FIG. 20 shows arrangement of an OIS driving unit according to another embodiment.
FIG. 21 shows arrangement of an OIS driving unit according to another embodiment.
FIG. 22A is a cross-sectional view of the camera device according to another embodiment in direction G-H of FIG. 4D.
FIG. 22B is a cross-sectional view of the camera device shown in FIG. 22A in direction I-J of FIG. 4E.
FIG. 23A is a perspective view of an optical instrument according to an embodiment.
FIG. 23B is a perspective view of an optical instrument according to another embodiment.
FIG. 24 is a block diagram of the optical instrument shown in FIGs. 23A and 23B.

### [Best Mode]

Reference will now be made in detail to embodiments, examples of which are illustrated in the accompanying drawings.

In the following description of the embodiments, it will be understood that, when each element is referred to as being "on" or "under" another element, it can be directly on or under the other element, or can be indirectly formed such that one or more intervening elements are also present. In addition, when an element is referred to as being "on or under," "under the element" as well as "on the element" may be included based on the element.

In addition, the relational terms "first," "second," "on/upper part/above," and "under/lower part/below" are used herein only to distinguish between one subject or element and another subject or element without necessarily requiring or involving any physical or logical relationship or sequence between such subjects or elements. Wherever possible, the same reference numerals will be used throughout the drawings to refer to the same parts.

Additionally, the terms "comprises," "includes," and "has" described herein should be interpreted not to exclude other elements but to further include such other elements, since the corresponding elements may be inherent unless mentioned otherwise. In addition, the term "corresponding to" described herein may encompass at least one of the meanings of "facing" and "overlapping."

Hereinafter, a camera device according to an embodiment and an optical instrument including the same will be described with reference to the accompanying drawings. For convenience of description, a camera device according to an embodiment will be described using the Cartesian coordinate system (x, y, z), to which embodiments are not limited, and may be described using other coordinate systems. In the respective drawings, the X-axis and the Y-axis may be axes perpendicular to the Z-axis, which is an optical-axis (OA) direction.

In addition, the Z-axis direction, which is the optical-axis (OA) direction, may be referred to as a "first direction," the X-axis direction may be referred to as a "second direction," and the Y-axis direction may be referred to as a "third direction."

In addition, the X-axis (or the Y-axis) may be referred to as a "first horizontal axis," the X-axis (or the Y-axis) direction may be referred to as a "first horizontal direction," the Y-axis (or the X-axis) may be referred to as a "second horizontal axis," and the Y-axis (or the X-axis) direction may be referred to as a "second horizontal direction." For example, the optical-axis direction may be a direction of the optical axis or a direction parallel to the optical axis. In addition, the first-axis direction may be a direction parallel to the first axis, and the second-axis direction may be a direction parallel to the second axis.

In addition, for example, the optical axis may be an optical axis of a lens mounted in a lens barrel. Alternatively, for example, the optical axis may be an axis perpendicular to an image-capturing area of the image sensor and passing through the center of the image-capturing area. Hereinafter, the term "terminal" may alternatively be referred to as a pad, an electrode, or a conductive layer.

Also, in embodiments, in coupling between a boss and a hole to couple two configurations to each other, one of the configurations may be a coupling boss (or a coupling hole) and the other configuration may be a coupling hole (or a coupling boss) corresponding thereto.

A camera device according to an embodiment may perform a hand-tremor compensation function and an autofocus function. The hand-tremor compensation function may be a function of moving a lens in a direction perpendicular to the optical-axial direction or tilting the lens with respect to the optical axis so as to cancel vibration (or motion) caused by shaking of the user's hand. In addition, the autofocus function may be a function of automatically focusing on a subject by moving a lens in the optical-axis direction according to the distance to the subject such that an image sensor obtains a clear image of the subject. Hereinafter, the "camera device" may alternatively be referred to as a "camera," an "actuator," a "camera module," an "image-capturing device," or a "photographing device."

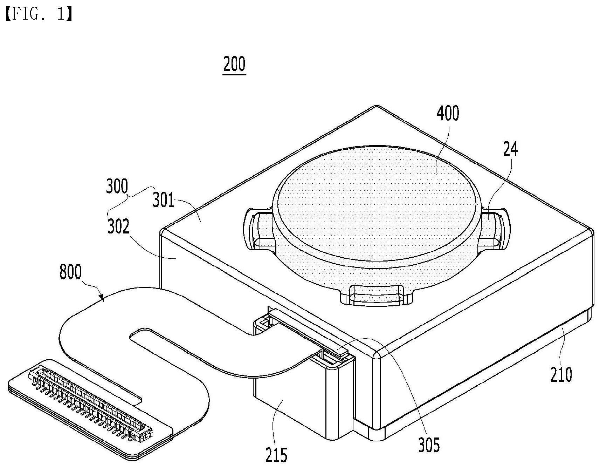

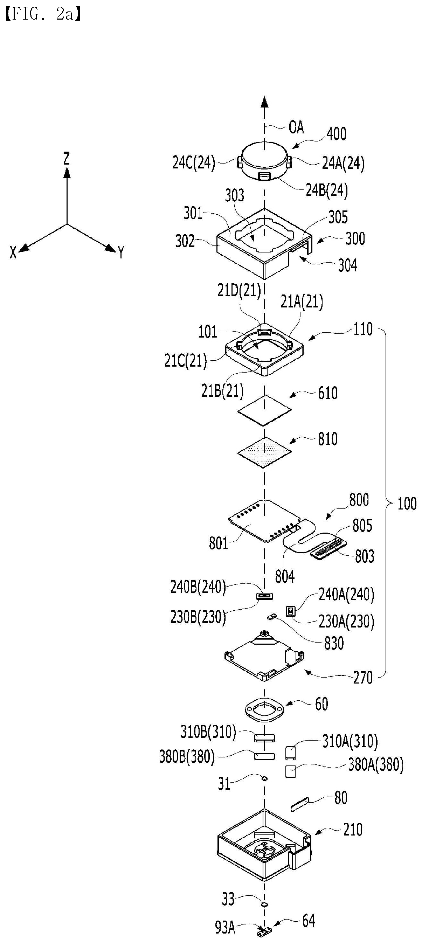

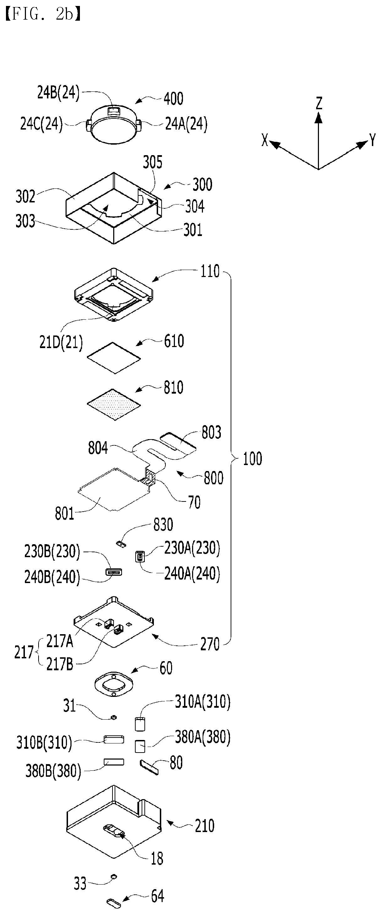

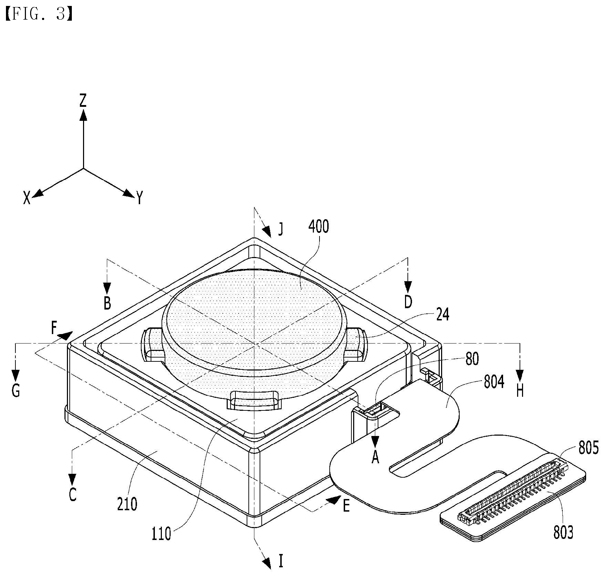

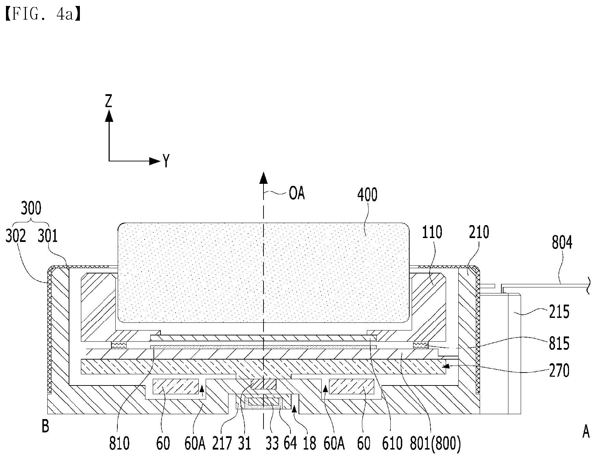

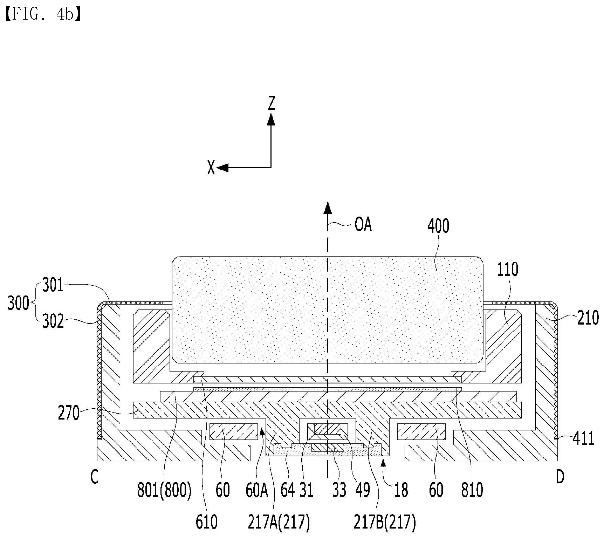

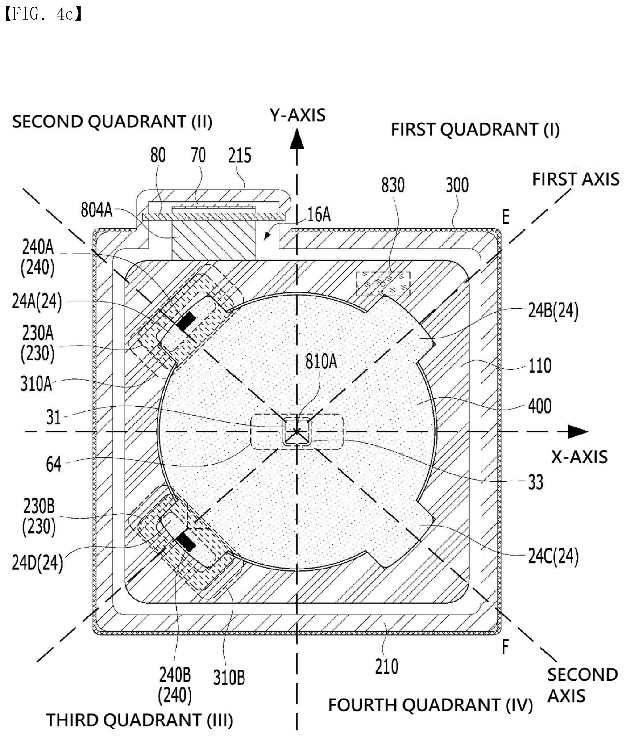

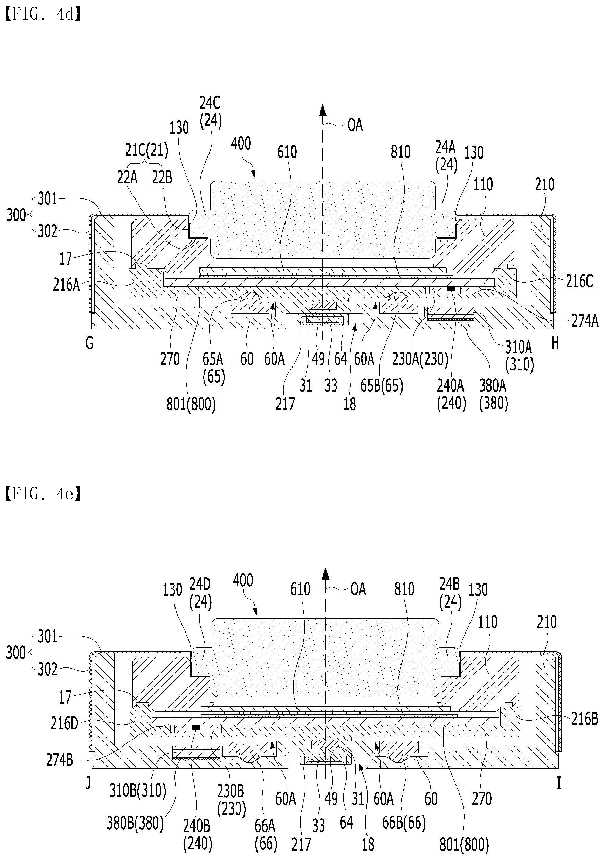

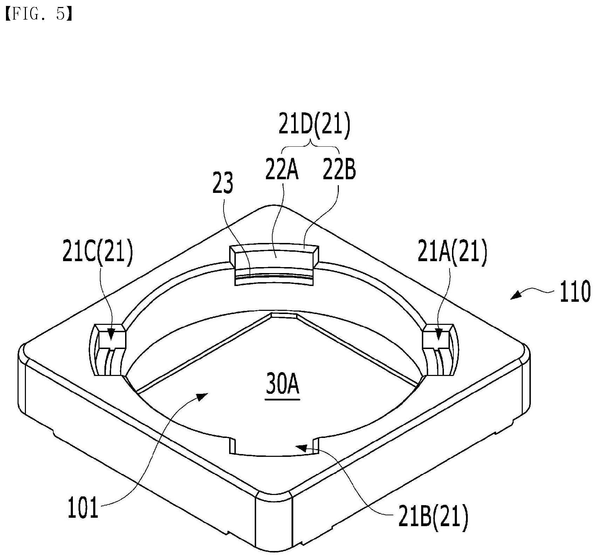

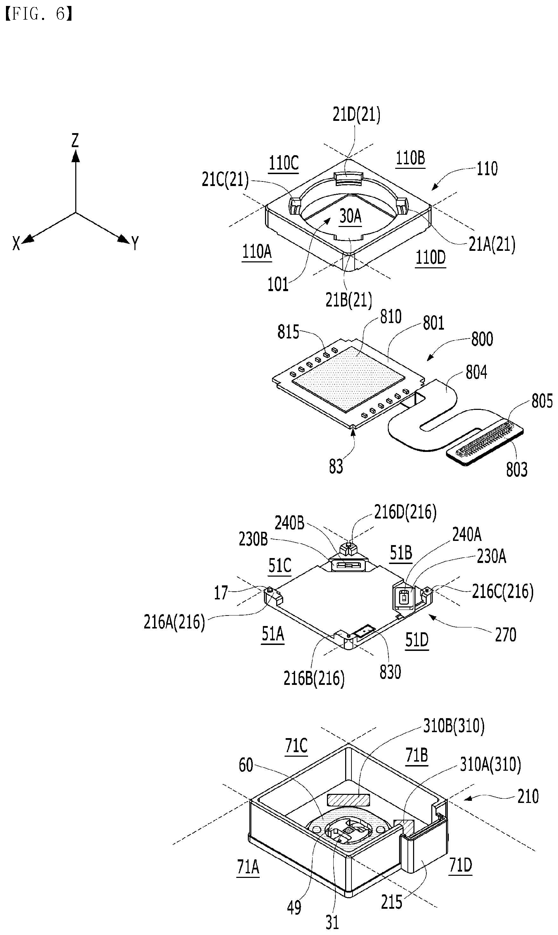

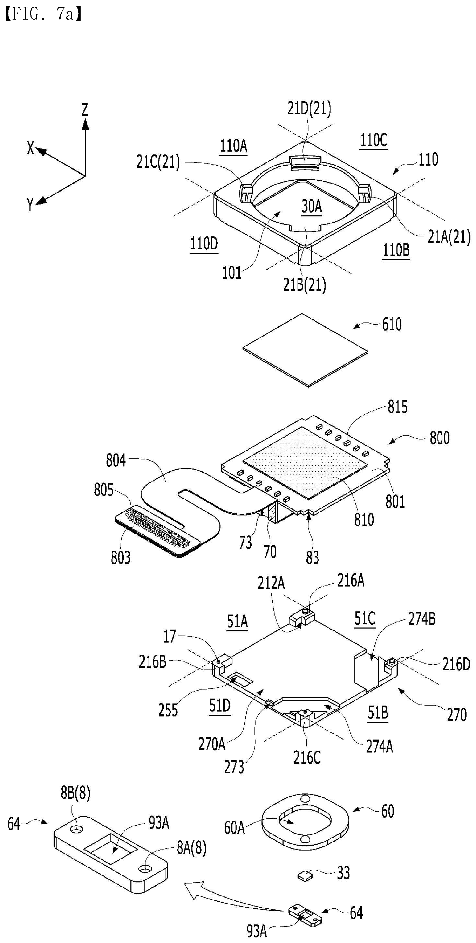

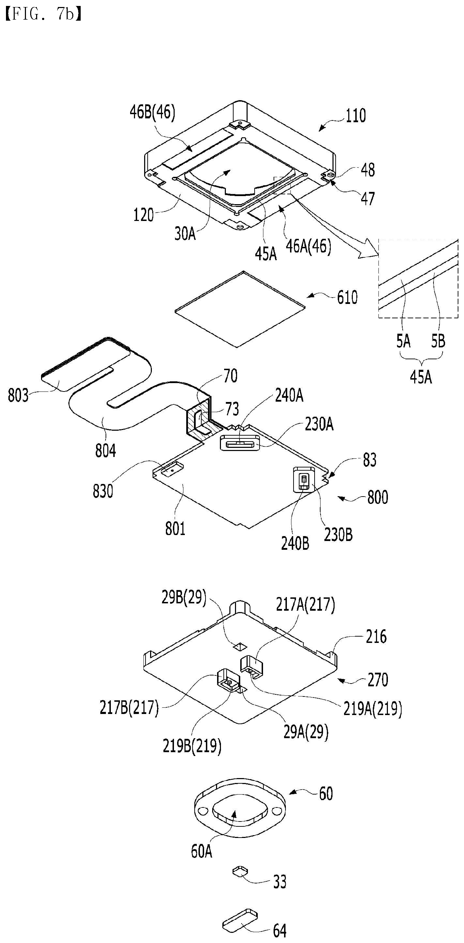

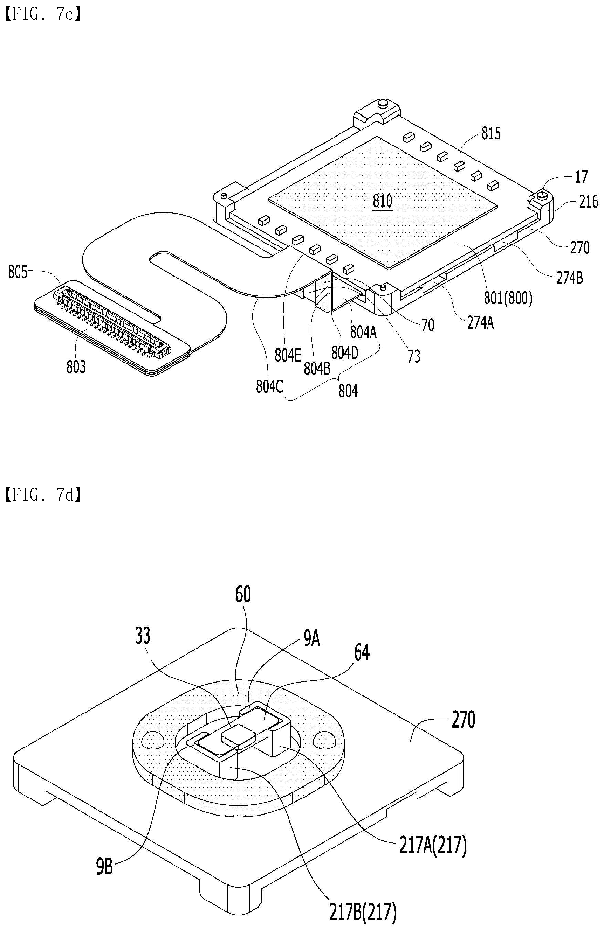

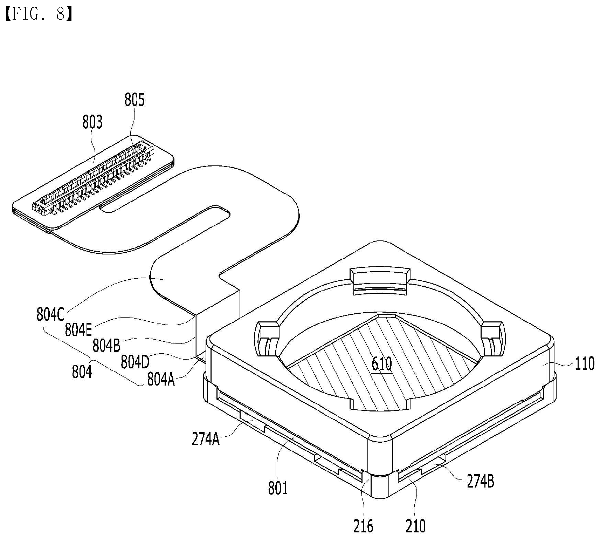

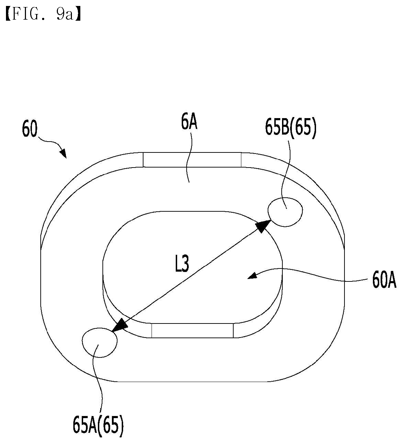

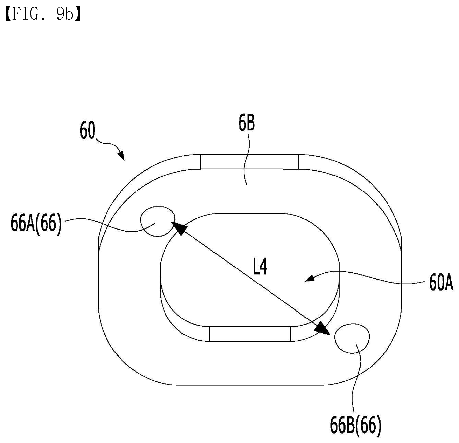

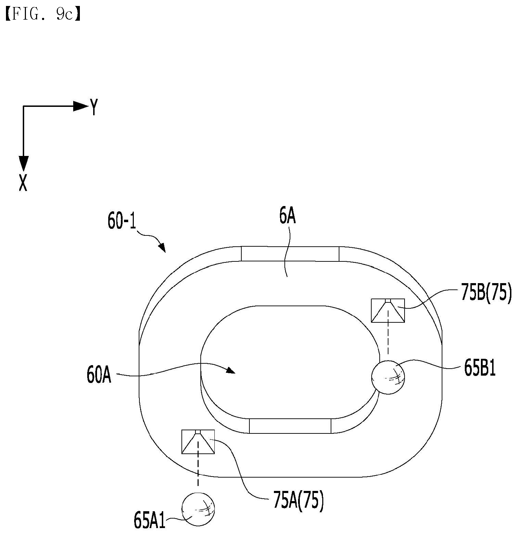

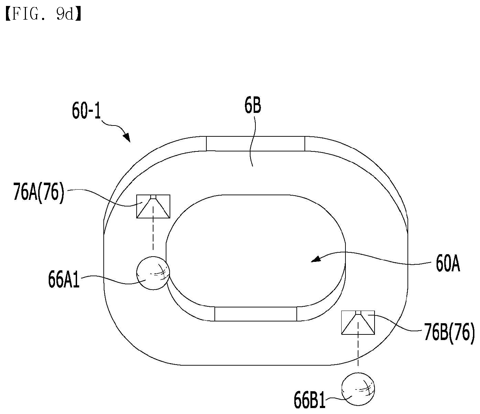

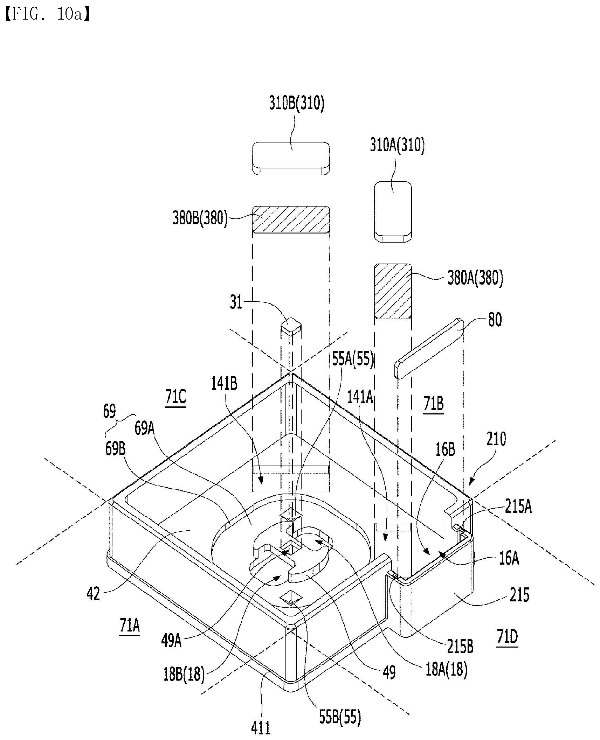

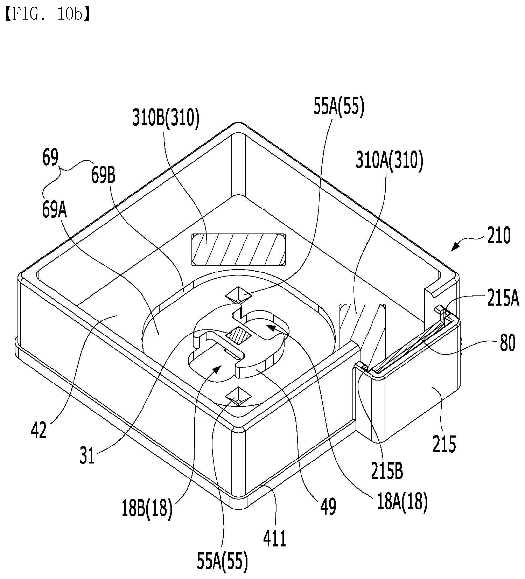

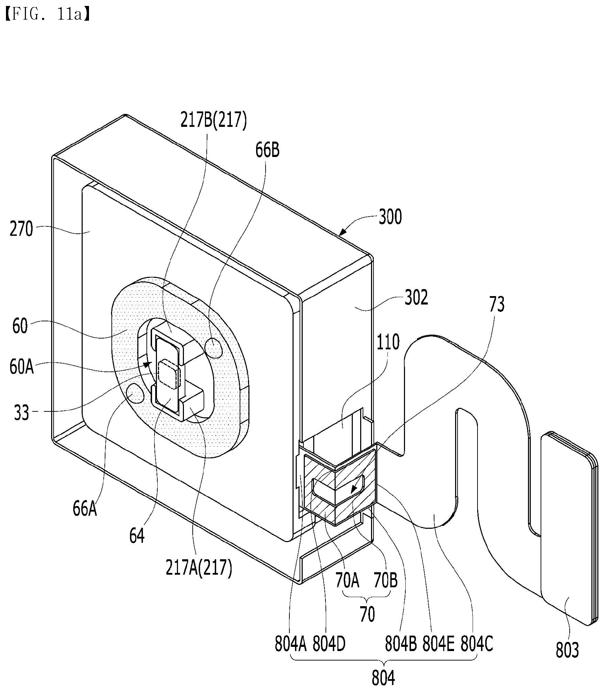

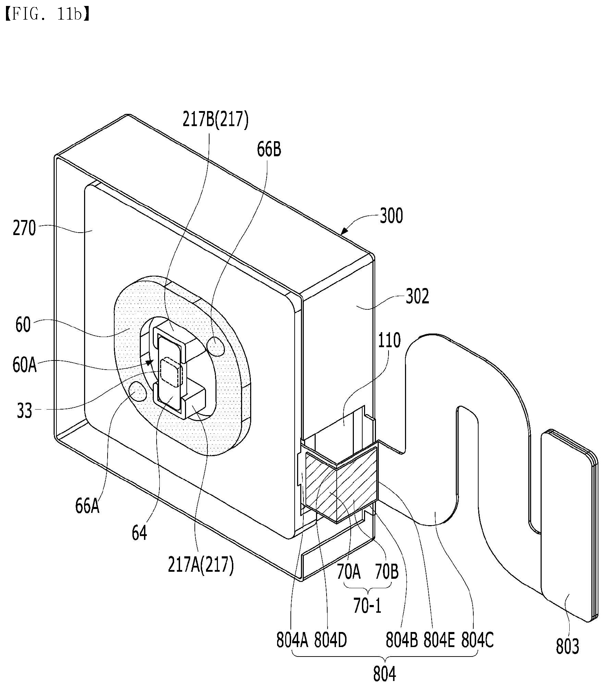

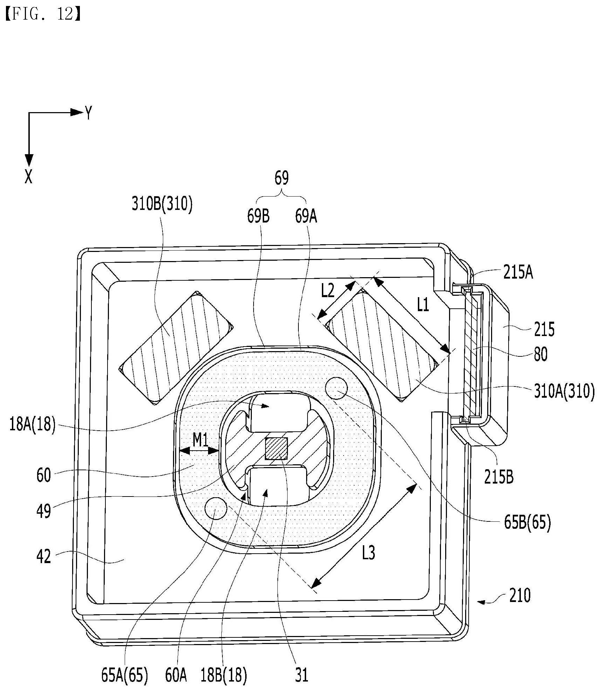

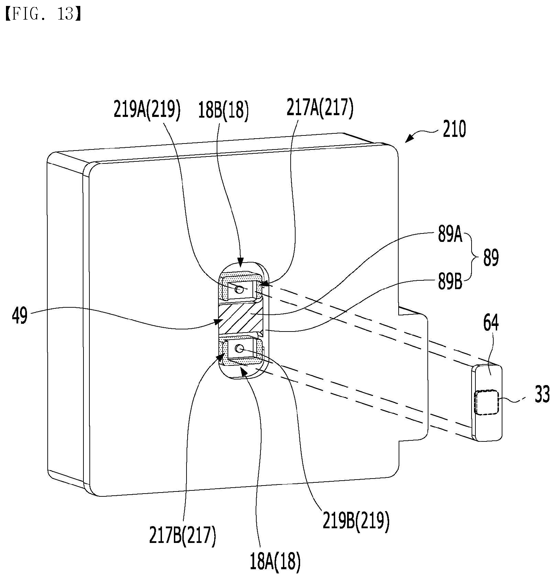

FIG. 1 is a perspective view of a camera device 200 according to an embodiment, FIG. 2A is a first exploded perspective view of the camera device 200 of FIG. 1, FIG. 2B is a second exploded perspective view of the camera device 200 of FIG. 1, FIG. 3 is a perspective view of the camera device 200 excluding a cover member 300, FIG. 4A is a sectional view of the camera device 200 in direction AB of FIG. 3, FIG. 4B is a sectional view of the camera device 200 in direction CD of FIG. 3, FIG. 4C is a sectional view of the camera device 200 in direction EF of FIG. 3, FIG. 4D is a sectional view of the camera device 200 in direction GH of FIG. 3, FIG. 4E is a sectional view of the camera device 200 in direction IJ of FIG. 3, FIG. 5 is a perspective view of a lens holder 110, FIG. 6 is a exploded perspective view of the lens holder 110, a circuit board 800, a sensor base 270, and a housing 210, FIG. 7A is a first exploded perspective view of the lens holder 110, a filter 610, the circuit board 800, and the sensor base 270, a tilting guide unit 60, a support member 64, and a magnetic material 33, FIG. 7B is a second exploded perspective view of the lens holder 110, the filter 610, the circuit board 800, the sensor base 270, the tilting guide unit, the support member, and the magnetic material 33 of FIG. 7A, FIG. 7C is a coupled perspective view of the sensor base 270 and the circuit board 800, FIG. 7D is a coupled perspective view of the sensor base 270, the support member 64, and the magnetic material 33, FIG. 8 is a perspective view of the lens holder 110, the circuit board 800, and the sensor base 270, FIG. 9A is a front perspective view of the tilting guide unit 60, FIG. 9B is a rear perspective view of the tilting guide unit 60, FIG. 9C is a front perspective view of a tilting guide unit 60-1 and first ball members 65A1 and 65B1 according to another embodiment, FIG. 9D is a rear perspective view of the tilting guide unit 60-1 of FIG. 9C and second ball members 66A1 and 66B1, FIG. 10A is an isolated perspective view of the housing 210, magnets 310A and 310B, a yoke 380, a magnetic material 31, and a movement inhibition portion 80, FIG. 10B is a coupled perspective view of the housing 210, the magnets 310A and 310B, the yoke 380, the magnetic material 31, and the movement inhibition portion 80, FIG. 11A is a perspective view of the cover member 300, the lens holder 110, the sensor base 270, the circuit board 800, the magnetic material 33, the tilting guide unit 60, and a reinforcement member 70, FIG. 11B shows a reinforcement member 70-1 according to another embodiment, FIG. 12 is a perspective view of the housing 210, the magnets 310A and 310B, the magnetic material 31, the movement inhibition portion 80, and the tilting guide unit 60, and FIG. 13 is a perspective view of the housing 210, an extension portion 217 of the sensor base 270, the support member 64, and the magnetic material 33.

Referring to FIGs. 1 to 13, the camera device 200 may include a fixed unit, an OIS moving unit 100, and a support unit. The OIS moving unit 100 may alternatively be referred to as a "moving unit," a "tilting unit," a "shaking unit," or a "motion unit."

The fixed unit may be a stationary element. That is, the fixed unit may not be moved in the optical-axis direction. Alternatively, the fixed unit may not be moved or tilted in a direction perpendicular to the optical axis. In addition, a configuration coupled to the fixed unit may be a fixed unit.

The fixed unit may include a housing 210. The fixed unit may include a cover member 300. For example, the fixed unit may include a configuration disposed on or coupled to the housing 210 or the cover member 300. For example, the fixed unit may include at least one of a magnet 310, a magnetic material 31, and a movement inhibition portion 80 disposed on the housing 210.

The OIS moving unit 100 (see FIG. 2A) may be moved or tilted about the first axis (e.g., pitch) that intersects the optical axis with respect to the fixed unit. In addition, the OIS moving unit may be moved or tilted about the second axis (e.g., yaw) that intersects the optical axis with respect to the fixed unit. For example, the first axis may be perpendicular to the optical-axis direction. The second axis may be perpendicular to the optical-axis direction and intersect the first axis. For example, the first axis may intersect the X-axis or the Y-axis. For example, the second axis may intersect the X-axis or the Y-axis. In another embodiment, for example, the first axis may be one of the X-axis and the Y-axis, and the second axis may be the other of the X-axis and the Y-axis.

The OIS moving unit 100 may include an image sensor 810 and the lens holder 110. The OIS moving unit 100 may include a circuit board 800 on which the image sensor 810 is disposed. In addition, the OIS moving unit 100 may include a sensor base 270 on which at least a part of the circuit board 800 is disposed.

In addition, for example, the OIS moving unit 100 may include a configuration disposed on or coupled to at least one of the lens holder 110, the sensor base 270, and the circuit board 800. For example, the OIS moving unit 100 may include a filter 610 disposed on the lens holder 110. For example, the OIS moving unit 100 may include a support member 64 coupled to the sensor base 270. For example, the OIS moving unit 100 may include a magnetic material 33 coupled to the support member 64.

For example, the OIS moving unit 100 may include at least one of an image sensor 810, a position sensor 240, a coil 230, a circuit element 815, and a controller 830, which are disposed on the circuit board 800.

In addition, the OIS moving unit 100 may include a moving module (or a tilting module) and a support member 64. For example, the moving module (or the tilting module) may include at least one of the configurations of the OIS moving unit 100 excluding the support member 64. The moving module may alternatively be referred to as a "mover."

For example, the moving module (or the tilting module) may include the lens module 400 and the image sensor 810. Also, for example, the moving module (or the tilting module) may include the sensor base 270. Also, for example, the moving module (or the tilting module) may further include at least one of the lens holder 110 and the circuit board 800. For example, the moving module (or the tilting module) may be tilted about the first axis or the second axis.

The support unit may support the OIS moving unit with respect to the fixed unit. For example, the support unit may include a tilting guide unit 60. In another embodiment, for example, the support unit may further include a rolling member (e.g. a ball member), or a sliding member (e.g., a shaft).

The lens holder 110, configured to receive a lens or a lens barrel, may be disposed on the image sensor 810. The lens holder 110 may be disposed spaced apart from the image sensor 810. The lens holder 110 may be disposed in the cover member 300. Alternatively, the lens holder 110 may be disposed in the housing 210. The lens holder 110 may alternatively be referred to as a "bobbin," a "lens carrier," a "holder," or a "housing."

The lens holder 110 may be connected to at least one of the image sensor 810, the circuit board 800, or the sensor base 270. The lens holder 110 may be fixed or coupled to at least one of the image sensor 810, the circuit board 800, or the sensor base 270. For example, the lower portion of the lens holder 110 may be coupled to the sensor base 270.

Referring to FIG. 5, the lens holder 110 may include an opening 101 for coupling to the lens module 400. The opening 101 may be a hole or a hollow formed through at least a part of the lens holder 110 in the optical-axis direction. For example, the opening 101 may be located in the center or the central region of the lens holder 110. The shape of the opening 101 of the lens holder 110 may match the shape of the lens module 400 mounted or coupled thereto, and may be, without being limited to, circular, oval, or polygonal. The lens holder 110 may include a cavity configured to receive the lens module 400 therein. At least a part of the lens module 400 may be exposed through the opening 101. Furthermore, a part of the lens module 400 may be disposed so as to be exposed upwards from the upper surface of the lens holder 110 or the upper plate 301 of the cover member 300.

Although not shown in FIG. 1, the lens holder 110 may include at least one stopper (not shown) disposed on the side surface of the lens holder 110. Consequently, when the OIS moving unit moves in a direction perpendicular to the optical axis, the stopper may prevent the side surface of the lens holder 110 from directly colliding with the side plate 302 of the cover member 300.

Referring to FIG. 6, the lens holder 110 may include a plurality of side portions (or outer surfaces) 110A to 110D or a plurality of side surfaces. For example, the lens holder 110 may include a first side portion (or first side surface) 110A, a second side portion (or second side surface) 110B, a third side portion (third surface) 110C, and a fourth side portion (or fourth side surface) 110D.

For example, the second side portion 110B may be positioned so as to face the first side portion 110A or to be opposite the first side portion 110A based on the optical axis OA. The third side portion 110C and the fourth side portion 110D may be located between the first side portion 110A and the second side portion 110B. The fourth side portion 110D may be positioned so as to face the third side portion 110C or to be opposite the third side portion 110C based on the optical axis OA. Although FIG. 6 illustrates the lens holder 110 as including four side portions, the lens holder 110 may include three, five or more side portions in another embodiment. Each of the first to fourth side portions 110A to 110D of the lens holder 110 may be disposed parallel to a corresponding one of the side plates 302 of the cover member 300.

The lens holder 110 may include a lower portion 120 located under the plurality of side portions 110A to 110D. The lens holder 110 may include an opening 30A corresponding to the image sensor 810 or the imaging area of the image sensor 810. The opening 30A may be formed in the lower portion 102 of the lens holder 110. The opening 30A may be a hole or a hollow formed through the lower portion 120. At least a part of the opening 30A in the lens holder 110 may overlap the opening 101 of the lens holder 110 in the optical-axis direction. The opening 30A may have a shape different from the opening 101. The opening 30A may have a shape corresponding to or coinciding with the image sensor 810.

Referring to FIG. 7B, the lens holder 110 may include a seating portion 45A on which the filter 610 is seated or disposed. The seating portion 45A may be disposed or formed on the lower surface of the lens holder 110. The seating portion 45A may be disposed on or formed in the lower portion 120 of the lens holder 110. For example, the seating portion 45A may be a recess depressed from the lower surface of the lens holder 110. For example, the seating portion 45A may include a bottom surface 5A having a step formed from the lower surface of the lens holder 110 in the optical-axis direction and a side surface 5B connecting the lower surface of the lens holder 110 and the bottom surface 5A of the seating portion 45A to each other. For example, the opening 30A may be formed through the bottom surface 5A of the seating portion 45A.

The lens holder 110 may include a depressed portion 45B disposed or formed on a corner region of an inner surface of the seating portion 45A. The depressed portion 45B may have a structure depressed in a direction from the optical axis toward the corner region of the inner surface of the seating portion 45A. The depressed portion 45B may prevent an adhesive (e.g., UV epoxy) configured to attach or couple the filter 610 to the seating portion 45A from overflowing out of the seating portion 45A.

The lens holder 110 may include an escape recess 46 configured to avoid spatial interference with the circuit element 815. For example, the escape recess 46 may be disposed or formed on the lower surface of the lens holder 110. For example, the escape recess 46 may be depressed from the lower surface of the lens holder 110. For example, the escape recess 46 may correspond to, be opposite, or overlap the circuit element 815 in the optical-axis direction. For example, the escape recess 46 may be located between the seating portion 45A and a side of the lower surface of the lens holder 110. For example, the escape recess 46 may include a first escape recess 46A and a second escape recess 46B located opposite each other with respect to the seating portion 45A or the filter 610. In another embodiment, the escape recess 46 may include four escape recesses disposed between the opening 30A and four sides of the lens holder 110.

The lens holder 110 may be coupled to the sensor base 270. The lower portion of the lens holder 110 may be coupled to the upper portion of the sensor base 270. The lens holder 110 may include a recess 47 corresponding to a protrusion 216 of the sensor base 270. The protrusion 216 of the sensor base 270 and the recess 47 in the lens holder 110 may serve as a guide configured to facilitate assembly of the sensor base 270 and the lens holder 110, and may increase the coupling area between the sensor base 270 and the lens holder 110 to improve coupling force between the sensor base and the lens holder 110.

For example, the recess 47 may be depressed from the lower surface of the lens holder 110. For example, the recess 47 may be disposed or formed on the corner or the corner region of the lower surface of the lens holder 110. The recess 47 in the lens holder 110 may have a shape corresponding to the protrusion 216 of the sensor base 270. In addition, the lens holder 110 may include a recess 48 or a hole corresponding to a boss 17 of the sensor base 270. For example, the boss 17 of the sensor base 270 may be inserted into or coupled to the recess 48 in the lens holder 110. For example, the recess 48 may be disposed or formed on a bottom surface of the recess 47 in the lens holder 110. For example, the recess 48 may be depressed from the bottom surface of the recess 47 in the lens holder 110.

The lens holder 110 and the sensor base 270 may be coupled to each other via an adhesive. The adhesive may be disposed in a recess 47 in the lens holder 110 and on a protrusion 217 of the sensor base 270.

In another embodiment, the lens holder 110 may include a protrusion protruding from the lower surface of the lens holder 110 instead of the recess 47, and the sensor base 270 may include a recess coupled to the protrusion of the lens holder 110. In this case, instead of the protrusion 217, the recess in the sensor base 270 may be depressed from the upper surface of the sensor base 270 or be formed in the upper surface of the protrusion 217. Also, in another embodiment, the boss 17 may be formed on the lens holder 110, and the recess 48 may be formed in the sensor base 270.

The lens holder 110 may be immovable with respect to the sensor base 270 in the optical-axis direction. The lens holder 110 may be immovable with respect to the circuit board 800 or the image sensor 810 in the optical-axis direction. In addition, the lens holder 100 may be immovable with respect to the fixed unit in the optical-axis direction.

The lens module 400 (or the lens) may be immovable with respect to the sensor base 270 in the optical-axis direction. The lens module 400 (or the lens) may be immovable with respect to the circuit board 800 or the image sensor 810 in the optical-axis direction. Furthermore, the lens module 400 (or the lens) may be immovable with respect to the fixed unit in the optical-axis direction. In other words, the focus of the lens module 400 (or the lens) may be constant without variation.

The lens holder 110 may be spaced apart from the cover member 300 for the purpose of OIS driving. For example, the upper portion (or the upper surface) of the lens holder 110 may be spaced apart from the inner surface of the upper plate 301 of the cover member 300, and the side portion (or the side surface) of the lens holder 110 may be spaced apart from the inner surface of the side plate 302 of the cover member 300.

The camera device 200 may include an adhesive 130 disposed between the lens holder 110 and the lens module 400 to couple the lens holder 110 to the lens module 400. The adhesive 130 may be disposed on the inner surface (or the inner circumferential surface) of the lens holder 110 and the outer surface (or the outer circumferential surface) of the lens module 400. The adhesive 130 may be adhered or coupled to the inner surface (or the inner circumferential surface) of the lens holder 110 and the outer surface (or the outer circumferential surface) of the lens module 400.

The lens module 400 may include at least one of a lens or a lens barrel. To compensate for hand tremor or shaking, the lens module 400, the lens holder 110, and the image sensor 810 may be simultaneously first-axis tilted or second-axis tilted in the same direction and to the same angle. The lens module 400 may include a glass lens having thermal deformation smaller than a plastic lens. In another embodiment, the lens module 400 may be a plastic lens.

The lens holder 110 may include at least one recess 21 depressed from the upper surface thereof. For example, the lens holder 110 may include a plurality of recess 21A to 21D spaced apart from each other. The recess 21 may be disposed adjacent to the opening 101. The recess 21 may include an opening formed from the inner circumferential surface of the lens holder 110. The recess 21 may include a bottom surface 22A having a height difference relative to the upper surface of the lens holder 110 and a side surface (or a side wall) 22B disposed between the bottom surface 22A and the upper surface of the lens holder 110. The bottom surface 22A may be located lower than the upper surface of the lens holder 110. The adhesive may be disposed in the recess 21 in the lens holder 110. For example, the adhesive may be disposed on at least one of the bottom surface 22a or the side surface 22B of the recess 21 in the lens holder 110. At least one of the bottom surface 22A or the side surface 22b of the recess 21 may be provided therein with a recess 23 which receives the adhesive 130 therein and through which the adhesive flows.

The lens module 400 may include at least one boss 24 disposed in the recess 21 in the lens holder 110. For example, the lens (or the lens barrel) may include at least one boss 24 disposed in the recess 21 in the lens holder 110.

The boss 24 of the lens module 400 may be inserted into the recess 21 in the lens holder 110. The boss 24 may protrude from the outer surface of the lens module 400. For example, the boss 24 may protrude from the outer surface of the lens module 400 in a direction perpendicular to the optical axis. For example, the boss 24 may protrude from the outer surface of the lens barrel (or the lens) of the lens module 400.

At least a part of the boss 24 may be opposite or overlap the recess 21 in the lens holder 110 in the optical-axis direction. The boss 24 may be disposed on the bottom surface 22B of the recess 21 in the lens holder 110. The adhesive 130 may be disposed between the boss 24 of the lens module 400 and the recess 21 in the lens holder 110. The adhesive 130 may be adhered or coupled to the boss 24 of the lens module 400 and the recess 21 in the lens holder 110. The boss 24 may include a plurality of bosses 24A to 24D spaced apart from each other. The number of bosses 24 may be equal to the number of recesses 21. The bosses 24 may serve to suppress separation of the lens module 400 from the lens holder 110 or rotation of the lens module 400 caused by impact.

Referring to FIGs. 4D and 4E, the boss 24 may not overlap the tilting guide unit 60 in the optical-axis direction. The boss 24 may overlap the coil 230 and the magnet 310 in the optical-axis direction. The reason for this is because the size of the lens module 400 can increase since there is no need for a construction for AF driving in the embodiment. In another embodiment, the boss 24 may not overlap the coil 230 and the magnet 310 in the optical-axis direction.

Although the lens module 400 and the lens holder 110 are coupled to each other via an adhesive, the lens module 400 and the lens holder 110 may be integrally formed in another embodiment.

The camera device 200 may include the filter 610 disposed between the lens module 400 and the image sensor 810. The filter 610 may be disposed on or coupled to the lens holder 110. For example, the filter 610 may be disposed under the lens holder 110. The filter 610 may be disposed on the lower portion 120 of the lens holder 110. For example, the filter 610 may be disposed on the lower surface of the lower portion 120 of the lens holder 110. For example, the filter 610 may be disposed on the seating portion 45A of the lens holder 110.

The filter 610 may be coupled to the lens holder 110 (or the seating portion 45A) via an adhesive (not shown). For example, the peripheral region of the filter 610 may be coupled to the bottom surface 5A of the seating portion 45A. Here, the adhesive may be epoxy, thermohardening adhesive, UV hardening adhesive or the like.

The filter 610 may serve to block a specific frequency band component of light passing through the lens module 400 from being incident on the image sensor 810. For example, the filter 610 may be an infrared cutoff filter. For example, the filter 610 may be disposed parallel to a plane perpendicular to the optical axis OA. For example, at least a part of the filter 610 may correspond to, opposite, or overlap the lens module 400 and/or the image sensor 810 in the optical-axis direction.

The sensor base 270 may be disposed in the cover member 300. The sensor base 270 may be disposed in the housing 210. The sensor base 270 may be disposed under the lens holder 110. The sensor base 270 may be disposed under the filter 610. For example, the sensor base 270 may be disposed under the image sensor 810. For example, the sensor base 270 may be disposed under the circuit board 800.

The sensor base 270 may be coupled to the lens holder 110. The sensor base 270 may alternatively be referred to as a "holder." In addition, the lens holder 110 may be referred to as a "first housing" (or a "first holder"), and the sensor base 270 may be referred to as a "second housing" (or a "second holder"). In another embodiment, the sensor base 270 and the lens holder 110 may be integrally formed. The lens holder 110 and the sensor base 270 may not be represented separately and may alternatively be referred to by a single term, e.g., a "housing" (or a holder). In another embodiment, at least two of the sensor base 270, the lens holder 110, and the support member 64 may be integrally formed.

For example, the sensor base 270 may include a protrusion 216 protruding from the upper surface thereof. The protrusion 216 may protrude toward the lens holder 110. The protrusion 216 may protrude from the upper surface of the sensor base 270. The protrusion 216 may alternatively be referred to as a "pillar portion."

For example, the protrusion 216 may correspond to, be opposite, or overlap the recess 47 of the lens holder 110 in the optical-axis direction. At least a part of the protrusion 216 of the sensor base 270 may be inserted into the recess 47 of the lens holder 110. For example, at least a part of the protrusion 216 may be coupled to the recess 47 of the lens holder 110. For example, at least a part of the protrusion 216 may be coupled to the recess 47 of the lens holder 110 via an adhesive.

For example, the sensor base 270 may include a body 270A and a protrusion 216 protruding from an upper surface of the body 270A. For example, the body 270A may have a shape corresponding to a substrate 801 of the circuit board 810. For example, the body 270A may have a polyhedral shape, such as a hexahedral shape. For example, the protrusion 216 may be disposed on a corner region of the upper surface of the body 270A. The number of protrusions 216 may be one, two or more.

For example, the protrusion 216 may include four protrusions 216A to 216D disposed on four corner regions of the upper surface of the body 270A. For example, the lens holder 110 may include four recesses 47 corresponding to the four protrusions 216A to 216D. In another embodiment, the sensor base 270 may include at least one protrusion disposed in at least one of four corner areas of the upper surface of the body 270A, and the lens holder 110 may include at least one recess 48 corresponding to the at least one protrusion of the sensor base 270.

The sensor base 270 or the body 270A may include side portions 51A to 51D corresponding to, opposite, or overlapping the side portions 110A to 110D of the lens holder 110. The sensor base 270 may include corners disposed between the side portions 51A to 51D. For example, the sensor base 270 may include first to fourth corners.

The camera device 200 may include a gyro sensor (not shown) disposed on the circuit board 800. For example, the gyro sensor may be disposed on the substrate 801 of the circuit board 800. For example, the gyro sensor may be disposed on, coupled to, or fixed to a lower surface of the substrate 801. For example, the gyro sensor may output rotational angular velocity information caused by movement of the camera device 200. For example, the gyro sensor may be implemented as a 2-axis or 3-axis gyro sensor or an angular velocity sensor. For example, the gyro sensor may be conductively or electrically connected to the substrate 801.

In another embodiment, the sensor base 270 may include a receiving portion configured to allow the gyro sensor 820 to be disposed therein or to avoid spatial interference with the gyro sensor. For example, the receiving portion may be a through-hole formed through the sensor base 270 in the optical-axis direction or a recess depressed from the upper surface of the sensor base 270 or the upper surface of the body 270A. In this case, the receiving portion may include an opening that opens to an outer surface of the sensor base 270.

The sensor base 270 may include a receiving portion 255 in which the controller 830 is disposed or the controller 830 is received. The receiving portion 255 may be a recess depressed from the upper surface of the sensor base 270 or the upper surface of the body 270A. In another embodiment, the receiving portion 255 may be a through-hole formed through the sensor base 270 or the body 270A in the optical-axis direction.

The sensor base 270 may include seating portions 274A and 274B configured to allow the coil 230 to be disposed thereon. The seating portions 274A and 274B may be disposed or formed on the upper surface of the sensor base 270. For example, the seating portions 274A and 274B may be recesses depressed from the upper surface of the sensor base 270. For example, the sensor base 270 may include a first seating portion 274A configured to allow a first coil unit 230A to be disposed or seated thereon and a second seating portion 274B configured to allow a second coil unit 230B to be disposed or seated thereon.

For example, the first seating portion 274A may be formed adjacent to or abutting any one (e.g., 216C) of the protrusions 216A to 216D of the sensor base 270. For example, the first seating portion 274A may be a recess formed in the upper surface of the sensor base 270 adjacent to the third protrusion 216C of the sensor base 270. For example, the first seating portion 274A may include an opening that opens to outer surfaces of the side portions (e.g., 51B and 51D) adjacent to the third protrusion 216C of the sensor base 270. In another embodiment, the first seating portion 274A may be spaced apart from the outer surfaces of the side portions (e.g., 51B and 51D) of the sensor base 270, and may not include an opening that opens to the outer surfaces of the side portions 51B and 51D.

For example, the second seating portion 274B may be formed adjacent to or abutting another (e.g., 216D) of the protrusions 216A to 216D of the sensor base 270. For example, the second seating portion 274B may be a recess formed in the upper surface of the sensor base 270 adjacent to the fourth protrusion 216D of the sensor base 270. For example, the second seating portion 274B may include an opening that opens to outer surfaces of the side portions (e.g., 51B and 51C) adjacent to the fourth protrusion 216D of the sensor base 270. In another embodiment, the second seating portion 274B may be spaced apart from the outer surfaces of the side portions (e.g., 51B and 51C) of the sensor base 270, and may not include an opening that opens to the outer surfaces of the side portions 51B and 51C.

In another embodiment, the seating portion 274 of the sensor base 270 may be formed at a position corresponding to the position where the coil 230 is disposed.

In another embodiment, each of the seating portions 274A and 274B may take the form of a through-hole. For example, at least one of the first and second seating portions 274A and 274B may be a hole or through-hole formed through the sensor base 270 in the optical-axis direction. In this case, a part of the sensor base 270 may not be interposed between the coil 230 and the magnet 310, which may increase electromagnetic force between the magnet 310 and the coil 230. In addition, a part of the sensor base 270 may not be interposed between the position sensor 240 and the magnet 310, which may increase the output of the position sensor 240 and may improve the sensitivity of the position sensor 240. In addition, since a part of the sensor base 270 is not interposed between the position sensor 240 and the magnet 310, the height of the camera device may be reduced. In another embodiment, each of the seating portions 274A and 274B may be an escape portion that avoids spatial interference with the entire coil 230.

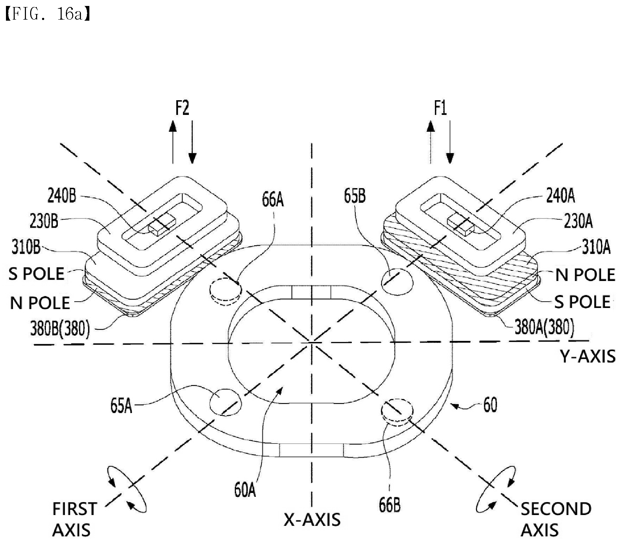

The sensor base 270 may include a recess 29 in which at least a part (e.g., a boss 65) of the tilting guide unit 60 is disposed or received. The recess 29 may be formed in a lower surface of the sensor base 270. For example, the recess 29 may be depressed from the lower surface of the sensor base 270. The number of the recesses 29 may be equal to the number of bosses 65 of the tilting guide unit 60. For example, the recess 29 may include two recesses 29A and 29B spaced apart from each other. For example, the two recesses 29A and 29B may be disposed spaced apart from each other in the first-axis direction (see FIG. 16A). The extension portion 217 of the sensor base 270 may be disposed between the two recesses 29A and 29B of the sensor base 270.

The recess 29 may contact the boss 65 of the tilting guide unit 60 at at least one point. For example, the recess 29 may include a bottom surface and at least one side surface connected to the bottom surface. The at least one side surface may be an inclined surface. For example, the recess 29 may include a bottom surface and a plurality of inclined surfaces. The inclined surfaces of the recess 29 may have the same shape. In another embodiment, at least one of the inclined surfaces of the recess 29 may have a different shape from the others.

Referring to FIG. 7A, the protrusion 216 of the sensor base 270 may have a recess 212A in which at least a part of the substrate 801 of the circuit board 800 is inserted or disposed. For example, a corner of the substrate 801 may be inserted into or coupled to the recess 212A of the protrusion 216 of the sensor base 270. For example, the recess 212A may be formed in the side surface of the protrusion 216 opposite the corner of the circuit board 800. In addition, at least one corner of the circuit board 800 may have a recess 83 configured to be inserted into or be coupled to the recess 212A of the protrusion 216. The recess 212A of the protrusion 216 of the sensor base 270 may serve as a coupling guide for coupling between the substrate 801 and the sensor base 270, and may serve to inhibit the substrate 801 from being rotated and/or separated from the sensor base 270.

The circuit board 800 may be disposed under the lens holder 110. The circuit board 800 may be disposed under the lens module 400. The circuit board 800 may be disposed on, coupled to, or fixed to the sensor base 270. For example, the circuit board 800 may be coupled to the sensor base 270 via an adhesive or a fixing member.

The circuit board 800 may be disposed on, coupled to, or fixed to the body 270A of the sensor base 270. The circuit board 800 may include at least one of a rigid printed circuit board (rigid PCB), a flexible printed circuit board (flexible PCB), and a rigid-flexible printed circuit board (rigid-flexible PCB). For example, the circuit board 800 may include a rigid printed circuit board and a flexible printed circuit board. The circuit board 800 may alternatively be referred to as a "substrate unit," a "substrate," or a "printed circuit board."

For example, the circuit board 800 may include a substrate 801 (or a "first region") disposed on, coupled to, or fixed to the sensor base 270. For example, the substrate 801 may be disposed on, coupled to, or fixed to the body 270A of the sensor base 270. For example, a lower side of the substrate 801 may be coupled to the upper surface of the sensor base 270 or the upper surface of the body 270A. For example, the lower surface of the substrate 801 may be coupled to the upper surface of the sensor base 270 or the upper surface of the body 270A via an adhesive.

The circuit board 800 may include a substrate 803 on which a connector 805 is disposed or provided and a substrate 804 connecting the substrate 801 and the substrate 803 to each other. For example, the substrate 801 may be a rigid printed circuit board. For example, the substrate 803 may be a rigid printed circuit board. For example, the substrate 804 may be a flexible printed circuit board.

For example, the rigid printed circuit board may include a plurality of conductive layers (or circuit patterns) disposed spaced apart from each other in the optical-axis direction and an insulating layer disposed between two neighboring ones of the plurality of conductive layers. For example, the flexible circuit board may include one conductive layer (or a circuit pattern), a first insulating layer disposed on the conductive layer, and a second insulating layer disposed under the conductive layer. In another embodiment, the flexible circuit board may include a first conductive layer, a second conductive layer, a first insulating layer disposed between the first and second conductive layers, a second insulating layer disposed on the first conductive layer, and a third insulating layer disposed under the second conductive layer.

The image sensor 810 may be disposed on the substrate 801. The image sensor 810 may be disposed so as to correspond to, to be opposite, or to overlap the lens module 400 and/or the filter 610 in the optical-axis direction. For example, the image sensor 810 may be disposed on an upper surface of the circuit board 800. For example, the image sensor 810 may be disposed on an upper surface of the substrate 801.

The image sensor 810 may include a sensor surface configured to detect light. For example, the sensor surface may include an image-capturing area. Here, the image-capturing area may alternatively be referred to as an effective area, a light receiving area, or an active area. For example, the image-capturing area may include a plurality of pixels from which an image is formed. The image-capturing area may correspond to, be opposite, or overlap the lens module 400 and/or the filter 610 in the optical-axis direction.

The image sensor 810 may be conductively or electrically connected to the substrate 801. For example, the image sensor 810 may be conductively connected to the substrate 801 via a conductive member, such as a wire (not shown). For example, the substrate 801 of the circuit board 800 may include at least one pad or terminal (not shown) conductively connected to a wire conductively connected to the image sensor 810. For example, the pad or terminal conductively connected to the wire may be disposed on the upper surface of the substrate 801.

The camera device 200 may include a circuit element 815 disposed on the substrate 801. For example, the circuit element 815 may include at least one of a passive element (e.g., a capacitor or a resistor), an active element (e.g., a sensor, a memory, or a driver IC), or a circuit pattern. For example, in order to avoid spatial interference with the image sensor 810, the circuit element 815 may be disposed between the image sensor 810 and an edge (e.g., a side) of the substrate 801.

The camera device 200 may include a controller 830 disposed on the circuit board 800. For example, the controller 830 may be a driver IC. For example, the controller 830 may be disposed on the substrate 801. For example, the controller 830 may be disposed under the substrate 801. For example, the controller 830 may be disposed on, coupled to, or fixed to the lower surface of the substrate 801. For example, the controller 830 may be conductively or electrically connected to the substrate 801.

The controller 830 may be conductively or electrically connected to the coil units 230A and 230B of the coil 230, may supply a first drive signal to the first coil unit 230A, and may supply a second drive signal to the second coil unit 230B. Furthermore, the controller 830 may be conductively or electrically connected to the position sensor 240.

The controller 830 may receive an output signal from the position sensor 240, and may control a drive signal (e.g., drive current) that is supplied to the coil 230 using the output signal from the position sensor 240. For example, the controller 830 may receive an output signal from the first sensor 240A, and may control a first drive signal (e.g., first drive current) that is supplied to the first coil unit 230A using the output signal from the first sensor 240A. In addition, the controller 830 may receive an output signal from the second sensor 240B, and may control a second drive signal (e.g., second drive current) that is supplied to the second coil unit 230B using the output signal from the second sensor 240B.

The coils 120 and 230 may be disposed on, coupled to, or fixed to the circuit board 800. The coil 230 may be conductively or electrically connected to the circuit board 800 (e.g., the substrate 801) via a conductive adhesive or a solder.

The first coil unit 230A and the second coil unit 230B may be disposed on or coupled to the substrate 801, and may be conductively or electrically connected to the substrate 801. Referring to FIG. 7B, for example, the first coil unit 230A and the second coil unit 230B may be disposed on, coupled to, or fixed to the lower surface of the substrate 801. For example, the first coil unit 230A and the second coil unit 230B may be disposed between the substrate 801 and the sensor base 270.

For example, the first and second coil units 230A and 230B may be disposed adjacent to two adjacent ones of the four corners of the substrate 801. For example, for diagonal driving, the first coil unit 230A may be disposed adjacent to one corner of the substrate 801 corresponding to the protrusion 216C of the sensor base 270 (or one corner of the sensor base 270), and the second coil unit 230B may be disposed adjacent to another corner of the substrate 801 corresponding to the protrusion 216D of the sensor base 270 (or another corner of the sensor base 270). For example, the first coil unit 230A may be disposed adjacent to the protrusion 216C of the sensor base 270, and the second coil unit 230B may be disposed adjacent to the protrusion 216D of the sensor base 270.

The coil 230 may tilt the OIS moving unit 100 about the first axis or the second axis, or may rotate the OIS moving unit by a predetermined angle, due to interaction with the magnet 310 disposed on the housing 210, which is a fixed unit.

The coil 230 may be opposite, may correspond to, or may overlap the magnet 310 in the optical-axis direction. The coil 230 may include a first coil unit 230A that corresponds to, is opposite, or overlaps the first magnet unit 310A in the optical-axis direction and a second coil unit 230B that corresponds to, is opposite, or overlaps the second magnet unit 310B in the optical-axis direction. For example, the coil 230 may not overlap the magnet 310 in a direction perpendicular to the optical axis.

The coil 230 may be disposed between the circuit board and the sensor base 270. The first coil unit 230A may be disposed in the first seating portion 274A of the sensor base 270, and the second coil unit 230B may be disposed in the second seating portion 274B of the sensor base 270.

For example, each of the first and second coil units 230A and 230B may include a hollow or a hole. For example, each of the first and second coil units 230A and 230B may have a ring shape or a closed curved shape. For example, each of the first coil unit 230A and the second coil unit 230B may have a ring shape wound around a straight line parallel to the optical axis OA and perpendicular to the upper surface of the sensor base 270 or the upper surface of the body 270A as an axis.

For example, referring to FIG. 16A, the first coil unit 230A may have a ring shape configured such that the length thereof in the transverse direction (or the direction parallel to the second axis) is greater than the length thereof in the longitudinal direction (or the direction parallel to the first axis). For example, the second coil unit 230B may have a ring shape configured such that the length thereof in the longitudinal direction (or the direction parallel to the first axis) is greater than the length thereof in the transverse direction (or the direction parallel to the second axis).

For OIS feedback driving, the camera device 200 may include a position sensor 240. The position sensor 240 may detect displacement or angular displacement of the OIS moving unit 100 due to tilting or rotation of the OIS moving unit. The position sensor 240 may detect a magnetic field of the magnet 310.

For example, the position sensor 240 may include a first sensor 240A and a second sensor 240B. For example, at least a part of the first sensor 240A may correspond to, be opposite, or overlap the first magnet unit 310A in the optical-axis direction. For example, the center of the first sensor 240A may overlap the first magnet unit 310A in the optical-axis direction. For example, the first sensor 240A may detect the first magnet unit 310A (or a magnetic field of the first magnet unit 310A). For example, the first sensor 240A may detect a tilted angle of the OIS moving unit 100 relative to the second axis. In another embodiment, the first sensor 240A may not overlap the first and second magnet units 310A and 310B in the optical-axis direction.

At least a part of the second sensor 240B may correspond to, be opposite, or overlap the second magnet unit 310B in the optical-axis direction. For example, the center of the second sensor 240B may overlap the second magnet unit 310B in the optical-axis direction. For example, the second sensor 240B may detect the second magnet unit 310B (or a magnetic field of the second magnet unit 310B). For example, the second sensor 240A may detect a tilted angle of the OIS moving unit 100 relative to the first axis. In another embodiment, the second sensor 240B may not overlap the second magnet unit 310B in the optical-axis direction.

For example, the first and second sensors 240A and 240B may be disposed on, coupled to, or fixed to the substrate 801 of the circuit board 800. For example, the first and second sensors 240A and 240B may be conductively or electrically connected to the substrate 801 of the circuit board 800.

For example, the first sensor 240A may be disposed in the hollow (or the hole) in the first coil unit 230A, and the second sensor 240B may be disposed in the hollow (or the hole) in the second coil unit 230B. In another embodiment, the first sensor 240A may be disposed outside the hollow (or the hole) in the first coil unit 230A, and the second sensor 240B may be disposed outside the hollow (or the hole) in the second coil unit 230B.

For example, each of the first sensor 240A and the second sensor 240B may be a Hall sensor including first and second input terminals and first and second output terminals. For example, the first and second input terminals and the first and second output terminals of the first sensor 240A may be conductively or electrically connected to the substrate 801, and the first and second input terminals and the first and second output terminals of the second sensor 240B may be conductively or electrically connected to the substrate 801.

For example, the substrate 801 or the controller 830 may supply or apply a first drive signal to the first and second input terminals of the first sensor 240A. The first sensor 240A may output a first output signal, and the first output signal may be transmitted to the substrate 801 or the controller 830. The first output signal may be output to the first and second output terminals of the first sensor 240A.

For example, the substrate 801 or the controller 830 may supply or apply a second drive signal to the first and second input terminals of the second sensor 240B. The second sensor 240B may output a second output signal, and the second output signal may be transmitted to the substrate 801 or the controller 830. The second output signal may be output to the first and second output terminals of the second sensor 240B.

The controller 830 may control the first drive signal supplied to the first coil unit 230A and the second drive signal supplied to the second coil unit 230B using the first output signal from the first sensor 240A and the output signal from the second sensor 240B.

In another embodiment, each of the first sensor 240A and the second sensor 240B may be a driver IC including a Hall sensor.

When each of the first and second sensors 240A and 240B is a driver IC, the position sensor 240 may perform transmission and receiving of data to and from another device (e.g., the controller 780) through data communication, for example, I2C communication using a protocol. Here, each of the first and second sensors 240A and 240B may include first and second terminals for input of power or a drive signal, a third terminal for a clock signal, a fourth terminal for a data signal, and fifth and sixth terminals for supply of a drive signal to the coil units 230A and 230B. The first to sixth terminals of each of the first and second sensors 240A and 240B may be conductively or electrically connected to the circuit board 800. The fifth and sixth terminals of the first sensor 240A may be electrically connected to the first coil unit 230A, and the fifth and sixth terminals of the second sensor 240B may be electrically connected to the second coil unit 230B.

The first sensor 240A may supply a first drive signal to the first coil unit 230A through the fifth and sixth terminals of the first sensor 240A, and the second sensor 240B may supply a second drive signal to the second coil unit 230B through the fifth and sixth terminals of the second sensor 240B. The first sensor 240A may supply a first drive signal to the first coil unit 230A through the circuit board 800, and the second sensor 240B may supply a second drive signal to the second coil unit 230B through the circuit board 800.

The camera device 200 may include a heat dissipation member (not shown) coupled to at least one of the circuit board 800 and the sensor base 270. For example, the heat dissipation member may be disposed under the circuit board 800. For example, the heat dissipation member 280 may be disposed between the circuit board 800 and the sensor base 270. The heat dissipation member may be a plate-shaped member having a predetermined thickness and hardness. In addition, the heat dissipation member may dissipate heat generated from a heat source of the circuit board 800 to the outside and may improve heat dissipation efficiency. For example, the heat dissipation member may be a metal material or a metal plate.

Referring to FIGs. 10A and 10B, the housing 210 may include a cavity configured to receive the OIS moving unit 100. At least a part (e.g., the upper portion) of the housing 210 may be disposed in the cover member 300.

For example, the housing 210 may have a shape corresponding to the OIS moving unit 100, e.g., the lens holder 110 or the sensor base 270, such as, but not limited to, a polygonal shape (e.g., a quadrangular shape or an octagonal shape) or a circular shape (or an oval shape), and may have a variety of shapes. The housing 210 may alternatively be referred to as a "base" or a "frame."

The housing 210 may include a plurality of side portions 71A to 71D corresponding to the side portions 110A to 110D of the lens holder 110 or the side portions 51A to 51D of the sensor base 270. The housing 210 may include a corner located between two adjacent side portions. In addition, the housing 210 may include a lower portion 42 (or a lower plate) located under the side portions 71A to 71D. The lower portion 42 of the housing 210 may be connected to a lower side of each of the side portions 71A to 71D. For example, the lower portion 42 may alternatively be referred to as a "bottom portion," a "bottom surface," or a "body." For example, the side portions 71A to 71D may protrude upward from the lower portion 42.

The housing 210 has a first side portion 71A corresponding to, opposite, or overlapping the first side portion 110A of the lens holder 110, a second side portion 71B corresponding to, opposite, or overlapping the second side portion 110B of the lens holder 110, a third side portion 71C corresponding to, opposite, or overlapping the third side portion 110C of the lens holder 110, and a fourth side portion 71D corresponding to, opposite, or overlapping the fourth side portion 110D of the lens holder 110.

The first side portion 71A (or a first side surface or a first outer surface) of the housing 210 may be located opposite the second side portion 71B (or a second side surface or a second outer surface) of the housing 210, and the third side portion 71C (or a third side surface or a third outer surface) of the housing 210 may be located opposite the fourth side portion 71D (or a fourth side surface or a fourth outer surface) of the housing 210. For example, each of the first to fourth side portions 71A to 71D of the housing 210 may be disposed parallel to a corresponding one of the side plates 302 of the cover member 300.

The housing 210 may include a step 411 disposed on a lower portion of at least one of the side portions 71A to 71D. For example, the step 411 may protrude from an outer surface of each of the side portions 71A to 71D of the housing 210 in a direction perpendicular to the optical axis. For example, the step 411 may be opposite or may overlap the side plate 302 of the cover member 300 in the optical-axis direction. For example, the step 411 may be coupled to the side plate 302 of the cover member 300 via an adhesive.

The housing 210 may include seating portions 141A and 141B on which the magnet 310 is disposed. For example, each of the seating portions 141A and 141B may be a recess formed in the lower portion 42 of the housing 210. In another embodiment, each of the seating portions 141A and 141B may be a through-hole formed through the lower portion 42 of the housing 210. The housing 210 may include a first seating portion 141A on which the first magnet unit 310A is disposed and a second seating portion 141B on which the second magnet unit 310B is disposed.

For example, the first seating portion 141A may be disposed or formed in a first region of the lower portion 42 of the housing 210 adjacent to one of the four corners of the housing 210. For example, the one corner of the housing 210 may be a corner corresponding to or adjacent to the protrusion 216C of the sensor base 270. For example, the second seating portion 141B may be disposed or formed in a second region of the lower portion 42 of the housing 210 adjacent to another of the four corners of the housing 210. For example, the other corner of the housing 210 may be a corner corresponding to or adjacent to the protrusion 216D of the sensor base 270.

In another embodiment, the first and second seating portions may be disposed at positions corresponding to the positions where the coil units 230A and 230B and the magnet units 310A and 310B are disposed. For example, in another embodiment, the first seating portion may be formed adjacent to the first side portion (or the second side portion) of the housing 210, and the second seating portion may be formed adjacent to the third side portion (or the fourth side portion) of the housing 210.

The magnet 310 may be disposed on the housing 210. The magnet 310 may be coupled to the housing 210. The magnet 310 may be disposed on the lower portion 42 of the housing 210. For example, the magnet 310 include a first magnet unit 310A and a second magnet unit 310B which are spaced apart from each other.

For example, the magnet 310 may be disposed under the coil 230. The magnet 310 may be opposite or overlap the coil 230 in the optical-axis direction. For example, the first magnet unit 310A may be disposed so as to correspond to, to be opposite, or to overlap the first coil unit 230A in the optical-axis direction. The second magnet unit 310B may be disposed so as to correspond to, to be opposite, or to overlap the second coil unit 230B in the optical-axis direction.

For example, the first magnet unit 310A and the second magnet unit 310B may be disposed so as to be misaligned with each other in the first-axis direction (or the direction parallel to the first axis) or the second-axis direction (or the direction parallel to the second axis). For example, when viewed from above or in the optical-axis direction, the first magnet unit 310A and the second magnet unit 310B may be disposed on the housing 210 so as not to overlap each other in the direction parallel to the first axis or the direction parallel to the second axis. For example, the first magnet unit 310A and the second magnet unit 310B may be disposed on the lower portion 42 of the housing 210 so as not to overlap each other in the direction parallel to the first axis or the direction parallel to the second axis.

Each of the first magnet unit 310A and the second magnet unit 310B may be a two-pole magnet including one N pole and one S pole. For example, each of the first magnet unit 310A and the second magnet unit 310B may be a magnet with an N pole and an S pole separated or disposed in the optical-axis direction. For example, the N pole (or the S pole) of each of the first magnet unit 310A and the second magnet unit 310B may be located above the S pole (or the N pole) thereof.

For example, a first surface of the magnet 310 that faces or is opposite the coil 230 in the optical-axis direction may have an S pole (or an N pole). A second surface of the magnet 310, which is opposite the first surface, may have an N pole (or an S pole).

In another embodiment, the magnet 310 may include three or more magnet units. For example, the magnet 310 may include the first magnet unit 310A, the second magnet unit 310B, and a third magnet unit disposed opposite the first magnet unit 310A based on the optical axis. In another embodiment, the magnet 310 may include the first magnet unit 310A, the second magnet unit 310B, the third magnet unit disposed opposite the first magnet unit 310A based on the optical axis, and a fourth magnet unit disposed opposite the second magnet unit 310B based on the optical axis.

In another embodiment, in order to enhance electromagnetic force, the magnet 310 may be a four-pole magnet. For example, the magnet 310 may include two N poles and two S poles. For example, the magnet 310 may include a first magnet including an N pole and an S pole, a second magnet including an S pole and an N pole, and a partition wall disposed between the first magnet and the second magnet. The partition wall, which is a substantially non-magnetic part, may include a section with almost no polarity, which may be filled with air or made of a non-magnetic material, and may be referred to as a "neutral zone." For example, the first magnet and the second magnet may face each other in the optical-axis direction, and the first magnet and the second magnet may be disposed so as to face different polarities in the optical-axis direction. Although the number of each of the magnet units and the coil units which correspond to each other may be two, three, or four, each of the magnet units and coil units may number five or more in another embodiment.

Referring to FIGs. 10A and 16A, the camera device 200 may include a yoke 380 disposed on the magnet 310. The yoke 380 may reduce or inhibit leakage flux from the magnet 310, increase the electromagnetic force between the magnet 310 and the coil 230, and enhance the drive force for OIS operation. The yoke 380 may be made of a material that sticks to a magnet. For example, the yoke 380 may be made of a metal material. Alternatively, for example, the yoke 380 may be made of a magnetic metal material. Alternatively, for example, the yoke 380 may be a magnetic material, such as a magnet.

The yoke 380 may be disposed on the housing 210. For example, the yoke 380 may be disposed between the housing 210 and the magnet 310. For example, the yoke 380 may be disposed in the seating portions 141A and 141B of the housing 210. For example, the yoke 380 may face the magnet 310 or the coil 230. For example, the yoke 380 may be disposed on the second surface (e.g., the lower surface) of the magnet 310 opposite the first surface (e.g., the upper surface) of the magnet 310 facing the coil 230. The yoke 380 may contact or be attached to the magnet 310. For example, the yoke 380 may be adhered to the magnet 310.

For example, the yoke 380 may be coupled to the housing 210 by insert injection molding. When the yoke 380 and the housing 210 are coupled to each other by insert injection molding, at least a part of the yoke 380 may be located in the housing 210, and at least another part of the yoke 380 may be exposed from the housing 210 and may be coupled or attached to the magnet 310.

In another embodiment, the yoke 380 may be disposed in the seating portions 141A and 141B of the housing 210 by an adhesive. The yoke 380 may include a first yoke 380A disposed on the first magnet unit 310A and a second yoke 380B disposed on the second magnet unit 310B. For example, the first yoke 380A may be disposed in the first seating portion 141A of the housing 210, and the second yoke 380B may be disposed in the second seating portion 141B of the housing 210. Since the magnet 310 can be adhered to the yoke 380, assemblability between the magnet 310 and the housing 210 may be improved or the assembly between the magnet 310 and the housing 210 may be facilitated when assembling the magnet 310 to the housing 210.

In another embodiment, each of the first magnet unit 310A and the second magnet unit 310B may be a magnet with one N pole and one S pole separated or disposed in a direction perpendicular to the optical-axis direction. In another embodiment, each of the first magnet unit 310A and the second magnet unit 310B may be a magnet including two N poles and two S poles. Electromagnetic force may be generated between the first and second magnet units 310A and 310B and the first and second coil units 230A and 230B, and the generated electromagnetic force may cause first-axis tilting or second-axis tilting of the OIS moving unit.

The housing 210 may include a receiving portion 49A in which the magnetic material 31 is received or disposed. The receiving portion 49A may be disposed or formed in the lower portion 42 of the housing 210. The receiving portion 49A may be disposed or formed in an upper surface of the lower portion 42 of the housing 210. For example, the receiving portion 49A may be a recess depressed from the upper surface of the lower portion 42 of the housing 210. The receiving portion 49A may have a shape corresponding to the magnetic material 31, such as a quadrangular shape or a circular shape. For example, the receiving portion 49A of the housing 210 may correspond to, be opposite, or overlap the support member 64 or the magnetic material 33 in the optical-axis direction.

Referring to FIG. 10B, the housing 210 may include a seating portion 69 in which at least a part of the tilting guide unit 60 is disposed or at least a part of the tilting guide unit 60 is received. For example, the seating portion 69 may be a recess depressed from the bottom surface of the housing 210 or the upper surface of the lower portion 42. For example, the seating portion 69 may have a shape that corresponds to or coincides with the shape of the tilting guide unit 60. For example, the seating portion 69 may include a bottom surface 69A having a step formed from the upper surface of the lower portion 42 of the housing 210 in the optical-axis direction and a side surface 69B connecting the bottom surface 69A and the upper surface of the lower portion 42 to each other. The side surface 69B may be referred to as a "partition wall" or a "side wall." For example, the bottom surface 69A of the seating portion 69 may be located lower than the upper surface of the lower portion 42 of the housing 210. In another embodiment, the seating portion 69 may be omitted.

Referring to FIGs. 4A, 4B, 11, and 12, since the housing 210 is provided at the upper surface of the lower portion 42 thereof with a seating portion 69 in which at least a part of the tilting guide unit 60 is inserted or disposed, the lower portion 42 of the housing 210 may include a partition wall 69B (or a guide portion) disposed around the tilting guide unit 60. The tilting guide unit 60 may be spaced apart from the partition wall 69B of the housing 210, and the partition wall 69B may be disposed so as to surround the tilting guide unit 60. The partition wall 69B of the housing 210 may prevent the tilting guide unit 60 from being separated or dislodged from the housing 210. In another embodiment, at least a part of the tilting guide unit 60 may be in contact with the partition wall 69B of the housing 210.

The housing 210 may include a portion (or a "first portion 49") disposed between the magnetic material 31 and the magnetic material 33. For example, the housing 210 may include a coupling portion 49 coupled to the magnetic material 31. The coupling portion 49 may be disposed between the magnetic material 31 and the magnetic material 33.

For example, the coupling portion 49 may be a part of the lower portion 42 of the housing 210. For example, the coupling portion 49 may be a protrusion or boss protruding from the lower portion 42 of the housing 210. For example, the coupling portion 49 may protrude from the upper surface of the lower portion 42 of the housing 210. Alternatively, for example, the coupling portion 49 may protrude from the bottom surface 69A of the seating portion 69 of the housing 210. For example, the protruding length of the coupling portion 49 of the housing 210 may be greater than the depth of the seating portion 69 of the housing 210. For example, the protruding length of the coupling portion 49 may be the distance (or the shortest distance) from the bottom surface 69A of the seating portion 69 to an upper surface (or the uppermost end) of the coupling portion 49. In addition, the depth of the seating portion 69 may be the distance (or the shortest distance) from the upper surface of the lower portion 42 of the housing 210 to the bottom surface 69A of the seating portion 69. In another embodiment, for example, the protruding length of the coupling portion 49 may be less than or equal to the depth of the seating portion 69. For example, the coupling portion 49 may have a shape that corresponds to or coincides with an opening 60A of the tilting guide unit 60.

For example, the coupling portion 49 of the housing 210 may correspond to, be opposite, or overlap the opening 60A of the tilting guide unit 60 in the optical-axis direction. For example, at least a part of the coupling portion 49 of the housing 210 may be disposed in the opening 60A of the tilting guide unit 60. Since at least a part of the coupling portion 49 of the housing 210 is disposed in the opening 60A of the tilting guide unit 60, it is possible to reduce the distance between the coupling portion 49 and the magnetic material 33, thereby increasing repulsive force between the magnetic material 31 disposed on the coupling portion 49 and the magnetic material 33 disposed on the OIS moving unit and stably supporting the OIS moving unit.

For example, the receiving portion 49A may be disposed or formed in the coupling portion 49 of the housing 210. For example, the receiving portion 49A may be a recess depressed from the upper surface of the coupling portion 49 of the housing 210.

For example, when viewed in the optical-axis direction or from above, the coupling portion 49 may be disposed between recesses 55A and 55B of the housing 210. For example, the coupling portion 49 may be disposed between bosses 66A and 66B of the tilting guide unit 60. For example, the coupling portion 49 (or the magnetic material 31) may overlap the bosses 66A and 66B of the tilting guide unit 60 in a direction perpendicular to the optical axis.

For example, at least a part of the first magnet unit 310A may correspond to, be opposite, or overlap the tilting guide unit 60 in a direction parallel to the first axis. In addition, at least a part of the second magnet unit 310B may correspond to, be opposite, or overlap the tilting guide unit 60 in a direction parallel to the second axis.

The housing 210 may include a recess 55 in which at least a part of the boss 66 of the tilting guide unit 60 is disposed or in which at least a part of the boss 66 is received. The recess 55 in the housing 210 may be formed in the upper surface of the lower portion 42 of the housing 210. For example, the recess 55 may be depressed from the upper surface of the lower portion 42 of the housing 210. For example, the recess 55 may be formed in the bottom surface 69A of the seating portion 69 of the housing 210. For example, the recess 55 may be depressed from the bottom surface 69A of the seating portion 69 of the housing 210. The number of the recesses 55 in the housing 210 may be equal to the number of the bosses 66 of the tilting guide unit 60.

For example, the recess 55 may include two recesses 55A and 55B spaced apart from each other. For example, the two recesses 55A and 55B may be disposed spaced apart from each other in the second-axis direction. For example, the direction in which the recesses 55A and 55B in the housing 210 are spaced apart from each other and the direction in which the two recesses 29A and 29B in the sensor base 270 are spaced apart from each other may be intersect or perpendicular to each other. For example, the receiving portion 49A may be disposed between the two recesses 55A and 55B in the housing 210.

The recess 55 in the housing 210 may contact the boss 66 of the tilting guide unit 60 at at least one point. For example, the recess 55 may include a bottom surface and at least one side surface connected to the bottom surface. The at least one side surface of the recess 55 may be an inclined surface. For example, the recess 55 may include a bottom surface and a plurality of inclined surfaces. The inclined surfaces of the recess 55 may have the same shape. In another embodiment, at least one of the inclined surfaces of the recess 55 may have a different shape from the others.

The housing 210 may include an opening 18 or a "recessed portion" in which or through which at least a part of the moving module (or the tilting module) is disposed or passes. For example, the housing 210 may include an opening 18 in which or through which at least a part of the sensor base 270 is disposed or passes. The opening 18 may be formed in the lower portion 42 of the fixed unit (e.g., the housing 210). The opening 18 may be a hole or a hollow formed through the lower portion 42 of the housing 210.

Referring to FIG. 13, the fixed unit (e.g., the housing 210) may include a recessed portion 89 formed in the lower surface of the lower portion 42 of the fixed unit (e.g., the housing 210). The recessed portion 89 may be depressed from the lower surface of the lower portion 42 of the housing 210. For example, the recessed portion 89 may include a bottom surface 89A and a side surface 89B located between the bottom surface 89A and the lower surface of the lower portion 42. For example, the bottom surface 89A may be a lower surface of the coupling portion 49. For example, the opening 18 may be formed in the bottom surface 89A of the recess portion 89. At least a part of the support member 64 may be disposed in the recess portion 89 in the housing 210.

Referring to FIGs. 4D and 4E, an end of the extension portion 217 of the sensor base 270 may be located higher than the lower surface of the lower portion 42 of the housing 210. In addition, a lower surface of the support member 64 may be located higher than the lower surface of the lower portion 42 of the housing 210.

When viewed from below, the size of the recessed portion 89 may be greater than the size of the support member 64 such that the support member 64 is disposed in the recessed portion 89. Alternatively, the area of the upper surface of the support member 64 may be less than the total area of the opening 18 in the fixed unit (the housing 210). In another embodiment, the recessed portion 89 may be omitted.

The opening 18 may include a through-hole formed through the housing 210 in the optical-axis direction. For example, the opening 18 may include a hole or through-hole formed through the lower portion 42 of the housing 210. For example, the opening 18 may be disposed in the seating portion 69. For example, the opening 18 may be formed in the bottom surface 69A of the seating portion 69. The opening 18 may include a hole formed through the bottom surface 69A of the seating portion 69. For example, the opening 18 may open to the lower surface of the lower portion 42 of the housing 210. For example, the opening 18 may include a first opening 18A and a second opening 18B.

For example, when viewed from above, the opening may include a first opening 18A (or a first hole) located on one side (e.g., the right side (or the upper side)) of the coupling portion 49 and a second opening 18B (or a second hole) located on the other side (e.g., the left side (or the lower side)) of the coupling portion 49.

In the embodiment of FIGs. 4B, 10A, and 10B, the first opening 18A and the second opening 18B communicate with each other, but in another embodiment, the first opening and the second opening may be separated or spaced apart from each other with the coupling portion 49 interposed therebetween. The shape of each of the first opening 18A and the second opening 18B may correspond to or be identical to the shape of the extension portion 217 of the sensor base 270. The opening 18 in the housing 210 may serve as an assembly passage for coupling the support member 64 to the extension portion 217 of the sensor base 270. Therefore, the size, such as the diameter, of the opening 18 may be greater than the size of the support member 64. In this case, the size of the support member 64 may be the length of the support member 64 in a direction perpendicular to the optical axis (the length in the transverse or longitudinal direction).

The moving module (or the tilting module) may include at least a part (or an "extension portion") that is disposed in the opening 18 of the housing 210 or passes through the opening 18 of the housing 210. The at least a part (or the extension portion) of the moving module (or the tilting module) may be connected or coupled to the magnetic material 33. For example, the at least a part (or the extension portion) of the moving module (or the tilting module) may be coupled or connected to the support member 64.

Referring to FIG. 7D, for example, the sensor base 270 may include at least a part (or an "extension portion") 217 that is disposed in the opening 18 of the housing 210 or passes through the opening 18 of the housing 210. The extension portion 217 of the sensor base 270 may extend or protrude from the lower portion or the lower surface of the sensor base 270. The extension portion 217 may alternatively be referred to as a "protrusion," a "guide portion," a "coupling guide portion," or a "coupling portion."

The extension portion 217 may be connected or coupled to a magnetic material 33. For example, the connecting portion 217 may be coupled or connected to the support member 64. For example, the sensor base 217 may include at least one boss 219 for coupling to the support member 64, and the support member 64 may include at least one recess 8, hole, or through-hole for coupling to the boss 219 of the sensor base 270. For example, the recess 8 may be formed in the upper surface of the support member 64.

The sensor base 270 may include two bosses 219A and 219B, but in another embodiment, the number of bosses of the sensor base 270 may be one or three or more. The recess 8 in the support member 64 may include two recesses 8A and 8B, but in another embodiment, the number of recesses 8 in the support member 64 may be equal to the number of bosses of the sensor base 270. In another embodiment, the extension portion 217 of the sensor base 270 may include a boss, and the support member 64 may include a recess, hole, or through-hole corresponding to or coupled to the boss of the extension portion 217.

At least a part of the extension portion 217 may be disposed in the opening 18 of the housing 210. At least a part of the extension portion 217 may be exposed from the opening 18 of the housing 210. For example, the extension portion 217 may include a first extension portion 217A corresponding to, opposite, or overlapping the first opening 18A of the housing 210 and a second extension portion 217B corresponding to, opposite, or overlapping the second opening 18B of the housing 210. For example, at least a part of the first extension portion 217A may be disposed in or pass through the first opening 18A of the housing 210. For example, at least a part of the second extension portion 217B may be disposed in or extend through the second opening 18B of the housing 210.

At least a part of the extension portion 217 may be disposed so as to surround at least a part of each of the bosses 219A and 219B. For example, at least a part of the extension portion 217 may include guide portions 9A and 9B configured to surround at least a part of the boss 219A and at least a part of the boss 219B, respectively. For example, the first extension portion 217A may include a first guide portion 9A that surrounds at least a part of the first boss 219A. The second extension portion 217B may include a second guide portion 9B that surrounds at least a part of the second boss 219B. For example, the guide portions 9A and 9B may be disposed so as to surround at least a part of the support member 64. For example, the first guide portion 9A may be disposed so as to surround a part of the support member 64, and the second guide portion 9B may be disposed so as to surround another part of the support member 64. The guide portions 9A and 9B may guide the coupling between the support member 64 and the extension portion 217 of the sensor base 270. In another embodiment, the extension portion 217 may include a recess in which at least a part of the support member 64 is disposed or seated.

The housing 210 may include a protrusion 215 protruding in a direction perpendicular to the optical axis. For example, the protrusion 215 may protrude from the side portion of the housing 210. For example, the protrusion 215 may protrude from an outer surface of the fourth side portion 71D of the housing 210. For example, the protrusion 215 may be formed by at least a part of the fourth side portion 71D protruding in a direction parallel to a straight line that passes through the optical axis and is perpendicular to the optical axis. For example, the protrusion 215 may include a recess 16A (or a cavity) in which at least a part of the substrate 804 is disposed or received. For example, the recess 16A in the protrusion 215 may include an opening that opens upward.

Referring to FIG. 10A, the recess 16A in the protrusion 215 may be provided with coupling recesses 215A and 215B for insertion, coupling, or fixing of the movement inhibition portion 80. For example, the coupling recesses 215A and 215B may be formed in two facing inner surfaces of the recess 16A in the protrusion 215. For example, the coupling recesses 215A and 215B may extend in the optical-axis direction. For example, for easy insertion or coupling of the movement inhibition portion 80 from above, each of the coupling recesses 215A and 215B may include an opening that opens to an upper surface of the protrusion 215.

The maximum length of the protrusion 215 in the optical-axis direction may be less than the maximum length of the housing 210 in the optical-axis direction. In this configuration, space for the circuit board 800 to extend outward may be easily secured, and a compact camera device may be implemented.

The camera device 200 may include a movement inhibition portion 80 coupled to at least a part of the housing 210. The movement inhibition portion 80 may inhibit movement or motion of at least a part of the substrate 804 to inhibit deformation of the shape of at least a part of the substrate 804.

Referring to FIGs. 7C, 8, and 11A, the substrate 804 of the circuit board 800 may include a first portion 804A (or a "first region") connected to the substrate 801, a second portion 804B connected to the first portion 804A and bent from the first portion 804A, and a third portion 804C connected to the second portion 804B and bent from the second portion 804B. In another embodiment, at least one of the first portion 804A and the second portion 804B may be omitted.

For example, the first portion 804B may extend in a direction parallel to the substrate 801. For example, the second portion 804B may be bent from the first portion 804B and may extend from the first portion 804B in the upward direction. For example, the third portion 804C may extend from the second portion 804B in a direction opposite the first portion 804A.

For example, the substrate 804 may include a first bent portion 804D connecting the first portion 804A and the second portion 804B to each other. In addition, the substrate 804 may include a second bent portion 804E connecting the second portion 804B and the third portion 804C to each other. The first bent portion 804D and the second bent portion 804E may be angled, and for example, the first portion 804A and the second portion 804B may be perpendicular to each other. In another embodiment, the first bent portion 804D and the second bent portion 804E may be round. In another embodiment, the interior angle between the first portion 804A and the second portion 804B may be an acute angle or an obtuse angle.

The first bent portion 804D and the second bent portion 804E may prevent an increase in the length of the camera device 200 in a direction perpendicular to the optical-axis direction. In addition, since the first bent portion 804D and the second bent portion 804E are located between the upper surface of the camera device 200 (e.g., the upper surface of the cover member 300) and the lower surface of the camera device 200 (e.g., the lower surface of the housing 210), an increase in the length of the camera device 200 in the optical-axis direction may be prevented, whereby it is possible to implement miniaturization of the camera device.

For example, the third portion 804C may take the form of a plate or plane perpendicular to the optical axis. For example, the third portion 804C may include a meandering shape or a serpentine shape. For example, the third portion 804C may include at least one bent or curved region. For example, the bent or curved region of the third portion 804C may be bent in the second direction or the third direction, which is perpendicular to the optical axis. Alternatively, the bent or curved region of the third portion 804C may extend in a direction perpendicular to the optical axis. For example, when viewed from above, the third portion 804C may include a region having a U shape or a V shape.

For example, the third portion 804C may be spaced apart from the housing 210. For example, the third portion 804C may be spaced apart from the protrusion 215 of the housing 210. In another embodiment, for example, at least a part of the third portion 804C may be in contact with the protrusion 215 of the housing 210.

At least a part of the second portion 804B of the substrate 804 may be disposed in the protrusion 215 of the housing 210. At least a part of the second portion 804B of the substrate 804 may be disposed in the recess 16A in the protrusion 215 of the housing 210. For example, at least a part of the first portion 804A of the substrate 804 may be disposed in the recess 16A in the protrusion 215 of the housing 210. The third portion 804B of the substrate 804 may be located outside the protrusion 215 of the housing 210. For example, the third portion 804B of the substrate 804 may be located higher than the protrusion 215 of the housing 210. A lower surface of the third portion 804B of the substrate 804 may be located higher than the upper surface of the protrusion 215 of the housing 210.

Referring to FIG. 7A, the sensor base 270 may include a recess 273 formed in the part at which the substrate 804 and the substrate 801 are joined or connected to each other, e.g., at the position corresponding to the first portion 804A of the substrate 804. The recess 273 may be disposed adjacent to or abutting an outer surface of the fourth side portion 51D of the sensor base 270 on which the substrate 804 is disposed. The recess 273 may serve to prevent the first portion 804A of the substrate 804 from being damaged by friction with the sensor base 270.

The connector 805 may be coupled or connected to another external connector of the camera device 200 or to an external device. The connector 805 connected to the other external connector may correspond to a fixed unit that does not move when OIS is performed. Since the third portion 804C of the substrate 804 includes at least one bent or curved region, it is possible to flexibly support the camera device 200 or the OIS moving unit and to cushion external impact. That is, the third portion 804C of the substrate 804 may serve as a spring configured to cushion impact. In addition, since the third portion 804C of the substrate 804 may serve to flexibly support the OIS moving unit 100, it is possible to reduce drive force or drive power required to perform OIS.

Referring to FIGs. 11A and 11B, the camera device 200 may include a reinforcement member 70 or 70-1 disposed on, coupled to, or attached to at least a part of the substrate 804. The reinforcement member 70 or 70-1 may be disposed on, coupled to, or attached to at least one of the first portion 804A and the second portion 804B of the substrate 804. For example, the reinforcement member 70 or 70-1 may be disposed on, coupled to, or attached to at least a part of the first portion 804A of the substrate 804 and at least a part of the second portion 804B of the fourth substrate.

For example, the reinforcement member 70 or 70-1 may be disposed on, coupled to, or attached to a lower surface of the first portion 804A of the substrate 804 and a lower surface of the second portion 804B of the fourth substrate. For example, the reinforcement member 70 or 70-1 may include a first region 70A disposed on, coupled to, or attached to the first portion 804A and a second region 70B disposed on, coupled to, or attached to the second portion 804B. The second region 70B may be bent upward from the first region 70A. For example, a bent portion may be formed between the first region 70A and the second region 70B. For example, the area of the second region 70B may be greater than the area of the first region 70A. In another embodiment, both may be equal, or the area of the former 70B may be less than the area of the latter 70A.

For example, the reinforcement member 70 or 70-1 may be spaced apart from the third portion 804C of the substrate 804. For example, the second region 70B of the reinforcement member 70 or 70-1 may be spaced apart from the third portion 804C of the substrate 804. In another embodiment, at least a part of the second region 70B of the reinforcement member 70 or 70-1 may be in contact with the third portion 804C of the substrate 804.

In another embodiment, the reinforcement member 70 or 70-1 may be disposed on, coupled to, or attached to an upper surface of the first portion 804A of the substrate 804 and an upper surface of the second portion 804B of the fourth substrate. For example, in another embodiment, the reinforcement member 70 or 70-1 may include a first region disposed on the upper surface of the first portion 804A of the substrate 804 and a second region disposed on the upper surface of the second portion 804B of the fourth substrate.

In another embodiment, the reinforcement member 70 or 70-1 may be disposed on, coupled to, or attached to at least a part of the second portion 804B of the substrate 804 and at least a part of the third portion 804C of the fourth substrate. For example, in another embodiment, the reinforcement member 70 or 70-1 may be disposed on, coupled to, or attached to the second portion 804B and the third portion 804C of the substrate 804. For example, the reinforcement member 70 or 70-1 may include a first region disposed on, coupled to, or attached to the second portion 804B of the substrate 804 and a second region disposed on, coupled to, or attached to the third portion 804C, and a bent portion may be formed between the first region and the second region. The first region of the reinforcement member 70 or 70-1 may be disposed on the lower surface (or the upper surface) of the second portion 804B, and the second region of the reinforcement member 70 or 70-1 may be disposed on the lower surface (or the upper surface) of the third portion 804C.

The reinforcement member 70 or 70-1 may prevent the substrate 804 from being damaged, deformed, or broken by impact or external force. In addition, the reinforcement member 70 or 70-1 may serve to inhibit deformation and restoration of the shape of the substrate 804 as the substrate 804 is forced by tilting of the OIS moving unit 100. For example, the reinforcement member 70 or 70-1 may include at least one of a metal material and an injection-molded material.

For example, the reinforcement member 70 or 70-1 may be disposed in the recess 16A in the protrusion 215 of the housing 210. For example, at least a part of the reinforcement member 70 or 70-1 may be in contact with the recess 16A in the protrusion 215 of the housing 210. For example, the reinforcement member 70 or 70-1 may not be coupled to the housing 210 (e.g., the protrusion 215). In another embodiment, for example, the reinforcement member 70 or 70-1 may be coupled to the housing 210 (e.g., the protrusion 215) via an adhesive.

The reinforcement member 70 of FIG. 11A may include an opening 73. The opening 73 in the reinforcement member 70 may open or expose at least a part of the substrate 804 of the circuit board 800. For example, the opening 73 may open or expose at least a part of each of the first portion 804A (or the "first region") and the second portion 804B (or the "second region") of the substrate 804. The opening 73 in the reinforcement member 70 may be a hole, a through-hole, or a hollow.

The opening 73 may be formed in at least one of the first region 70A and the second region 70A of the reinforcement member 70. For example, the opening 73 may be formed in each of the first region 70A and the second region 70A of the reinforcement member 70. In addition, the opening 73 may open or expose at least a part of the first bent portion 804D. In another embodiment, the opening 73 may be formed in only one of the first region 70A and the second region 70A of the reinforcement member 70. In another embodiment, the opening 73 may not expose the first bent portion 804D.

The opening 73 may reduce the elastic modulus of the substrate 804 of the circuit board 800 coupled to the reinforcement member 70, thereby facilitating the movement of the OIS moving unit during OIS operation. That is, the opening 73 may reduce the elastic force of the circuit board 800, e.g., the substrate 804, supporting the OIS moving unit, thereby facilitating OIS operation with less drive force and reducing power consumption. Here, the drive force may be the force resulting from the interaction between the coil 230 and the magnet 310.

In FIG. 8, a gap may be present between the remaining region of the side portion of the housing 210 other than the protrusion 216 and the lower portion of the lens holder 110, and the camera device 200 may include a cover or a shielding portion covering the lower portion of the lens holder 110 and the side portion of the housing 210 in order to prevent introduction of foreign materials. For example, the cover or the shielding portion may be a piece of adhesive tape.

Referring to FIGs. 1, 10A, and 10B, the movement inhibition portion 80 may be coupled to the protrusion 215 of the housing 210. For example, the movement inhibition portion 80 may be coupled to the coupling recesses 215A and 215B in the protrusion 215 of the housing 210.

Referring to FIG. 3, at least a part of the second portion 804B of the substrate 804 may be disposed between the movement inhibition portion 80 and an inner surface of the protrusion 215 of the housing 210. For example, at least a part of the reinforcement member 70 may be disposed between the movement inhibition portion 80 and the inner surface of the protrusion 215 of the housing 210. The movement inhibition portion 80 may be spaced apart from the circuit board 800 in the second direction (the X-axis direction) or the third direction (the Y-axis direction). For example, the movement inhibition portion 80 may be disposed spaced apart from the circuit board 800 in the optical-axis direction or in a direction perpendicular to the optical-axis direction. That is, the movement inhibition portion 80 may serve to maintain the shape of the bent portions 804D and 804E of the substrate 804, which is a flexible substrate. For example, the movement inhibition portion 80 may be formed by injection-molding a non-magnetic material or a resin. In another embodiment, the movement inhibition portion 80 may be in contact with at least a part of the substrate 804 of the circuit board 800.

Movement or motion of at least a part of the second portion 804B of the substrate 804 disposed in the recess 16A in the protrusion 215 may be restricted by the movement inhibition portion 80, and the second portion 804B may be inhibited or prevented from moving out of the recess 16A in the protrusion 215. This may inhibit or prevent the OIS moving unit from being affected by restoring force of the substrate 804 when OIS is performed, thereby enabling OIS to be accurately performed and improving reliability of OIS operation. The movement inhibition portion 80 may alternatively be referred to as a "clamp."

The cover member 300 may form a receiving space with the housing 210, and the OIS moving unit may be disposed in the receiving space. For example, the cover member 300 may take the form of a box having an open lower portion. For example, the cover member 300 may include an upper plate 301 and a side plate 302 connected to the upper plate 301.

A lower end of the side plate 302 of the cover member 300 may be coupled to the housing 210. The shape of the upper plate 301 of the cover member 300 may be polygonal (e.g., quadrangular or octagonal) or circular. The upper plate 301 of the cover member 300 may include an opening 303 configured to expose the lens (not shown) to external light. The opening 303 may be a through-hole formed through the upper plate 301 of the cover member 300 in the optical-axis direction. For example, the cover member 300 may include a plurality of side plates. The material of the cover member 300 may be a non-magnetic material. In another embodiment, the cover member 300 may be made of a magnetic material. For example, the material of the cover member 300 may be an injection-molded material, such as a resin, or a metal material.

Referring to FIGs. 1 and 2A, the cover member 300 may include an opening 304 disposed or formed in the side plate 302 to avoid spatial interference with the protrusion 215 of the housing 210. For example, the protrusion 216 of the housing 210 may pass through the opening 304 of the cover member 300 and may protrude from the side plate 302 of the cover member 300.

The cover member 300 may include a protrusion 305 disposed above the opening 304 and protruding from the side plate 302. For example, the protrusion 305 may be in the shape of a plate. For example, the protrusion 305 of the cover member 300 may be disposed on the protrusion 215 of the housing 210. For example, the protrusion 305 may be disposed above the recess 16A in the protrusion 215 of the housing 210. For example, the protrusion 305 may be disposed above the movement inhibition portion 80. For example, the protrusion 305 may overlap the movement inhibition portion 80 in the optical-axis direction. In addition, for example, the protrusion 305 may overlap the first portion 804A of the substrate 804 in the optical-axis direction. The protrusion 305 may inhibit or prevent separation of the movement inhibition portion 80, and may protect the movement inhibition portion 80 and the substrate 804 from impact.

Next, the support unit will be described.

The support unit may be disposed between the fixed unit and the OIS moving unit 100. The support unit may be disposed between the sensor base 270 and the housing 210, and may support the sensor base 270 with respect to the housing 210. The support unit may include a tilting guide unit 60 disposed between the OIS moving unit (e.g., the sensor base 270) and the fixed unit (e.g., the housing 210). The tilting guide unit 60 may guide tilting of the OIS moving unit 100.

The tilting guide unit 60 may alternatively be referred to as a driving plate, a "mover," a "mover plate," a "drive plate," a "plate," a "rotating plate," a "tilting plate," a "moving plate," or a "support plate."

The tilting guide unit 60 may be tiltable about the first axis or the second axis or rotatable by a predetermined angle. For example, the tilting guide unit 60 may be disposed between the lower portion (or the lower surface) of the sensor base 270 and the lower portion 42 of the housing 210. For example, at least a part of the tilting guide unit 60 may be disposed in the seating portion 69 of the housing 210. Since the tilting guide unit 60 is disposed in the seating portion 69 of the housing 210, the length or height of the camera device 200 in the optical-axis direction may be reduced.

Referring to FIGs. 4B, 9A, and 12, the tilting guide unit 60 may be plate-shaped. The tilting guide unit 60 may include a body. The body may alternatively be referred to as a main body or a "plate portion." When viewed from above, the shape of the body of the tilting guide unit 60 may be polygonal (e.g., quadrangular), circular, or oval. When viewed from above, the shape of the body of the tilting guide unit 60 may be quadrangular, and corner (or edge) portions of the body may be round.

The length of the tilting guide unit 60 in a horizontal direction perpendicular to the optical axis (e.g., in the transverse direction or the longitudinal direction) may be greater than the length of the tilting guide unit 60 in the optical-axis direction. The tilting guide unit 60 may include a first guide member disposed on a first surface (or an upper surface) 6A opposite the OIS moving unit (e.g., the sensor base 270) and a second guide member disposed on a second surface (or a lower surface) 6B opposite the fixed unit (e.g., the housing 210).

The first guide member may be provided in one or more, and the second guide member may be provided in one or more. For example, the first axis may be formed by the first guide member, and the second axis may be formed by the second guide member. For example, the first guide member may include a plurality of first guide members spaced apart from each other in a direction parallel to the first axis. The second guide member may include a plurality of second guide members spaced apart from each other in a direction parallel to the second axis. For example, the first axis may be formed by the plurality of first guide members, and the second axis may be formed by the plurality of second guide members. The first guide member may be a "boss," a "protrusion," a "ball member," or a "ball," and the second guide member may be a "boss," a "protrusion," a "ball member," or a "ball."

Referring to FIGs. 9A and 9B, the tilting guide unit 60 may include a first boss 65 coupled to the sensor base 270 or in contact with the sensor base 270 and a second boss 66 coupled to the housing 210 or in contact with the housing 210. The first boss 65 may be disposed on the first surface 6A (e.g., the upper surface) of the tilting guide unit 60, and the second boss 66 may be disposed on the second surface 6B (or the lower surface) of the tilting guide unit 60, which is opposite the first side 6A. For example, the first boss 65 may protrude from the first surface 6A (e.g., the upper surface) of the tilting guide unit 60, and the second boss 66 may protrude from the second surface 6B (e.g., the lower surface) of the tilting guide unit 60.

The first boss 65 may alternatively be referred to as an "upper boss (or a front boss)" or a "first protrusion," and the second boss 66 may alternatively be referred to as a "lower boss (or a rear boss)" or a "second protrusion." The number of each of the first boss 65 and the second boss 66 may be one, two, or three or more.

At least a part of the first boss 65 may be disposed in the recess 29 in the sensor base 270. The first boss 65 may include at least two bosses 65A and 65B. For example, the 1-1 boss 65A and the 1-2 boss 65B may be disposed spaced apart from each other in the first-axis direction. Each of the two bosses 65A and 65B may be inserted into and disposed in a corresponding one of the first and second recesses 29A and 29B in the sensor base 270. In another embodiment, the two bosses 65A and 65B may be disposed spaced apart from each other in the first horizontal direction or the X-axis direction.

At least a part of the second boss 66 may be disposed in the recess 55 in the housing 210.

The second boss 66 may include at least two bosses 66A and 66B. For example, the 2-1 boss 66A and the 2-2 boss 66B may be disposed spaced apart from each other in the second-axis direction. Each of the two bosses 66A and 66B may be inserted into and disposed in a corresponding one of the first and second recesses 55A and 55B in the housing 210. In another embodiment, the two bosses 66A and 66B may be disposed spaced apart from each other in the second horizontal direction or the Y-axis direction.

In another embodiment, the two bosses 65A and 65B of the tilting guide unit 60 may be disposed spaced apart from each other in the second-axis direction, the first and second recesses 29A and 29B in the sensor base 270 may be disposed spaced apart from each other in the second-axis direction, the two bosses 66A and 66B of the tilting guide unit 60 may be disposed spaced apart from each other in the first-axis direction, and the first and second recesses 55A and 55B in the housing 210 may be disposed spaced apart from each other in the first-axis direction.

For example, each of the first boss 65 and the second boss 66 may have a curved shape, a hemispherical shape, a dome shape, or a polyhedral shape, but the present disclosure is not limited thereto. For example, the shape of the first boss 65 when viewed from the front or above and the shape of the second boss 66 when viewed from the rear or below may be circular, oval, or polygonal.

The tilting guide unit 60 may include an opening 60A corresponding to, opposite, or overlapping the magnetic material 31 and/or the magnetic material 33 in the optical-axis direction. For example, the opening 60A may correspond to, be opposite, or overlap the coupling portion 49 of the housing 210 in the optical-axis direction. The weight of the tilting guide unit 60 may be reduced by the opening 60A, which may result in a lighter camera device 200.

For example, the opening 60A of the tilting guide unit 60 may be disposed at the position corresponding to the coupling portion 49 of the housing 210 in order to avoid spatial interference with the coupling portion 49. In addition, the opening 60A of the tilting guide unit 60 may be formed to avoid spatial interference with the magnetic material 31 and the coupling portion 49 of the housing 210.

For example, the opening 60A of the tilting guide unit 60 may be a through-hole or a hollow. For example, the opening 60A may be formed through the tilting guide unit 60 in the first direction (the Z-axis direction) or the optical-axis direction. For example, at least a part of the opening 60A of the tilting guide unit 60 may include a shape corresponding to the coupling portion 49 of the housing 210. For example, the opening 60A may include a circular shape, an oval shape, and a polygonal shape, such as a quadrangular shape.

When viewed from above, the opening 60A of the tilting guide unit 60 may be disposed between the bosses 65A and 65B of the tilting guide unit 60. When viewed from below, the opening 60A of the tilting guide unit 60 may be disposed between the bosses 66A and 66B of the tilting guide unit 60.

For example, the transverse length of the opening 60A of the tilting guide unit 60 may be greater than the transverse length of the coupling portion 49 of the housing 210. In another embodiment, the transverse length of the opening 60A may be equal to the transverse length of the coupling portion 49 of the housing 210. The longitudinal length of the opening 60A may be greater than the longitudinal length of the coupling portion 49 of the housing 210. In another embodiment, the longitudinal length of the opening 60A may be equal to the longitudinal length of the coupling portion 49 of the housing 210.

At least a part of the coupling portion 49 of the housing 210 may be disposed in the opening 60A of the tilting guide unit 60. For example, the coupling portion 49 of the housing 210 may overlap the opening 60A of the tilting guide unit 60 in the optical-axis direction. In addition, for example, the coupling portion 49 of the housing 210 may overlap the tilting guide unit 60 in a direction perpendicular to the optical-axis direction. This may reduce the length or height of the camera device 200 in the optical-axis direction.

For example, at least a part of the opening 60A may be disposed between the two bosses 65A and 65B of the first boss 65 of the tilting guide unit 60. In addition, at least a part of the opening 60A may be disposed between the bosses 66A and 66B of the second boss 66 of the tilting guide unit 60.

For example, the tilting guide unit 60 may be made of an injection-molded material. For example, the tilting guide unit 60 may be made of a plastic, resin, or ceramic material. In another embodiment, the tilting guide unit 60 may include a metal material, such as SUS. In addition, the tilting guide unit 60 may be made of a non-magnetic material. In another embodiment, the tilting guide unit 60 may be made of a magnetic material.

The bosses 65A and 65B of the first boss 65 and the bosses 66A and 66B of the second boss 66 may be disposed side by side in directions that intersect or are perpendicular to each other. The first boss 65 of the tilting guide unit 60 may rotate, pivot, or tilt the OIS moving unit about the first axis by a predetermined angle. The second boss 66 of the tilting guide unit 60 may rotate, pivot, or tilt the OIS moving unit about the second axis.

In another embodiment, at least one of the first boss 65 and the second boss 66 of the tilting guide unit 60 may be omitted, and a rolling member or a ball member may be disposed in place of the omitted boss.

Referring to FIGs. 9C and 9D, a tilting guide unit 60-1 according to another embodiment may include a first recess 75 with the first boss 65 omitted, and may include a second recess 76 with the second boss 66 omitted. In addition, the support unit may include a first ball member in place of the first boss 65, and may include a second ball member in place of the second boss 66. For example, the first ball member may include two or more first ball members 65A1 and 65B1, and the second ball member may include two or more ball members 66A1 and 66B1.

The first recess 75 may be disposed or formed in a first surface 6A of the tilting guide unit 60-1. The first surface 6A may be a surface opposite or facing the sensor base 270. The recess 75 may be depressed from the first surface 6A of the tilting guide unit 60-1. For example, the tilting guide unit 60-1 may include first recesses 75A and 75B in which at least a part of the first ball member 65A1 and at least a part of the first ball member 65B1 are disposed, respectively. For example, the first recesses 75A and 75B may be disposed spaced apart from each other in the first-axis direction. For example, the first ball members 65A1 and 65B1 may be disposed spaced apart from each other in the first-axis direction.

In another embodiment, the first ball members 65A1 and 65B1 may be disposed spaced apart from each other in the second-axis direction, and the first recesses 75A and 75B may be disposed spaced apart from each other in the second-axis direction.

In another embodiment, the first ball members 65A1 and 65B1 and the first recesses 75A and 75B may be disposed spaced apart from each other in the first horizontal direction (or the second horizontal direction).

In addition, the second recess 76 in the tilting guide unit 60-1 may be disposed or formed in a second surface 6B of the tilting guide unit 60-1. The second surface 6B may be a surface opposite or facing the housing 210. In addition, the second surface 6B may be a surface opposite the first surface 6A of the tilting guide unit 60-1. The second recess 76 may be depressed from the second surface 6B of the tilting guide unit 60.

For example, the tilting guide unit 60-1 may include second recesses 76A and 76B in which at least a part of the second ball member 66A1 and at least a part of the second ball member 66B1 are disposed, respectively. For example, the second recesses 76A and 76B may be disposed spaced apart from each other in the second-axis direction. For example, the second ball members 66A1 and 66B1 may be disposed spaced apart from each other in the second-axis direction. In another embodiment, the second ball members 66A1 and 66B1 may be disposed spaced apart from each other in the first-axis direction, and the second recesses 76A and 76B may be disposed spaced apart from each other in the first-axis direction. In another embodiment, the second ball members 66A1 and 66B1 and the second recesses 76A and 76B may be disposed spaced apart from each other in the second horizontal direction (or the first horizontal direction).

A description of the shape of the recess 29 in the sensor base 270 or the recess 55 in the housing 210 may be applied or analogically applied to the shape of the first recess 75 and the second recess 76 in the tilting guide unit 60-1.

A lubricant may be disposed on the first boss 66 of the tilting guide unit 60 and in the recess 29 in the sensor base 270 or the second boss 66 of the tilting guide unit 60 and in the recess 55 in the housing 210 in order to reduce frictional force and to protect the tilting guide unit 60.

The first boss 65 of the tilting guide unit 60 may slide in the recess 29 in the sensor base 270, and the second boss 66 may slide in the recess 55 in the housing 210. As a result, it is possible to reduce frictional force between the tilting guide unit 60 and the sensor base 270 and/or frictional force between the tilting guide unit 60 and the housing 210 and to reduce current consumption or power consumption necessary for OIS operation.

The support unit may include a magnetic material 33 disposed on the OIS moving unit (e.g., the sensor base 270) and a magnetic material 31 disposed on the fixed unit (e.g., the housing 210). Each of the magnetic materials 31 and 33 may alternatively be referred to as a "magnet," a "yoke," or a "holding magnet." The support unit may further include a support member 64.

For example, the magnetic material 31 may be disposed in the recess 49A in the coupling portion 49 of the housing 210 or coupled to the recess 49A. At least a part of the magnetic material 31 may be disposed in the opening 60A of the tilting guide unit 60. For example, the magnetic material 31 may be opposite or may overlap the opening 60A of the tilting guide unit 60 in the optical-axis direction. For example, the magnetic material 31 may not overlap the tilting guide unit 60 in the optical-axis direction. In addition, for example, at least a part of the magnetic material 31 may overlap the tilting guide unit 60 in a direction perpendicular to the optical axis. For example, the magnetic material 31 may overlap the tilting guide unit 60 in a direction parallel to the first axis or a direction parallel to the second axis. The magnetic material 31 may correspond to, be opposite, or overlap the magnetic material 33 in the optical-axis direction. The magnetic material 31 may be disposed opposite the magnetic material 33.

The magnetic material 31 may be a two-pole magnet with an N pole and an S pole separated or disposed. For example, the magnetic material 31 may be a two-pole magnet with an N pole and an S pole separated or disposed in the optical-axis direction. In another embodiment, the magnetic material 31 may be a two-pole magnet with an N pole and an S pole separated or disposed in a direction perpendicular to the optical-axis direction. In another embodiment, the magnetic material 31 may be a four-pole magnet including two N poles and two S poles.

The support member 64 may be coupled or assembled to the OIS moving unit. For example, the support member 64 may be coupled to the sensor base 270 or assembled to the sensor base 270. For example, the support member 64 may be coupled to the extension portion 217 of the sensor base 270 or assembled to the extension portion 217. For example, the support member 64 may be coupled to the extension portion 217 of the sensor base 270 by an adhesive.

The support member 64 may alternatively be referred to as a "magnetic material support member," a "sensor base rigid," a "support portion," a "mover rigid," a "holding rigid," a "coupling portion," or a "plate." For example, the support member 64 may be made of an injection-molded material, plastic, or a resin material. Alternatively, for example, the support member 64 may be made of a metal material or a metal plate. Alternatively, the support member 64 may be made of a heat dissipation member. The support member 64 may have a polyhedral shape (e.g., a hexahedron). The support member 64 may have a plate shape. For example, when viewed from above or in the optical-axis direction, the support member 64 may have a polygonal shape, e.g., a quadrangular shape. For example, when viewed from above or in the optical-axis direction, the support member 64 may be rectangular, square, circular, or oval.

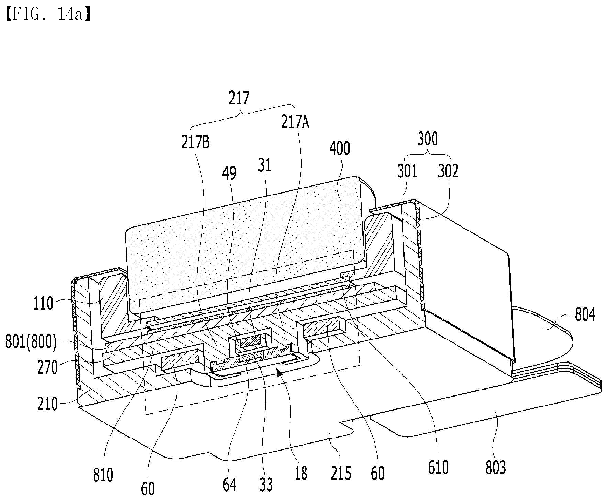

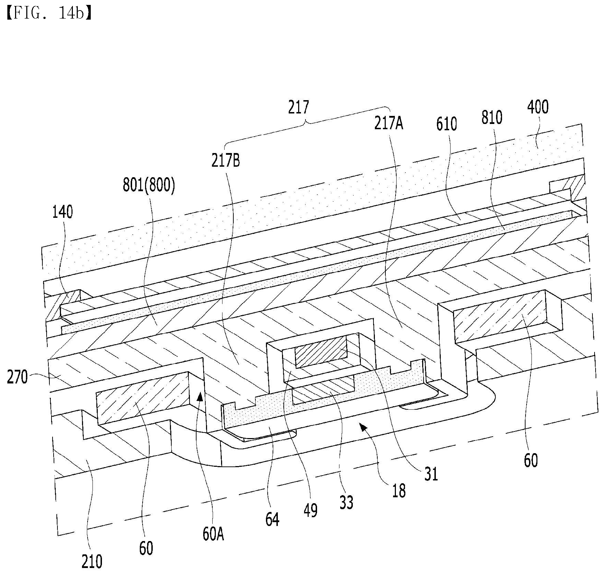

FIG. 14A is a cutaway perspective view of the camera device 200, and FIG. 14B is an enlarged view of a dotted part in FIG. 14A.

Referring to FIGs. 14A and 14B, the support member 64 may be disposed spaced apart from the tilting guide unit 60. The support member 64 may be located under the tilting guide unit 60 (or the body of the tilting guide unit 60). The image sensor 801 may be located closer to the magnetic material 31 than to the magnetic material 33.

At least a part of the support member 64 may overlap the magnetic material 31 in the optical-axis direction. At least a part of the support member 64 may overlap the magnetic material 33 in the optical-axis direction. The support member 64 may overlap the opening 60A of the tilting guide unit 60 in the optical-axis direction. The support member 64 may be located under the opening 60A of the tilting guide unit 60. The support member 64 may not overlap the tilting guide unit 60 in the optical-axis direction. The support member 64 may correspond to, be opposite, or overlap the extension portion 217 of the sensor base 270 in the optical-axis direction. For example, the support member 64 may not overlap the body of the tilting guide unit 60 in a direction perpendicular to the optical-axis direction. A lower surface of the support member 64 may be located higher than the lower surface of the lower portion 42 of the housing 210. In another embodiment, the lower surface of the support member 64 may be located lower than the lower surface of the lower portion 42 of the housing 210 or may be located at the same height as the lower surface of the lower portion 42 of the housing 210.

For example, the support member 64 may not overlap the magnet 310 and/or the coil 230 in the optical-axis direction. The support member 64 may overlap the image sensor 810 in the optical-axis direction.

The moving module may include a part (or a "first portion") that passes through the opening 60A of the tilting guide unit 60 or is disposed in the opening 60A of the tilting guide unit 60. The magnetic material 33 may be coupled to the part (or the "first portion") of the moving module. For example, the magnetic material 33 may be coupled to the first portion of the moving module by an adhesive. For example, the sensor base 270 may include the first portion.

The support member 64 may be coupled to the first portion of the moving module. The magnetic material 33 may be disposed on the support member 64. For example, the "first portion" of the moving module may be the extension portion 217 of the sensor base 270. The fixed unit may include an opening 18 in which the first portion of the moving module is disposed.

At least a part of the extension portion 217 of the sensor base 270 may correspond to, be opposite, or overlap the opening 60A of the tilting guide unit 60 in the optical-axis direction. For example, the extension portion 217 may not overlap the tilting guide unit 60 in the optical-axis direction. In another embodiment, a part of the extension portion 217 may overlap the tilting guide unit 60 in the optical-axis direction.

At least a part of the extension portion 217 may be disposed in the opening 60A of the tilting guide unit 60. For example, at least a part of the extension portion 217 may pass through the opening 60A of the tilting guide unit 60. For example, at least a part of the extension portion 217 may pass through or penetrate the opening 60A of the tilting guide unit 60 and may be coupled to the support member 64. That is, as shown in FIGs. 4B and 14B, an end of the extension portion 217 may be located lower than the lower surface of the tilting guide unit 60.

In another embodiment, the end of the extension portion 217 may be located in the opening 60A of the tilting guide unit 60. For example, the end of the extension portion 217 may be disposed between the upper surface and the lower surface of the tilting guide unit 60.

In the embodiment of FIG. 7D, the extension portion 217 may correspond to a part of the sensor base 270 and may be integrally formed with the sensor base 270. A camera device according to another embodiment may include a coupling member separate from the sensor base 270 instead of the extension portion 217. In this case, the separate coupling member may be coupled to the sensor base 270. For example, the coupling member may be coupled to the sensor base 270 by an adhesive. For example, the coupling member may include a first coupling structure (e.g., a boss or a recess), and the sensor base 270 may include a second coupling structure (e.g., a recess or a boss) for coupling to the first coupling structure. For example, one end of the coupling member may be coupled to the lower portion (or the lower surface) of the sensor base 270, and the other end of the coupling member may be coupled to the support member 64. At least a part of the coupling member may be disposed in the opening 60A of the tilting guide unit 60. The coupling member may pass through the opening 60A of the tilting guide unit 60 and may be coupled to the support member 64. In this case, the sensor base 270 may not include a part located in the opening 60A of the tilting guide unit 60.

In the embodiment, the support member 64 may be coupled to the extension portion 217 of the sensor base 270 that has passed through the opening 60A of the tilting guide unit 60, and does not overlap the body of the tilting guide unit 60 in the optical-axis direction. That is, the size of the support member 64 may be reduced, and the shape thereof may be simplified.

In a camera device according to a comparative example, the support member may overlap at least a part of the tilting guide unit in the optical-axis direction, and the support member may include an extension portion extending to at least one corner portion of the housing.

A space is required between the sensor base 270 and the housing 210 for the moving unit (e.g., the sensor base 270) to tilt about the first axis or the second axis. In the comparative example, the extension portion of the support member may increase the space required for the sensor base 270 to tilt about the first axis or the second axis.

Conversely, in the embodiment, the support member 64 may have a simple structure that does not overlap the tilting guide unit 60 in the optical-axis direction. In the embodiment, the size of the support member 64 may be designed to be small. Furthermore, in the embodiment, the end of the support member 64 may be disposed closer to the optical axis or the center or a central region of the tilting module than to the corner of the housing 210. Consequently, compared to the comparative example, the embodiment may reduce the space required for tilting the sensor base, which is the OIS moving unit, for hand-tremor compensation, and may reduce the size of the camera device.

The magnetic material 33 may be disposed under the magnetic material 31. The magnetic material 31 may be located higher than the magnetic material 33. The magnetic material 33 may be disposed on the support member 64. The magnetic material 33 may be coupled to the support member 64. Referring to FIG. 7A, the support member 64 may include a seating portion 93A (or a receiving portion). The seating portion 93A may be a recess. For example, the seating portion 93A may be a recess depressed from the upper surface of the support member 64. For example, the magnetic material 33 may be coupled to the seating portion 93A of the support member 64. For example, the magnetic material 33 may be coupled, attached, or fixed to the seating portion 93A of the support member 64 by an adhesive. The magnetic material 33 may overlap the opening 60A of the tilting guide unit 60 in the optical-axis direction. The magnetic material 33 may not overlap the tilting guide unit 60 in the optical-axis direction.

Referring to FIGs. 14A and 14B, the magnetic material 33 may not overlap the tilting guide unit 60 in a direction perpendicular to the optical axis. In another embodiment, the magnetic material 33 may overlap the tilting guide unit 60 in a direction perpendicular to the optical axis. When viewed from above, the area of the opening 60A of the tilting guide unit 60 may be greater than the area of the upper surface (or the lower surface) of the magnetic material 31. In addition, when viewed from above, the area of the opening 60A of the tilting guide unit 60 may be greater than the area of the upper surface (or the lower surface) of the magnetic material 33.

Repulsive force may act between the magnetic material 33 and the magnetic material 31 in the optical-axis direction (or the first direction). The magnetic material 33 and the magnetic material 31 may be disposed such that repulsive force acts therebetween. The magnetic material 33 may be a material with magnetic properties. For example, the magnetic material 33 may be a metal material with magnetic properties. Alternatively, for example, the magnetic material 33 may be a magnetized metal material. Alternatively, for example, the magnetic material 33 may be a magnet. Each of the magnetic materials 31 and 33 may alternatively be referred to as a "yoke." The magnetic materials 33 and 31 may be referred to as "repulsive magnets."

For example, the magnetic material 33 and the magnetic material 31 may be disposed such that surfaces facing or opposite each other in the optical-axis direction have the same polarity. For example, an N pole (or an S pole) of the magnetic material 33 and an N pole (or an S pole) of the magnetic material 31 may face or be opposite each other in the optical-axis direction.

For example, a first surface of the magnetic material 33 and a first surface of the magnetic material 31 may face each other, and the first surface of the magnetic material 33 and the first surface of the magnetic material 31 may have the same polarity. For example, a second surface of the magnetic material 33 may be a surface opposite the first surface of the magnetic material 33, a second surface of the magnetic material 31 may be a surface opposite the first surface of the magnetic material 31, and the second surface of the magnetic material 33 and the second surface of the magnetic material 31 may have the same polarity.

Referring to FIGs. 14A and 14B, the coupling portion 49 of the housing 210 may be disposed between the sensor base 210 and the support member 64. The coupling portion 49 and the magnetic material 31 may be positioned between the sensor base 270 and the magnetic material 33 disposed on the support member 64. The coupling portion 49 of the housing 210 and the magnetic material 33 may be opposite or overlap each other in the optical-axis direction. The coupling portion 49 of the housing 210 and the support member 64 may overlap each other in the optical-axis direction.

The image sensor 810 or the filter 610 may be located closer to the magnetic material 31 than to the magnetic material 33. That is, the magnetic material 31, which is one of the magnetic material 31 and the magnetic material 33, may be disposed closer to the image sensor 810. For example, the lower surface of the lower portion 42 of the housing 210 may be located closer to the magnetic material 33 than to the magnetic material 31. For example, the support member 64 and the magnetic material 33 may be located under the tilting guide unit 60.

The tilting guide unit 60 may be brought into tight contact with the OIS moving unit and the fixed unit by the repulsive force acting between the magnetic material 33 and the magnetic material 31. The tilting guide unit 60 may be pressed against the moving unit by the repulsive force acting between the magnetic material 33 and the magnetic material 31.

The lower surface of the sensor base 270 may press the first boss 65 of the tilting guide unit 60 due to the repulsive force acting between the magnetic material 33 and the magnetic material 31. The lower portion 42 of the housing 210 may press the boss 66 of the tilting guide unit 60 due to the repulsive force acting between the magnetic material 33 and the magnetic material 31. As a result, the first boss 65 and the second boss 66 of the tilting guide unit 60 may be brought into tight contact with the sensor base 270 and/or the housing 210. The tilting guide unit 60 may stably support the OIS moving unit 100 with respect to the fixed unit due to the repulsive force between the magnetic material 33 and the magnetic material 31, whereby stable OIS operation may be performed.

In addition, since at least a part of the magnetic material 31 is disposed in the opening 60A of the tilting guide unit 60, the distance between the magnetic material 31 and the magnetic material 33 may be reduced, which may increase the repulsive force between the magnetic material 31 and the magnetic material 33, the OIS moving unit may be stably supported with respect to the fixed unit, and stable OIS operation may be performed.

In addition, since the magnetic material 31 is disposed on the coupling portion 49 corresponding to or opposite a central region of the lower portion 42 of the housing 210 and the magnetic material 33 is disposed on a region of the support member 64 corresponding to or opposite a central region of the lower surface of the sensor base 270, the repulsive force between the magnetic material 31 and the magnetic material 33 may be concentrated on the central region of the sensor base 270 and the central region of the housing 210, which may efficiently and stably support the OIS moving unit.

In another embodiment, the coupling portion 49 of the housing 210 may be omitted, and the magnetic material 31 may be disposed on the upper surface of the lower portion 42 of the housing 210. In addition, the seating portion 69 of the housing 210 may be omitted, a seating portion corresponding to or identical to the seating portion 69 of the housing 210 may be formed on the lower surface of the sensor base 270, and the tilting guide unit 60 may be disposed in the seating portion of the sensor base 270.

In another embodiment, the tilting guide unit 60 may be omitted, and the support unit may include a rolling member, such as a ball member, disposed between the sensor base 270 and the housing 210. In this case, the rolling member may include two first ball members disposed in a direction parallel to the first axis and two second ball members disposed in a direction parallel to the second axis, and the OIS moving unit may be tilted about the first ball members as an axis or may be rotated by a predetermined angle, and may be tilted about the second ball members as an axis or may be rotated by a predetermined angle, whereby a hand-tremor compensation operation may be performed.

Referring to FIGs. 12 and 16A, when viewed from above, the first magnet unit 310A may overlap the bosses 65A and 65B of the tilting guide unit 60 in the direction in which the bosses 65A and 65B face each other or the first-axis direction. In addition, the second magnet unit 310B may overlap the bosses 65A and 65B of the tilting guide unit 60 in the direction in which the bosses 66A and 66B face each other or the second-axis direction.

Referring to FIGs. 4D and 4E, the tilting guide unit 60 may overlap the magnet 310 in a direction perpendicular to the optical axis. For example, the first magnet unit 310A may overlap the tilting guide unit 60 in the first-axis direction, and the second magnet unit 310B may overlap the tilting guide unit 60 in the second-axis direction.

For example, the magnet 310 and the yoke 380 may be disposed under the image sensor 810. For example, the magnet 310 may be disposed under the filter 610. In addition, the magnet 310 may be disposed under the magnetic material 33. For example, the magnet 310 may be located lower than the lens holder 110. For example, the magnet 310 may be disposed under the sensor base 270. For example, an upper surface of the magnet 310 may be located lower than the lower surface of the sensor base 270. The upper surface of the magnet 310 may be located lower than the lower surface of the lens holder 110. The upper surface of the magnet 310 may be located lower than the lower surface of the magnetic material 33.

Referring to FIG. 4F, for example, the upper surface of the magnet 310, such as the upper surfaces of the magnet units 310A and 310B, may be located lower than an upper surface of the magnetic material 31. In another embodiment, the upper surface of the magnet 310 may be located higher than the upper surface of the magnetic material 31 or flush with the upper surface of the magnetic material 31.

For example, the upper surface of the magnet 310, such as the upper surfaces of the magnet units 310A and 310B, may be located lower than the lower surface of the magnetic material 31. In another embodiment, the upper surface of the magnet 310 may be located higher than the lower surface of the magnetic material 31 or flush with the lower surface of the magnetic material 31. For example, the support member 64 and the magnetic material 33 may be located lower than the coupling portion 49 of the housing 210.

Referring to FIG. 12, for example, the first magnet unit 310A and the second magnet unit 310B may have the same shape and size. The length L2 of the first magnet unit 310A in the first-axis direction may be less than the length L1 of the first magnet unit 310A in the second-axis direction. The length of the second magnet unit 310B in the second-axis direction may be less than the second length of the second magnet unit 310B in the first-axis direction. The length of the first magnet unit 310A in the optical-axis direction may be less than the length L2 of the first magnet unit 310A (or the second magnet unit 310B). In another embodiment, the length of the first magnet unit 310A (or the second magnet unit 310B) in the optical-axis direction may be equal to or greater than the length L2 of the first magnet unit 310A (or the second magnet unit 310B).

For example, the length L1 of the first magnet unit 310A (or the second magnet unit 310B) may be less than the length of the tilting guide unit 60 in the second direction (the X-axis direction) or the third direction (the Y-axis direction). For example, the length L1 of the first magnet unit 310A (or the second magnet unit 310B) may be greater than the length M1 between an outer circumferential surface and an inner circumferential surface of the tilting guide unit 60. For example, M1 may be the shortest distance between the outer surface of the tilting guide unit 60 and the opening 60A of the tilting guide unit 60. In another embodiment, L1 may be equal to or less than M1.

For example, the length L1 of the first magnet unit 310A (or the second magnet unit 310B) may be less than the length of the opening 60A of the tilting guide unit 60 in the first-axis direction or the second-axis direction. The length L1 of the first magnet unit 310A (or the second magnet unit 310B) may be less than the length of the opening 60A of the tilting guide unit 60 in the second direction or the third direction. In another embodiment, L1 may be greater than or equal to the length of the opening 60A in the first-axis direction or the second-axis direction. Alternatively, L1 may be greater than or equal to the length of the opening 60A of the tilting guide unit 60 in the second direction or the third direction.

Referring to FIGs. 9A, 9B, and 12, the shortest distance L3 between the first bosses 65A and 65B may be greater than the length L1. The shortest distance L4 between the second bosses 66A and 66B may be greater than the length L1. For example, L3 and L4 may be equal to each other. In another embodiment, L3 and L4 may differ from each other. A description of L3 and L4 may be applied or analogically applied to the first ball members 65A1 and 65B1 and the second ball members 66A1 and 66B1 shown in FIGs. 9C and 9D.

For example, the upper surface of the magnet 310 may be located lower than the upper surface of the coupling portion 49 of the housing 210. This serves to ensure that there is sufficient space to avoid spatial interference between the magnet 310 and the lower surface of the sensor base 270. In another embodiment, the upper surface of the magnet 310 may be located higher than the upper surface of the coupling portion 49 of the housing 210. In another embodiment, the upper surface of the magnet 310 and the upper surface of the coupling portion 49 of the housing 210 may be flush with each other. For example, the upper surface of the magnet 310 may be located lower than the highest point of the first boss 65 of the tilting guide unit 60.

When viewed from above or in the optical-axis direction, the bosses 65A and 65B, the magnetic material 31, and the first magnet unit 310A may overlap each other in the first-axis direction. When viewed from above or in the optical-axis direction, the bosses 66A and 66B, the magnetic material 31, and the second magnet unit 310B may overlap each other in the second-axis direction.

When viewed from above or in the optical-axis direction, the magnet 310 may not overlap the magnetic material 31 in the second direction (the X-axis direction) or the third direction (the Y-axis direction).

In another embodiment, when viewed from above or in the optical-axis direction, the magnet 310 may overlap the magnetic material 31 in the second direction (the X-axis direction) or the third direction (the Y-axis direction).

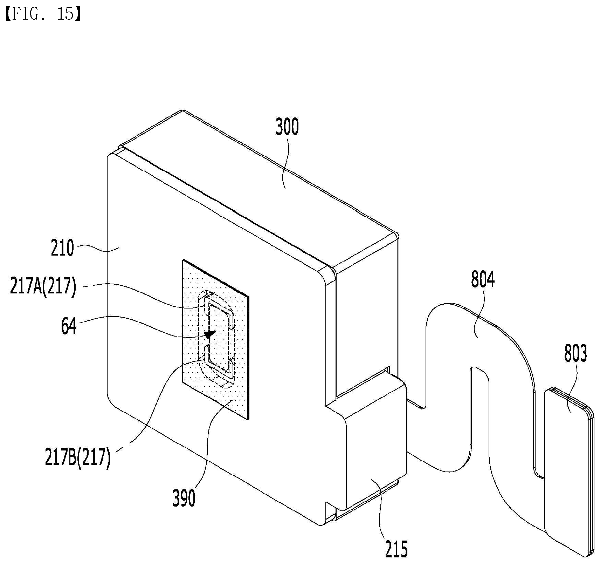

FIG. 15 is a perspective view of the camera device including a shield member 390.

Referring to FIG. 15, the camera device may include a shield member 390 that closes the opening 18 in the housing 210. The shield member 390 may be coupled or attached to the lower surface of the lower portion of the housing 210. The shield member 390 may be coupled to the housing 210 by an adhesive. For example, the shield member 390 may take the form of an adhesive tape. The shield member 390 may alternatively be referred to as a "cover," a sealing member, or a "shield tape."

In FIG. 15, the support member 64 may include a long side and a short side, and the support member 64 may be disposed such that the long side of the support member 64 is parallel to the second direction (the X-axis direction) or the third direction. In another embodiment, the long side of the support member 64 may be disposed so as to intersect the second direction and the third direction. For example, in another embodiment, the long side of the support member 64 may be disposed parallel to the first axis or the second axis.

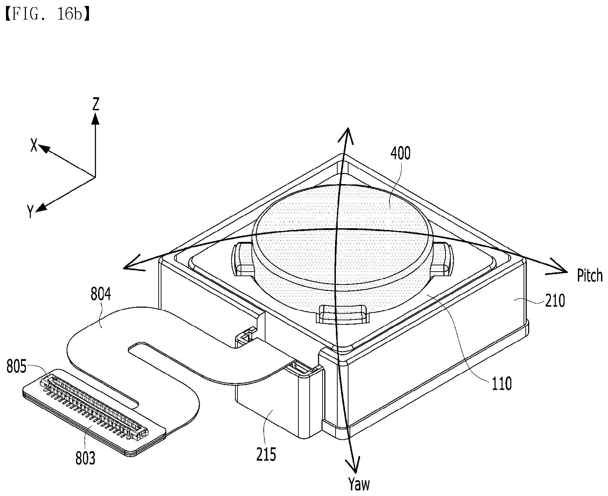

FIG. 16A shows electromagnetic forces F1 and F2 due to interaction between the magnet units 310A and 310B and the coil units 230A and 230B, and FIG. 16B shows the motion of the OIS moving unit 100 due to the electromagnetic forces of FIG. 16A. FIG. 16A shows the electromagnetic force when each of the first and second magnet units 310A and 310B is a two-pole magnet having an N pole and an S pole.

The motion of the OIS moving unit by the OIS driving unit will be described with reference to FIGs. 16A and 16B. The OIS driving unit may tilt the OIS moving unit about the first axis perpendicular to the optical-axis direction or the second axis intersecting the optical-axis direction and the first axis. The OIS driving unit may include a coil 230 and a magnet 310. In addition, the OIS driving unit may include a position sensor 240.

For example, the first surface (e.g., the upper surface) of the first magnet unit 310A facing or opposite the first coil unit 230A in the optical-axis direction and the first surface (e.g., the upper surface) of the second magnet unit 310B facing or opposite the second coil unit 230B in the optical-axis direction may have opposite polarities. As the first surface (e.g., the upper surface) of the first magnet unit 310A and the first surface (e.g., the upper surface) of the second magnet unit 310B have opposite polarities, the influence of a magnetic field of the first magnet unit 310A on the second coil unit 230B and the influence of a magnetic field of the second magnet unit on the first coil unit 230A may be offset, whereby magnetic field balancing may be implemented. As a result, the influence of unnecessary magnetic fields caused by two neighboring magnet units 310A and 310B on the coil units 230A and 230B may be inhibited or reduced, whereby the performance and reliability of OIS operation of the camera device 200 may be improved.

In addition, as the first surface (e.g., the upper surface) of the first magnet unit 310A and the first surface (e.g., the upper surface) of the second magnet unit 310B have opposite polarities, the influence of the magnetic field of the first magnet unit 310A on the second sensor 240B and the influence of the magnetic field of the second magnet unit on the first sensor 240A may be offset, whereby magnetic field balancing may be implemented. As a result, the influence of unnecessary magnetic fields caused by neighboring magnet units 310A and 310B on the sensors 240A and 240B may be inhibited or reduced, whereby the reliability of the output of the sensors 240A and 240B may be improved and the performance and reliability of OIS operation may be improved.

In addition, for example, the second surface (e.g., the lower surface) of the first magnet unit 310A and the second surface (e.g., the lower surface) of the second magnet unit 310B may have opposite polarities. The second surface (e.g., the lower surface) of the first magnet unit 310A may be a surface opposite the first surface (e.g., the upper surface) of the first magnet unit 310A, and may have a polarity opposite the polarity of the first surface (e.g., the upper surface) of the first magnet unit 310A. The second surface (e.g., the lower surface) of the second magnet unit 310B may be a surface opposite the first surface (e.g., the upper surface) of the second magnet unit 310B, and may have a polarity opposite the polarity of the first surface (e.g., the upper surface) of the second magnet unit 310B. For example, the first surface of the first magnet unit 310A may have an N pole (or an S pole), and the first surface of the second magnet unit 310B may have an S pole (or an N pole).

First electromagnetic force F1 may be generated by interaction between the first magnet unit 310A and the first coil unit 230A. For example, the first electromagnetic force F1 may be exerted in the optical-axis direction, such as the upward direction or the downward direction. The OIS moving unit 100 may be tilted about the second axis (or the second boss 66) by the first electromagnetic force F1. For example, the OIS moving unit 100 may be second-axis tilted by the first electromagnetic force F1. Here, second-axis tilting means that the OIS moving unit is tilted about the second axis or the OIS moving unit is rotated about the second axis by a predetermined angle.

For example, the tilting guide unit 60 may be tilted about the second axis (or the bosses 66A and 66B of the second boss 66) by the first electromagnetic force F1. For example, the tilting guide unit 60 may be second-axis tilted by the first electromagnetic force F1. For example, in an embodiment in which the bosses 66A and 66B are disposed in the first-axis direction, the tilting guide unit 60 may be first-axis tilted.

Referring to FIG. 4B, a gap or space must be present between the tilting guide unit 60 and the OIS moving unit (e.g., the sensor base 270) by the first boss 65 of the tilting guide unit 60 in order for the OIS moving unit to be tilted about the second axis (or the second boss 66 of the tilting guide unit 60). For example, a gap or space in which the tilting guide unit 60 is movable may be present between the upper surface 6A of the tilting guide unit 60 and the OIS moving unit (e.g., the sensor base 270). For example, the upper surface 6A of the tilting guide unit 60 may be spaced apart from the OIS moving unit (e.g., the sensor base 270) or the lower surface of the sensor base 270.

Second electromagnetic force F2 may be generated by interaction between the second magnet unit 310B and the second coil unit 230B. For example, the second electromagnetic force F2 may be exerted in the upward direction or the downward direction.

The OIS moving unit may be tilted about the first axis (or the first boss 65) by the second electromagnetic force F2. For example, the OIS moving unit may be first-axis tilted by the second electromagnetic force F2. Here, first-axis tilting means that the OIS moving unit is tilted about the first axis or the OIS moving unit is rotated about the first axis by a predetermined angle. For example, the tilting guide unit 60 may be brought into contact with the fixed unit (e.g., the housing 210) by first-axis or second-axis tilting. At this time, the fixed unit may serve as a stopper configured to inhibit tilting of the OIS moving unit.

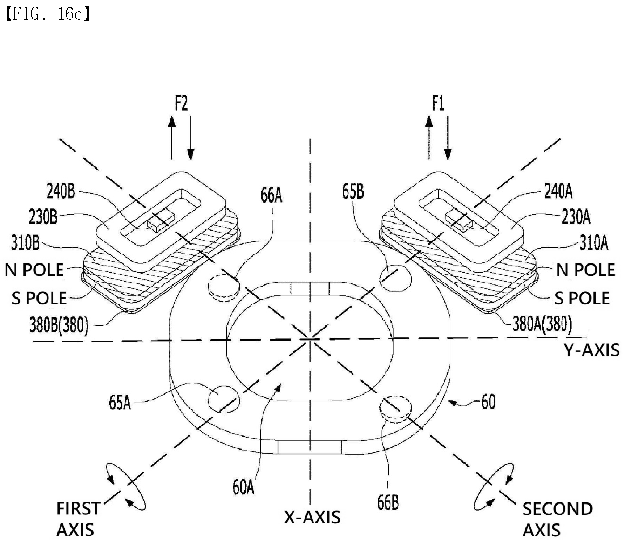

FIG. 16C shows the disposition of magnet units 310A and 310B according to a modification of FIG. 16A. Referring to FIG. 16C, the first surface (e.g., the upper surface) of the first magnet unit 310A facing or opposite the first coil unit 230A in the optical-axis direction and the first surface (e.g., the upper surface) of the second magnet unit 310B facing or opposite the second coil unit 230B in the optical-axis direction may have the same polarity. For example, each of the first surface of the first magnet unit 310A and the first surface of the second magnet unit 310B may have an N pole (or an S pole), and each of the second surface of the first magnet unit 310A and the second surface of the second magnet unit 310B may have an S pole (or an N pole).

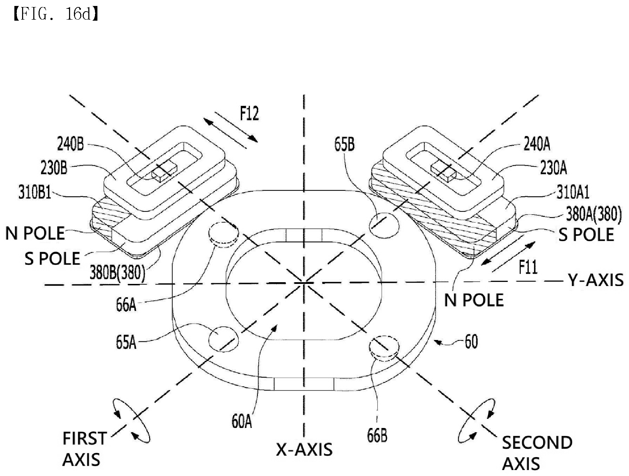

FIG. 16D is a view illustrating electromagnetic forces F11 and F12 due to interaction between magnet units 310A1 and 310B1 according to another embodiment and the coil units 230A and 230B.

Referring to FIG. 16D, the first magnet unit 310A1 may be a magnet with an N pole and an S pole separated or disposed in the first-axis direction. The second magnet unit 310B1 may be a magnet with an N pole and an S pole separated or disposed in the second-axis direction. For example, the first surface of the first magnet unit 310A1 may include an N pole and an S pole, and the first surface of the second magnet unit 310B1 may include an N pole and an S pole.

First electromagnetic force F11 due to the interaction between the first magnet unit 310A1 and the first coil unit 230A may act in a direction different from the optical axis (e.g., the first-axis direction). Second electromagnetic force F12 due to the interaction between the second magnet unit 310B1 and the second coil unit 230B may act in a direction different from the optical axis (e.g., the second-axis direction).

For example, the first electromagnetic force F11 due to the interaction between the first magnet unit 310A1 and the first coil unit 230A may act in a direction perpendicular to the optical axis. In addition, the second electromagnetic force F12 due to the interaction between the second magnet unit 310B1 and the second coil unit 230B may act in a direction perpendicular to the optical axis. For example, F11 and F12 may act in directions that intersect each other (e.g., directions that are perpendicular to each other).

In FIG. 16D, the first pole of the first magnet unit 310A1 may be disposed closer to the tilting guide unit 60 than the second pole of the first magnet unit 310A1. In addition, the second pole of the second magnet unit 310B1 may be disposed closer to the tilting guide unit 60 than the first pole of the second magnet unit 310B1. Alternatively, the first pole of the first magnet unit 310A1 may be located inside, and the second pole of the first magnet unit 310A1 may be located outside. Conversely, the first pole of the second magnet unit 310B1 may be located outside, and the second pole of the second magnet unit 310B1 may be located inside. For example, the first pole may be an N pole (or an S pole), and the second pole may be an S pole (or an N pole). In another embodiment, the first magnet unit 310A1 and the second magnet unit 310B1 may be disposed such that opposite polarities thereof are close to the tilting guide unit 60. A description of the magnetic field balancing of the embodiment of FIG. 16A may be applied or analogically applied to the embodiment of FIG. 16D.

In another embodiment, the first magnet unit 310A1 and the second magnet unit 310B1 may be disposed such that the same polarity (e.g., the N pole or the S pole) is close to the tilting guide unit 60.

The OIS moving unit may be tilted about the second axis (or the second boss 66) by the first electromagnetic force F11. For example, the OIS moving unit may be second-axis tilted by the first electromagnetic force F11. The OIS moving unit may be tilted about the first axis (or the first boss 65) by the second electromagnetic force F12. For example, the OIS moving unit may be first-axis tilted by the second electromagnetic force F12.

In FIGs. 16A, 16C, and 16D, the yoke 380 may serve to increase the electromagnetic forces F1, F2, F11, and F12 (or the drive forces).

In FIGs. 16A to 16D, the OIS moving unit may be tilted about the first axis or the second axis in the diagonal direction by the magnet units 310A and 310B, the coil units 230A and 230B, and the tilting guide unit 60. In another embodiment, the disposition of the magnet units 310A and 310B and the coil units 230A and 230B, and the disposition of the axes due to the bosses 65 and 66 of the tilting guide unit may be changed to enable X-axis tilting or Y-axis tilting.

In a camera device configured such that an image sensor is stationary and a lens is moved in a direction perpendicular to the optical axis for hand-tremor compensation or shake compensation ("Comparative Example 1"), distortion of an image may occur. Also, in a camera device configured such that a lens is stationary and an image sensor is moved or tilted for hand-tremor compensation or shake compensation ("Comparative Example 2"), image distortion may occur at edges or corners of the image sensor. As such, in Comparative Example 1 and Comparative Example 2, the image sensor and the lens are separated and only one of the image sensor and the lens is moved or tilted, which may cause image distortion during hand-tremor compensation, and hand-tremor compensation at wide angles may be difficult.

In the embodiment, for hand-tremor compensation, the OIS driving unit may tilt the OIS moving unit 100 about the first axis or the second axis or may rotate the OIS moving unit within a predetermined angular range. In the embodiment, since the OIS moving unit 100 includes a lens module 400 and an image sensor 810, the tilting direction (or the rotating direction) and the tilting angle (or the rotating angle) of the lens module 400 (e.g., a lens or a lens barrel) (or the lens holder 110) may be the same or nearly the same as the tilting direction (or the rotating direction) and the tilting angle (or the rotating angle) of the image sensor 810 when OIS is performed.

In the embodiment, the lens module 400 (or the lens holder 110) and the image sensor 810 may be simultaneously tilted or rotated together when OIS is performed, whereby 100% image resolution without image distortion may be obtained, and hand-tremor compensation or shake compensation at wide angles may be possible.

Also, in the embodiment, since the OIS moving unit including the lens module 400 (or the lens holder 110) and the image sensor 810 is tilted or rotated, image degradation does not occur in the central region of the image sensor or the peripheral region of the image sensor (e.g., the corners or the corner regions of the image sensor) even if shaking occurs in the camera device. In the embodiment, therefore, broadband shake compensation may be possible. Also, in the embodiment, since distortion-free image compensation is mechanically possible, load during image processing is low, whereby current consumption may be reduced, when compared to Comparative Example 1 and Comparative Example 2.

Also, in the embodiment, since the tilting guide unit 60 is used to tilt the OIS moving unit, the OIS moving unit may be stably, precisely, and accurately tilted, when compared to an example using only a ball member or a shaft member, thereby improving the reliability of OIS operation.

Also, in the embodiment, power consumption required to perform OIS may be reduced by the bent portions 804D and 804E and the third portion 804C of the substrate 804, which is a flexible substrate, of the circuit board 800.

Also, in the embodiment, since the tilting guide unit 60 is disposed in the seating portion 69 of the housing 210 and the coupling portion 49 of the housing 210 overlaps the opening 60A of the tilting guide unit 60, the height or length of the camera device 200 in the optical-axis direction may be reduced.

Also, in the embodiment, since at least a part of the magnetic material 31 is disposed in the opening 60A of the tilting guide unit 60, the distance between the magnetic material 31 and the magnetic material 33 may be reduced, which may increase repulsive force or retentive force necessary to support the OIS moving unit, whereby stable OIS operation may be performed.

Also, in the embodiment, since the first magnet unit 310A and the second magnet unit 310B, which are driving magnets for hand-tremor compensation, are disposed on the lower portion 42 of the housing 210 rather than on the side portions 71A to 71D of the housing 210, the thickness of the side portions 71A to 71D of the housing 210 (or the length thereof in a direction perpendicular to the optical axis) may be reduced, thereby enabling mounting of a large-aperture lens to the camera device.

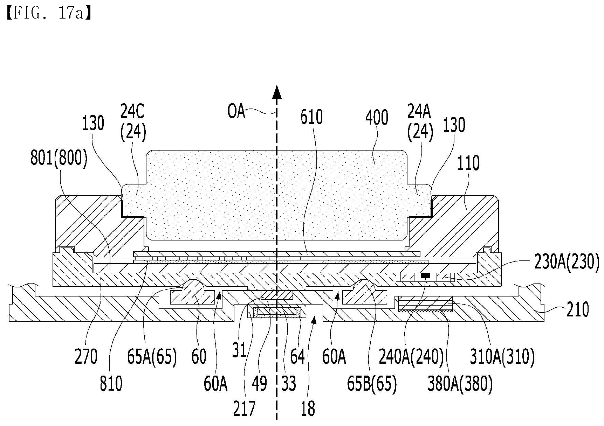

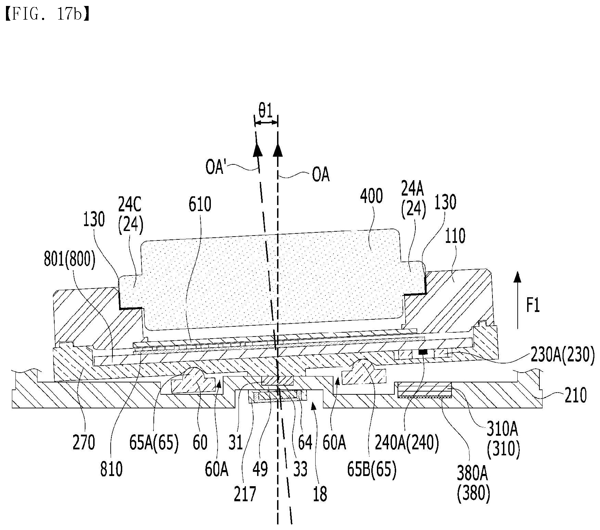

FIG. 17A shows a first position of the OIS moving unit 100, and FIG. 17B shows a second position of the OIS moving unit 100.

Referring to FIGs. 16A, 17A, and 17B, the OIS moving unit 100 may be second-axis tilted about the second axis by a predetermined angle θ1 by force F1 due to interaction between the first magnet unit 310A and the first coil unit 310A. That is, when the OIS moving unit 100 is moved from the first position to the second position, both the image sensor 810 and the lens module 400 may be tilted simultaneously by the predetermined angle θ1. In addition, when the OIS moving unit 100 is moved from the first position to the second position, the tilting guide unit 60 may be tilted by the predetermined angle θ1 together with the image sensor 810 and the lens module 400.

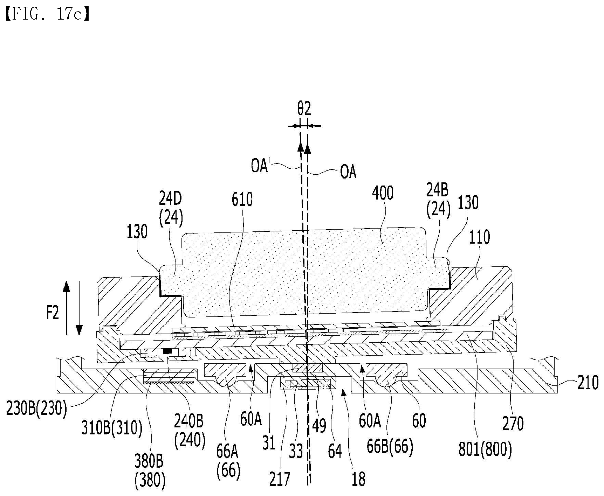

FIG. 17C shows a third position of the OIS moving unit 100.

Referring to FIG. 17C, the OIS moving unit 100 may be first-axis tilted about the first axis by a predetermined angle θ2 by force F2 due to interaction between the second magnet unit 310B and the second coil unit 310B. For example, when the OIS moving unit 100 is moved from the first position to the third position, the image sensor 810 and the lens module 400 may be simultaneously tilted by the predetermined angle θ2.

The image sensor 810 and the lens module 400 are simultaneously tilted about the first axis or the second axis by at least one of the force F1 or the force F2. In the embodiment, therefore, it is possible to obtain 100% image resolution without image distortion and to perform hand-tremor compensation or shake compensation at wide angles.

For example, when viewed from above or in the optical-axis direction, the first axis may be a first diagonal direction of the OIS moving unit 100, and the second axis may be a second diagonal direction of the OIS moving unit 100. For example, the first diagonal direction of the OIS moving unit may be a first diagonal direction of any one of the lens holder 110, the sensor base 270, and the substrate 801 of the circuit board 900. In addition, the second diagonal direction of the OIS moving unit may be a second diagonal direction of any one of the lens holder 110, the sensor base 270, and the substrate 801 of the circuit board 900.

In another embodiment, when viewed from above or in the optical-axis direction, the first axis may be a first diagonal direction of the fixed unit, and the second axis may be a second diagonal direction of the fixed unit. For example, the first diagonal direction of the fixed unit may be a first diagonal direction of the housing 210 or the cover member 300. In addition, the second diagonal direction of the fixed unit may be a second diagonal direction of the housing 210 or the cover member 300.

For example, the first diagonal direction of the OIS moving unit 100 (or the fixed unit) may be a direction intersecting the second direction (e.g., the X-axis direction) or the third direction, and the second diagonal direction of the OIS moving unit 100 (or the fixed unit) may be a direction intersecting the second direction (e.g., the X-axis direction) or the third direction. The first diagonal direction of the OIS moving unit 100 and the second diagonal direction of the OIS moving unit 100 may intersect each other. For example, the first diagonal direction of the OIS moving unit 100 and the second diagonal direction of the OIS moving unit 100 may be perpendicular to each other.

In another embodiment, the first axis may be a first horizontal direction of the OIS moving unit 100 (or the fixed unit), and the second axis may be a second horizontal direction of the OIS moving unit 100 (or the fixed unit).

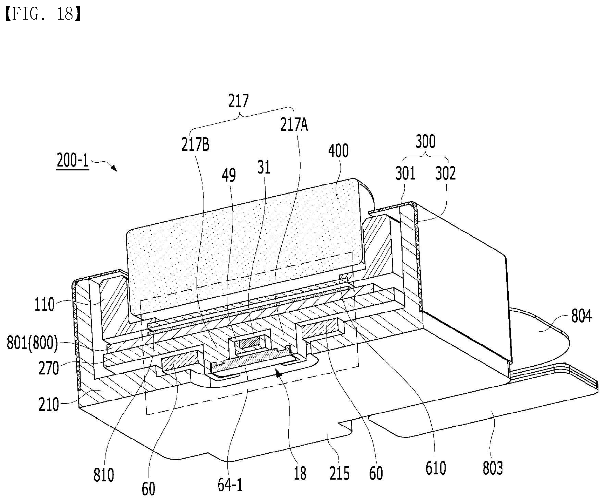

FIG. 18 shows another modification 200-1 of FIG. 14A.

Referring to FIG. 18, the magnetic material 33 of the camera device 200 may be omitted from the camera device 200-1, and a support member 64-1 may perform the function of the omitted magnetic material 33. In other words, the support member 64-1 may be a magnetic material. In FIG. 18, the support member 64-1 may alternatively be referred to as a "magnetic material."

The magnetic material 64-1 may be coupled to the sensor base 270. For example, the magnetic material 64-1 may be coupled to the extension portion 217 of the sensor base 270. For example, the magnetic material 64-1 may be coupled to the extension portion 217 of the sensor base 270 by an adhesive. Alternatively, for example, the magnetic material 64-1 may be coupled to the extension portion 217 of the sensor base 270 by pin-hole coupling or male-female coupling. For example, one of the extension portion 217 and the magnetic material 64-1 may be a pin (or a hole), and the other of the extension portion 217 and the magnetic material 64-1 may be a hole (or a pin).

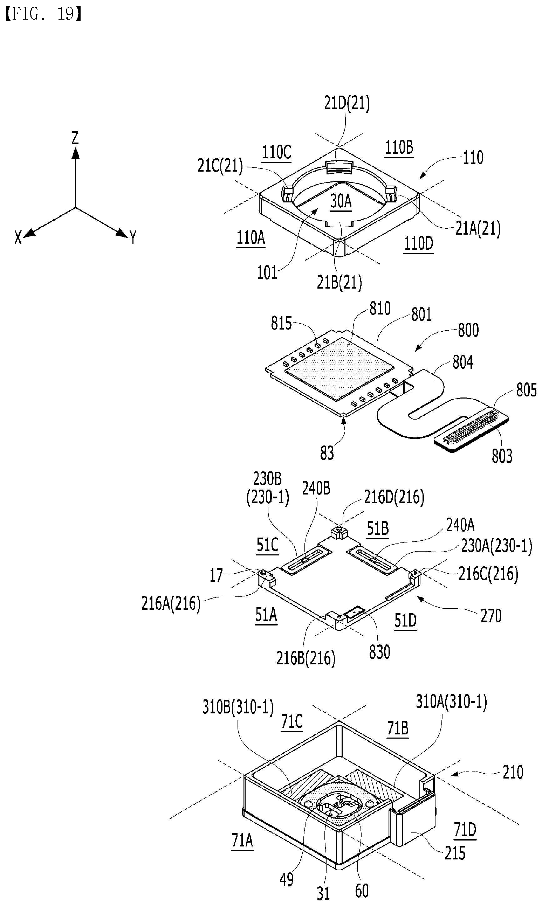

A description of the magnetic material 33 and a description of the support member 64 may be applied or analogically applied to the magnetic material 64-1 of FIG. 19. Repulsive force may act between the magnetic material 31 and the magnetic material 64-1, and the magnetic material 31 and the magnetic material 64-1 may serve to support the OIS moving unit.

In the embodiment of FIG. 18, the magnetic material 33 is omitted, and the support member 64-1 performs the function of the magnetic material. Therefore, compared to the embodiment of FIG. 14A, the same function as the embodiment of FIG. 14A may be performed, the number of parts may be reduced, and the weight of the camera device may be reduced.

FIG. 19 shows arrangement of an OIS driving unit according to another embodiment.

Referring to FIG. 19, the OIS driving unit may include a magnet 310-1 and a coil 230-1.

The first and second coil units 230A and 230B of the coil 230-1 may be disposed adjacent to two adjacent ones of the four sides of the substrate 801 (or the sensor base 270). For example, the coil unit 230A or 230B may be disposed such that the long side of the coil unit is parallel to one side of the substrate 801 (or the sensor base 270).

The first and second magnet units 310A and 310B of the magnet 310-1 may be disposed adjacent to two adjacent ones of the four sides of the lower portion 42 of the housing 210. The magnet unit 310A or 310B may be disposed such that the long side of the magnet unit is disposed parallel to one side of the lower portion 42 of the housing 210.

the first and second coil units 230A and 230B may be disposed so as to be misaligned with each other in the first horizontal direction (or the X-axis direction) or the second horizontal direction (or the Y-axis direction). When viewed from above, the first coil unit 230A may be disposed so as to overlap the first horizontal axis (or the X-axis), and the second coil unit 230B may be disposed so as to overlap the second horizontal axis (or the Y-axis).

The first magnet unit 310A and the second magnet unit 310B may be misaligned with each other in the first horizontal direction (or the X-axis direction) or in the second horizontal direction (or the Y-axis direction). For example, when viewed from above, the first magnet unit 310A may be disposed so as to overlap the first horizontal axis (or the X axis), and the second magnet unit 310B may be disposed so as to overlap the second horizontal axis (or the Y axis).

In another embodiment, the coil 230-1 may further include a third coil unit located opposite the first coil unit 230A based on the optical axis, and the magnet 310-1 may further include a third magnet unit located opposite the first magnet unit 310A based on the optical axis. The third magnet unit and the third coil unit may be opposite or overlap each other in the optical-axis direction.

In another embodiment, the coil 230-1 may further include a fourth coil unit located opposite the second coil unit 230B based on the optical axis, and the magnet 310-1 may further include a fourth magnet unit located opposite the second magnet unit 310B based on the optical axis. The fourth magnet unit and the fourth coil unit may be opposite or overlap each other in the optical-axis direction. In another embodiment, the coil 230-1 may include first to fourth coil units, and the magnet 310-1 may include first to fourth magnet unit respectively corresponding to the first to fourth coil units. For example, the sensors 240A and 240B may be disposed in the hollow in a corresponding one of the first and second coil units 230A and 230B.

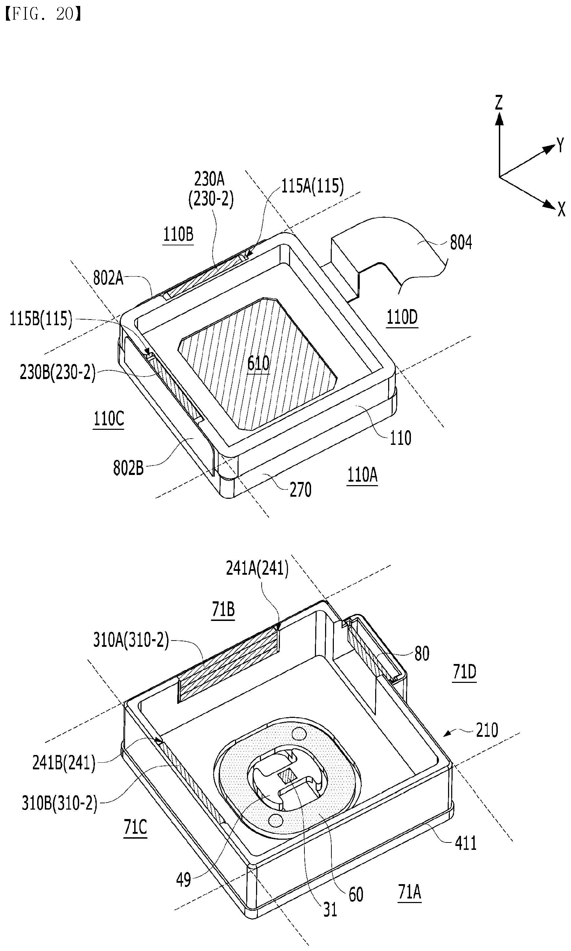

FIG. 20 shows arrangement of an OIS driving unit according to another embodiment.

Referring to FIG. 20, the OIS driving unit may include a magnet 310-2 and a coil 230-2. The magnet 310-2 and the coil 230-2 may be disposed so as to be opposite or overlap each other in a direction perpendicular to the optical-axis direction. For example, the first magnet unit 310A of the magnet 310-2 may be opposite or overlap the first coil unit 230A of the coil 230-2 in the X-axis direction, and the second magnet unit 310B of the magnet 310-2 may be opposite or overlap the second coil unit 230B of the coil 230-2 in the Y-axis direction.

The magnet units 310A and 310B of the magnet 310-2 may be disposed on two adjacent ones (e.g., 71B and 71C) of the side portions 71A to 71D of the housing 210. The coil units 230A and 230B may be disposed on two adjacent ones (e.g., 110B and 110C) of the side portions 110A to 110D of the lens holder 110.

The housing 210 may include seating portions 241 in which the magnet units 310A and 310B are disposed or received. The side portion 71B of the housing 210 may be provided with a first seating portion 241A in which the first magnet unit 310A is disposed, and the side portion 71C of the housing 210 may be provided with a second seating portion 241B in which the second magnet unit 310B is disposed. The seating portion 241 may have the form of a recess or through hole formed in the side portion of the housing 210.

The lens holder 110 may include seating portions 115 in which the coil units 230A and 230B are disposed or received. The side portion 110B of the lens holder 110 may be provided with a first seating portion 115A in which the first coil unit 230A is disposed, and the side portion 110C of the lens holder 110 may be provided with a second seating portion 115B in which the second coil unit 230B is disposed. The seating portion 115 may have the form of a recess or through hole formed in the side portion of the lens holder 110.

The circuit board 800 may include a substrate 802A (or a first extension region) which is connected to the substrate 801 and on which the first coil unit 230A is disposed, and a substrate 802b (or a second extension region) which is connected to the substrate 801 and on which the second coil unit 230B is disposed.

The substrate 802A may be connected to one side of the substrate 801 and may extend to the side portion 110B of the lens holder 110. The substrate 802A may be connected to another side of the substrate 801 and may extend to the side portion 110C of the lens holder 110.

For example, the substrate 802A may be connected or coupled to the side portion 110B of the lens holder 110, and the substrate 802B may be connected or coupled to the side portion 110C of the lens holder 110.

The sensor 240A may be disposed on the substrate 802A, and the sensor 240B may be disposed on the substrate 802B. The sensor 240A may be electrically connected to the substrate 802A, and the sensor 240B may be electrically connected to the substrate 802B.

In another embodiment, the magnet units 310A and 310B may be disposed on two adjacent ones of the corners of the housing 210, and the coil units 230A and 230B may be disposed on the lens holder 110 so as to be opposite the magnet units 210A and 310B in a direction perpendicular to the optical axis.

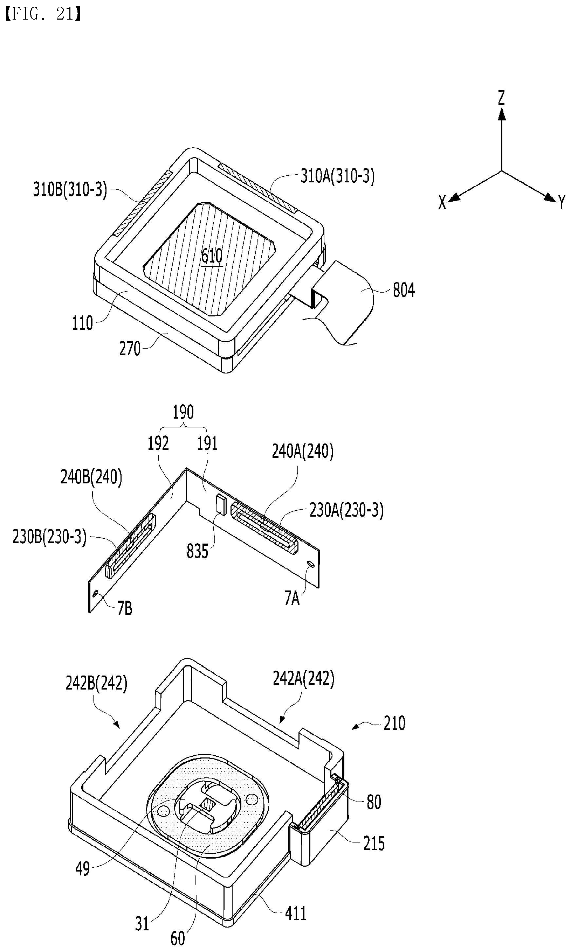

FIG. 21 shows arrangement of an OIS driving unit according to another embodiment.

Referring to FIG. 21, an OIS driving unit may include a magnet 310-3 and a coil 230-3. The magnet 310-3 may be disposed on the OIS moving unit 100, and the coil 230 may be disposed on the fixed unit (e.g., the housing 210). The magnet 310-3 may be disposed on the lens holder 110. The magnet 310-3 and the coil 230-3 may be disposed so as to be opposite or overlap each other in a direction perpendicular to the optical axis.

The magnet 310-3 may include first and second magnet units 310A and 310B respectively disposed on two adjacent ones (e.g., 100B and 110C) of the side portions 110A to 110D of the lens holder 110. The two adjacent side portions (e.g., 110B and 110C of the lens holder 110 may be respectively provided therein with recesses or holes configured to respectively receive the magnet units 310A and 310B therein.

The coil 230 may include the first and second coil units 230A and 230B respectively disposed on two adjacent ones (e.g., 71B and71C) of the side portions 71A to 71D of the housing 210. The housing 210 may include seating portions 242 in which the first and second coil units 231A and 231B are disposed or received. The side portion 71B of the housing 210 may be provided with the first seating portion 242A in which the first coil unit 230A is disposed, and the side portion 71C of the housing 210 may be provided with the second seating portion 242B in which the second coil unit 230B is disposed. The seating portion 242 may have the form of a recess or a through hole formed in the side portion of the housing 210.

The camera device 200 may further include a circuit board 190 disposed on the fixed unit (e.g., the housing 210). The coil 230 may be disposed on or coupled to the circuit board 190. The coil 230 may be conductively or electrically connected to the circuit board 190. The circuit board 190 may include a first substrate 191 disposed on one of the two adjacent side portions (e.g., 71B and 71C) of the housing 210 and a second substrate 192 disposed on the other of the two adjacent side portions (e.g., 71B and 71C) of the housing 210. The first coil unit 230A may be disposed on the first substrate 191, and the second coil unit 230B may be disposed on the second substrate 192.

The first coil unit 230A may be opposite or overlap the first magnet unit 310A in the second direction (or the X-axis direction), and the second coil unit 230B may be opposite or overlap the second magnet unit 310B in the third direction (or the Y-axis direction).

In another embodiment, the OIS driving unit may further include a third magnet unit disposed on the lens holder 110 and located opposite the first magnet unit 310A based on the optical axis and a third coil unit disposed on the housing 210 and located opposite the first coil unit 230A based on the optical axis. The third magnet unit may be disposed on a side portion (e.g., 110A) of the lens holder 110, and the third coil unit may be disposed on a side portion (e.g., 71A) of the housing 210.

In another embodiment, the OIS driving unit may further include a fourth magnet unit disposed on the lens holder 110 and located opposite the second magnet unit 310B based on the optical axis and a fourth coil unit disposed on the housing 210 and located opposite the second coil unit 230B based on the optical axis. The fourth magnet unit may be disposed on a side portion (e.g., 110D) of the lens holder 110, and the fourth coil unit may be disposed on a side portion (e.g., 71D) of the housing 210. The circuit board 190 may include a third substrate (not shown) which is disposed on a side portion (e.g., 71A) of the housing 210 and on which the third coil unit is disposed and/or a fourth substrate (not shown) which is disposed on a side portion (e.g., 71D) of the housing 210 and on which the fourth coil unit is disposed. The position sensor 240 may be disposed or mounted on the circuit board 190 and may be conductively or electrically connected to the circuit board 190.

In another embodiment, the OIS driving unit may include a controller 835 disposed on the circuit board 190. The controller 835 may be electrically or conductively connected to the circuit board 190. For example, the controller 835 may be a driver IC. The controller 835 may be disposed on one of the first substrate 191 and the second substrate 9192. The controller 835 may be electrically or conductively connected to the coil 230-3. A drive signal may be supplied to the coil 230-3. The controller 835 may be electrically connected to the coil units 230A and 230B, may supply a first drive signal to the first coil unit 230A, and may supply a second drive signal to the second coil unit 230B.

The controller 835 may be conductively or electrically connected to the position sensor 240.

The controller 835 may supply power or a drive signal to the position sensor 240. For example, the controller 835 may supply power or a drive signal to each of the first sensor 240A and the second sensor 240B. The controller 835 may receive an output signal from the position sensor 240 and may control a drive signal (e.g., drive current) supplied to the coil 230 using the output signal from the position sensor 240. For example, the controller 835 may receive an output signal from the first sensor 240A and may control a first drive signal (e.g., first drive current) supplied to the first coil unit 230A using the output signal from the first sensor 240A. In addition, the controller 835 may receive an output signal from the second sensor 240B and may control a second drive signal (e.g., a second drive current) supplied to the second coil unit 230B using the output signal from the second sensor 240B.

The circuit board 190 may include a terminal unit (not shown) for connection to an external device. The terminal unit may include a plurality of terminals. For example, the plurality of terminals of the circuit board 190 may be exposed from the side plate 302 of the cover member 300. At least one of the plurality of terminals may be conductively or electrically connected to the controller 835.

In another embodiment, the circuit board 190 may be electrically connected to the circuit board 800 and may be electrically connected to an external device via the connector 805 of the circuit board 800.

In another embodiment, in FIGs. 6 and 19, the location of the magnet 310 and the location of the coil 230 may be interchanged. In other words, the magnet 310 may be disposed on the moving unit 100 (e.g., the sensor base 270), and the coil 230 may be disposed on the fixed unit (e.g., the housing 210). In this case, the yoke of FIG. 16A may be disposed on the sensor base 270. Here, the magnet and the coil may be opposite or overlap each other in the optical-axis direction. For example, the coil 230 may be disposed in the seating portion 141 of the housing 140. Here, the seating portion 141 may be a through hole formed through the lower portion 42 of the housing 140. Another embodiment may additionally include a "circuit board" disposed under the housing 210 and conductively or electrically connected to the second coil 230, in addition to the circuit board 800. The position sensor 240 may be disposed on or coupled to the circuit board disposed under the housing 210. In another embodiment, a controller serving as the controller 835 of FIG. 19 may be disposed on the circuit board disposed under the housing 210.

Although the tilting guide unit 60 is brought into tight contact with the OIS moving unit and the fixed unit due to the repulsive force acting between the magnetic material 33 and the magnetic material 31 in FIGs. 1 to 21, the tilting guide unit 60 may be pushed toward the moving unit due to the attractive force acting between the two magnet materials in another embodiment.

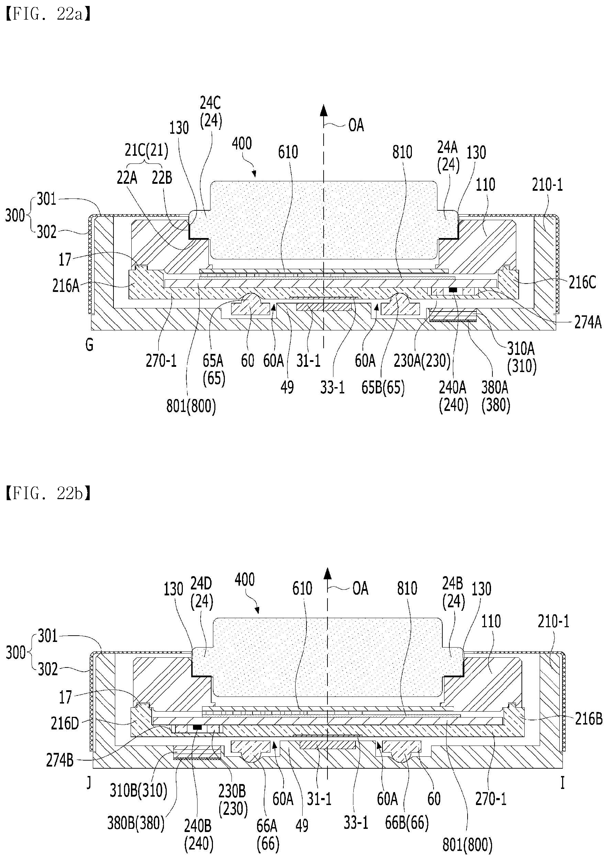

FIG. 22A is a cross-sectional view of the camera device according to another embodiment in direction G-H of FIG. 4D, and FIG. 22B is a cross-sectional view of the camera device shown in FIG. 22A in direction I-J of FIG. 4E.

In the embodiment shown in FIGs. 22A and 22B, the tilting guide unit 60 may be brought into tight contact with the OIS moving unit and the fixed unit due to the attractive force between two magnetic materials 31-1 and 33-2.

A sensor base 270-1 according to an embodiment shown in FIGs. 22A and 22B may be a structure in which the extension portion 217 of the sensor base 270 is omitted. A magnetic material 33-1 may be disposed on the sensor base 270-1. For example, the magnetic material 33-1 may be disposed on the lower surface of the sensor base 270-1. The lower surface of the sensor base 270-1 may be provided with a recess in which the magnetic material 33-1 is disposed.

A housing 210-1 may not include the recess 18 shown in FIG. 10A. The magnetic material 31-1 may be disposed on the housing 210-1 so as to correspond to, be opposite, or overlap the magnetic material 33-1 in the optical-axis direction. The magnetic material 31-1 may be disposed on the protrusion 49 of the housing 210-1. The magnetic material 31-1 and the magnetic material 33-1 may be disposed so as to generate attractive force therebetween. Each of the magnetic materials 31-1 and 33-1 may be made of a material having magnetism. For example, each of the magnetic materials 31-1 and 33-1 may be made of magnetic metal. For example, each of the magnetic materials 31-1 and 33-1 may be a magnet. Each of the magnetic materials 31-1 and 33-1 may alternatively be referred to as a "yoke." For example, each of the magnetic materials 31-1 and 33-1 may be a magnet, and a first surface (e.g., the lower surface) of the magnetic material 33-1 may be opposite a first surface (e.g., the upper surface) of the magnetic material 31-1 in the optical-axis direction. The first surface (e.g., the lower surface) of the magnetic material 33-1 and the first surface (e.g., the upper surface) of the magnetic material 31-1 may have opposite poles. For example, the first surface (e.g., the lower surface) of the magnetic material 33-1 may a N pole (or a S pole), and the first surface (e.g., the upper surface) of the magnetic material 33-1 may be a S pole (or a N pole). In addition, the second surface (for example, the upper surface) of the magnetic material 33-1 and the second surface (e.g., the lower surface) of the magnetic material 31-1 may have opposite polarities. The second surface of the magnetic material 33-1 may be the opposite surface of the first surface of the magnetic material 33-1, and the second surface of the magnetic material 31-1 may be the opposite surface of the first surface of the magnetic material 31-1.

The structure in which attractive force is generated between the two magnetic materials 31-1 and 33-1 shown in FIGs. 22A and 22B may also be applied or analogically applied to the embodiments shown in FIGs. 1 to 21.

In another embodiment, instead of the structure in which attractive force is generated between the magnetic materials shown in FIGs. 22A and 22B, the tilting guide unit 60 may be brought into tight contact with the OIS moving unit and the fixed unit by means of an elastic member connecting the OIS moving unit to the fixed unit. For example, the elastic member may be a coil spring or a leaf spring. By virtue of the restoring force of the elastic member, the tilting guide unit 60 may be pushed toward the OIS moving unit and the fixed unit and may be brought into tight contact with the OIS moving unit and the fixed unit.

When the camera device is installed or disposed on a vehicle, the interior space of the vehicle is not wide. In other words, the actual distance required for focusing of the camera device in the vehicle is short. Accordingly, even when the camera device has a fixed focus and no autofocus function, the embodiment is able to realize sufficient definition of a subject even using the fixed focus.

The embodiment does not include a configuration for autofocus. Here, the configuration for autofocus may include a coil and a magnet. In addition, the configuration for autofocus may include an additional holder (or a housing) on which at least one of the coil or the magnet is disposed. Furthermore, the configuration for autofocus may include a rolling member (or an elastic member) disposed between the lens holder 100 and the holder (or the housing) in order to support the lens holder 110 with respect to the holder (or the housing).

Since the embodiment does not include a configuration for autofocus, it is possible to reduce manufacturing cost. In addition, since the embodiment does not include a configuration for autofocus, it is possible to reduce the length of the camera device in the optical-axis or in a direction perpendicular to the optical axis.

In the embodiment, the size of the lens module is not restricted by a space in which the configuration for autofocus is disposed. Consequently, it is possible to increase the size of the lens module and the size of the image sensor corresponding to the lens module, and it is thus possible to realize high resolution images.

In the embodiment, since shaking of the camera device caused by vibration generated during travel of a vehicle is compensated or corrected through OIS driving, it is possible to prevent reduction in resolution caused by vibration.

In the embodiment shown in FIG. 20, since an AF coil or an AF magnet for AF driving is not disposed on the lens holder, it is possible to prevent generation of magnetic field interference between the coil units 230A and 230B for OIS driving and the AF coil or the AF magnet unit, and it is thus possible to improve accuracy and reliability of OIS driving.

Furthermore, in the embodiment shown in FIG. 20, it is possible to ensure a space in which the third coil unit located opposite the first coil unit 230A or the fourth coil unit located opposite the second coil unit 230B is disposed, and it is possible to freely design arrangement of the OIS driving coil, compared to a comparative embodiment in which the AF coil or the AF magnet unit is disposed on the lens holder.

In addition, in the embodiment shown in FIG. 21, since an AF coil or an AF magnet for AF driving is not disposed on the lens holder, it is possible to prevent generation of magnetic field interference between the magnet units 310A and 310B disposed on the lens holder 110 for OIS driving and the AF coil or the AF magnet unit, and it is thus possible to improve accuracy and reliability of OIS driving.

Furthermore, in the embodiment shown in FIG. 21, it is possible to ensure a space in which the third magnet unit located opposite the first magnet unit 310A or the fourth magnet unit located opposite the second magnet unit 310B is disposed, and it is possible to freely design arrangement of the OIS driving magnet, compared to a comparative embodiment in which the AF coil or the AF magnet unit is disposed on the lens holder.

The camera device according to another embodiment may include an AF function. Another embodiment may include a coil and a magnet for autofocus.

In addition, the camera device 200 according to the embodiment may be included in an optical instrument for the purpose of forming an image of an object present in a space using reflection, refraction, absorption, interference, and diffraction, which are characteristics of light, for the purpose of increasing visibility, for the purpose of recording and reproduction of an image using a lens, or for the purpose of optical measurement or image propagation or transmission. For example, the optical instrument according to the embodiment may be a cellular phone, a mobile phone, a smartphone, a portable smart device, a digital camera, a laptop computer, a digital broadcasting terminal, a personal digital assistant (PDA), a portable multimedia player (PMP), a navigation device, etc., without being limited thereto, and may also be any of devices for capturing images or pictures.

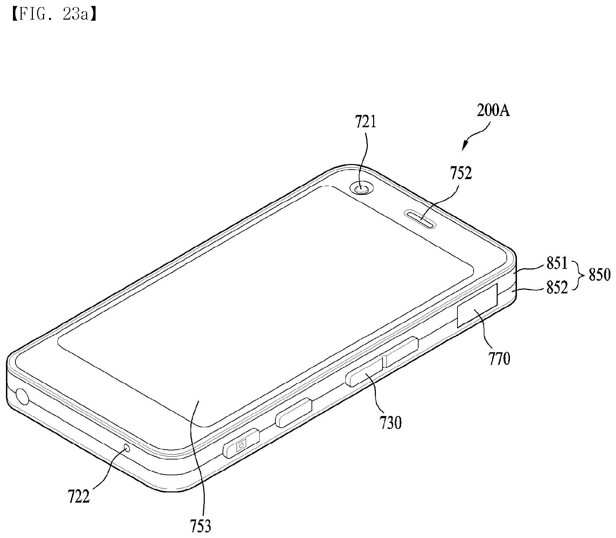

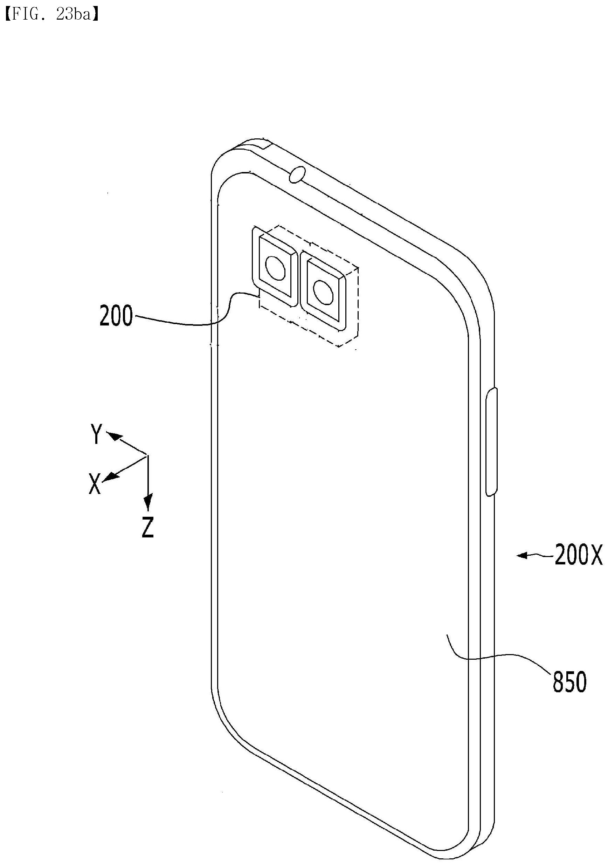

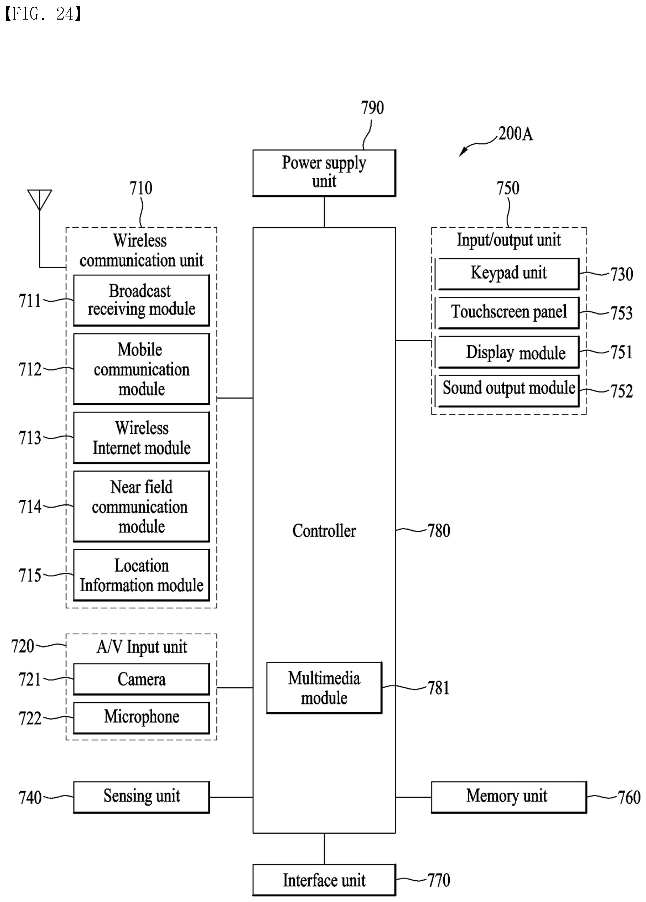

FIG. 23A is a perspective view of an optical instrument 200A according to an embodiment, FIG. 23B is a perspective view of an optical instrument 200X according to another embodiment, and FIG. 24 is a block diagram of the optical instrument 200A shown in FIGs. 23A and 23B.

For example, the embodiment of FIG. 23A may include a front camera in which a lens module 400 of a camera module 200 is disposed so as to face the front of a body 850, and the embodiment of FIG. 23B may include a rear camera in which a lens module 400 of a camera module 200 is disposed so as to face the rear of a body 850 of the optical instrument 200X. FIG. 23B shows an example in which two rear cameras are disposed, but in another embodiment, one, three or more rear cameras may be disposed.

In another embodiment, the camera module 200 may be used in both the front camera and the rear camera.

Referring to FIGs. 23A, 23B, and 24, the optical instrument 200A (hereinafter referred to as a portable "terminal") may include a body 850, a wireless communication unit 710, an A/V input unit 720, a sensing unit 740, an input/output unit 750, a memory unit 760, an interface unit 770, a controller 780, and a power supply unit 790.

The body 850 may have a bar shape, without being limited thereto, and may be any of various types such as, for example, a slide type, a folder type, a swing type, or a swivel type, in which two or more sub-bodies are coupled so as to be movable relative to each other.

The wireless communication unit 710 may include one or more modules, which enable wireless communication between the terminal 200A and a wireless communication system or between the terminal 200A and a network in which the terminal 200A is located. For example, the wireless communication unit 710 may include a broadcast receiving module 711, a mobile communication module 712, a wireless Internet module 713, a nearfield communication module 714, and a location information module 715.

The audio/video (A/V) input unit 720 serves to input audio signals or video signals, and may include a camera 721 and a microphone 722.

The camera 721 may include the camera device 200 according to the embodiment.

The sensing unit 740 may sense the current state of the terminal 200A, such as the open or closed state of the terminal 200A, the position of the terminal 200A, the presence or absence of a user's touch, the orientation of the terminal 200A, or the acceleration/deceleration of the terminal 200A, and may generate a sensing signal to control the operation of the terminal 200A. For example, when the terminal 200A is a slide-type phone, whether the slide-type phone is open or closed may be detected. In addition, the sensor serves to sense whether power is supplied from the power supply unit 790 or whether the interface unit 770 is coupled to an external device.

The input/output unit 750 serves to generate visual, audible, or tactile input or output. The input/output unit 750 may generate input data to control the operation of the terminal 200A, and may display information processed in the terminal 200A.

The input/output unit 750 may include a keypad unit 730, a display module 751, a sound output module 752, and a touchscreen panel 753. The keypad unit 730 may generate input data in response to input to a keypad.

The display module 751 may include a plurality of pixels, the color of which varies in response to electrical signals. For example, the display module 751 may include at least one of a liquid crystal display, a thin-film transistor liquid crystal display, an organic light-emitting diode, a flexible display, or a 3D display.

The sound output module 752 may output audio data received from the wireless communication unit 710 in a call-signal reception mode, a call mode, a recording mode, a voice recognition mode, or a broadcast reception mode, or may output audio data stored in the memory unit 760.

The touchscreen panel 753 may convert variation in capacitance, caused by a user's touch on a specific region of a touchscreen, into electrical input signals.

The memory unit 760 may store programs for processing and control of the controller 780, and may temporarily store input/output data (e.g., a phone book, messages, audio, still images, pictures, and moving images). For example, the memory unit 760 may store images captured by the camera 721, for example, pictures or moving images.

The interface unit 770 serves as a passage for connection between the terminal 200A and an external device. The interface unit 770 may receive data or power from the external device, and may transmit the same to respective components in the terminal 200A, or may transmit data in the terminal 200A to the external device. For example, the interface unit 770 may include a wired/wireless headset port, an external charger port, a wired/wireless data port, a memory card port, a port for connection of a device having an identification module, an audio input/output (I/O) port, a video input/output (I/O) port, and an earphone port.

The controller 780 may control the overall operation of the terminal 200A. For example, the controller 780 may perform control and processing related to voice calls, data communication, and video calls.

The controller 780 may include a multimedia module 781 for multimedia playback. The multimedia module 781 may be provided in the controller 780, or may be provided separately from the controller 780.

The controller 780 may perform pattern recognition processing, by which writing or drawing input to the touchscreen is perceived as characters or images.

The power supply unit 790 may supply power required to operate the respective components upon receiving external power or internal power under the control of the controller 780.

The features, structures, effects, and the like described above in the embodiments are included in at least one embodiment of the present disclosure, but are not necessarily limited to only one embodiment. Furthermore, the features, structures, effects, and the like exemplified in the respective embodiments may be combined with other embodiments or modified by those skilled in the art. Therefore, content related to such combinations and modifications should be construed as falling within the scope of the present disclosure.

### [Industrial Applicability]

Embodiments may be used in a camera device and an optical instrument capable of implementing size reduction of the camera device, realization of high resolution images, and reduction of manufacturing cost.

## Claims

1. A camera device comprising:
a fixed unit;
a moving unit comprising a sensor base, an image sensor disposed on the sensor base, a lens holder disposed on the image sensor and coupled to the sensor base, and a lens coupled to the lens holder;
a tilting guide unit disposed between the sensor base and the fixed unit; and
a driving unit configured to tilt the moving unit about a first axis perpendicular to an optical-axis direction or a second axis intersecting the first axis.

2. The camera device according to claim 1, wherein the lens holder is immovable relative to the sensor base in the optical-axis direction.

3. The camera device according to claim 1, wherein the sensor base comprises at least one protrusion protruding from an upper surface thereof, and
the lens holder comprises a recess coupled to the protrusion of the sensor base.

4. The camera device according to claim 1, comprising a filter coupled to the lens holder and disposed between the lens module and the image sensor.

5. The camera device according to claim 1, wherein the driving unit comprises:
a magnet disposed on one of the fixed unit and the lens holder; and
a coil disposed on a remaining one of the fixed unit and the lens holder.

6. The camera device according to claim 5, wherein the magnet comprises a first magnet unit and a second magnet unit, and
the coil comprises a first coil unit corresponding to the first magnet unit and a second coil unit corresponding to the second magnet unit.

7. The camera device according to claim 6, wherein the first coil unit is opposite the first magnet unit in a first horizontal direction perpendicular to the optical-axis direction, and the second coil unit is opposite the second magnet unit in a second horizontal direction perpendicular to the optical-axis direction and the first horizontal direction.

8. The camera device according to claim 6, wherein the first coil unit is opposite the first magnet unit in the optical-axis direction, and the second coil unit is opposite the second magnet unit in the optical-axis direction.

9. The camera device according to claim 1, wherein the lens holder comprises at least one recess depressed from an upper surface thereof, and
the lens comprises at least one boss disposed in the at least one recess in the lens holder.

10. The camera device according to claim 9, wherein the at least one boss does not overlap the tilting guide unit in the optical-axis direction.
